(19) Europäisches Patentamt / European Patent Office / Office européen des brevets

(11) **EP 3 610 575 B1**

(12) **EUROPÄISCHE PATENTSCHRIFT**

(45) Veröffentlichungstag und Bekanntmachung des Hinweises auf die Patenterteilung:
**27.08.2025 Patentblatt 2025/35**

(21) Anmeldenummer: **18716893.5**

(22) Anmeldetag: **10.04.2018**

(51) Internationale Patentklassifikation (IPC):
**H04B 1/7143** *(2011.01)* **H04L 1/00** *(2006.01)*
**H04L 5/00** *(2006.01)*

(52) Gemeinsame Patentklassifikation (CPC):
**H04B 1/7143; H04L 1/0041; H04L 5/0012**

(86) Internationale Anmeldenummer:
**PCT/EP2018/025109**

(87) Internationale Veröffentlichungsnummer:
**WO 2018/188814 (18.10.2018 Gazette 2018/42)**

(54) **SPEZIFISCHE HOPPINGMUSTER FÜR TELEGRAM-SPLITTING**

SPECIFIC HOPPING PATTERNS FOR TELEGRAM SPLITTING

MODÈLES DE SAUT SPÉCIFIQUES POUR SEGMENTATION DE TÉLÉGRAMMES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2017 DE 102017206236**

(43) Veröffentlichungstag der Anmeldung:
**19.02.2020 Patentblatt 2020/08**

(73) Patentinhaber: **Fraunhofer-Gesellschaft zur Förderung der angewandten Forschung e.V.**
**80686 München (DE)**

(72) Erfinder:
• **WECHSLER, Johannes**
**91174 Spalt (DE)**
• **KILIAN, Gerd**
**91056 Erlangen (DE)**
• **BERNHARD, Josef**
**92507 Nabburg (DE)**
• **SOLLER, Dominik**
**90571 Schwaig (DE)**
• **KNEISSL, Jakob**
**90765 Fürth (DE)**
• **JARRESCH, Alexej**
**90453 Nürnberg (DE)**
• **MEYER, Raimund**
**90765 Fürth (DE)**
• **OBERNOSTERER, Frank**
**90411 Nürnberg (DE)**

(74) Vertreter: **Schlenker, Julian et al**
**Schoppe, Zimmermann, Stöckeler Zinkler, Schenk & Partner mbB Patentanwälte Radlkoferstraße 2 81373 München (DE)**

(56) Entgegenhaltungen:
EP-A2- 2 015 465    DE-A1- 10 211 235
US-A1- 2005 176 371    US-A1- 2009 109 953
US-B1- 6 967 974

# EP 3 610 575 B1

**Beschreibung**

Ausführungsbeispiele beziehen sich auf einen Datensender und, im speziellen, auf einen Datensender, der Daten unter Verwendung eines individuellen Sprungmusters sendet. Weitere Ausführungsbeispiele beziehen sich auf einen Datenempfänger und, im speziellen, auf einen Datenempfänger, der Daten empfängt, die unter Verwendung eines individuellen Sprungmusters gesendet werden. Weitere Ausführungsbeispiele beziehen sich auf die Erzeugung von spezifischen Sprungmustern. Weitere Ausführungsbeispiele beziehen sich auf das Senden und Empfangen von Daten unter Verwendung von spezifischen Sprungmustern. Manche Ausführungsbeispiele beziehen sich auf spezifische Sprungmuster für Telegram Splitting. Manche Ausführungsbeispiele beziehen sich auf einen Optimierungsprozess zur Generierung von Sprungmustern (engl. hopping-pattern).

Aus DE 10 2011 082 098 B4 ist das Telegram-Splitting-Verfahren (Telegrammaufteilungsverfahren) bekannt, wonach ein Telegramm (oder Datenpaket) auf eine Mehrzahl von Sub-Datenpakete aufgeteilt wird, die unter Verwendung eines Sprungmusters in der Zeit und optional in der Frequenz verteilt übertragen werden.

In der WO 2015/128385 A1 wird eine Datensendeanordnung beschrieben, die ein Energy-Harvesting-Element als Energiequelle aufweist. Die Datensendeanordnung ist dabei ausgebildet, um Daten unter Verwendung des Telegram Splitting Verfahrens zu senden, wobei ein zum Senden anstehendes Teilpaket in Abhängigkeit von einer von der Energieversorgungseinrichtung bereitstellbaren elektrischen Energiemenge entweder gesendet wird, zwischengespeichert und später gesendet wird, oder verworfen wird.

In der Veröffentlichung [G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013] wird eine verbesserte Reichweite für Niedrigenergietelemetriesysteme, die das Telegram Splitting Verfahren verwenden, beschrieben.

In der Veröffentlichung [G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015] wird eine verbesserte Übertragungssicherheit für Niedrigenergietelemetriesysteme, die das Telegram Splitting Verfahren verwenden, beschrieben.

Das Telegram-Splitting-Verfahren nutzt bestimmte Zeit-Frequenz-Sprungmuster zur Übertragung von Daten über den Funkkanal. Um ein Datenpaket erfolgreich decodieren zu können, ist es notwendig, dass das Sprungmuster, das zum Versenden verwendet wurde, am Empfänger bekannt ist. Um dies zu gewährleisten sind für Telegram-Splitting-Netzwerke globale Zeit- und Frequenzsprungmuster definiert, die allen Teilnehmern bekannt sind.

Bei der Kommunikation mehrerer Teilnehmer mittels Telegram-Splitting im gleichen Band ergibt sich eine schlechtere Störfestigkeit der Übertragung, wenn das gleiche Zeit und/oder Frequenzsprungmuster für die Datenübertragung von mehreren Knoten genutzt wird. Starten zwei Knoten innerhalb eines kurzen Zeitfensters (z.B. die Dauer eines Sub-Datenpakets) eine Übertragung mit dem gleichen Sprungmuster, so überlagern sich alle Sub-Datenpakete des Telegramms und löschen sich im schlechtesten Fall gegenseitig aus.

Die US 2005/176371 A1 bezieht sich auf die Übertragung von Daten in einem Kurzstreckenkommunikationssystem. Zur Übertragung der Daten wird ein Frequenzsprungverfahren verwendet, bei dem einzelne OFDM Symbole in unmittelbar aufeinander folgenden Zeitschlitzen in unterschiedlichen Frequenzbändern übertragen werden.

Die US 2009/109953 A1 bezieht sich auf die zeitliche Synchronisierung eines Empfängers auf eine Aussendung eines Senders mit einem einzigartigen Frequenzsprungmuster, welches basierend auf einem sog. Zeit-Frequenz-Code generiert wird.

Die US 6 967 974 B1 bezieht sich auf ein Telemetriesystems bei dem die Sender Daten unter Verwendung individueller Zeit- und Frequenzsprungmuster senden. Die individuellen Zeit- und Frequenzsprungmuster werden in Abhängigkeit der Sender ID der jeweiligen Sender generiert.

Die DE 102 11 235 A1 bezieht sich auf ein Verfahren zur Generierung einer Frequency Hopping Frequenzfolge.

Der vorliegenden Erfindung liegt somit die Aufgabe zugrunde, ein Konzept zu schaffen, welches die Übertragungssicherheit erhöht, wenn mehrere Knoten ein Zeit- und/oder Frequenzsprungmuster für die Datenübertragung nutzen.

Diese Aufgabe wird durch die unabhängigen Patentansprüche gelöst.

Die Erfindung wird in den unabhängigen Ansprüchen definiert.

Vorteilhafte Weiterbildungen finden sich in den abhängigen Patentansprüchen.

Ausführungsbeispiele der vorliegenden Erfindung werden bezugnehmend auf die beiliegenden Figuren näher beschrieben. Es zeigen:

Fig. 1     ein schematisches Blockschaltbild eines Systems mit einem Datensender und einem Datenempfänger, gemäß einem Beispiel;

Fig. 2     in einem Diagramm eine Belegung des Übertragungskanals bei der Übertragung einer Mehrzahl von Sub-Datenpaketen entsprechend einem Zeit- und Frequenzsprungmuster;

Fig. 3    in einem Diagramm ein Frequenzband eines Kommunikationssystems, welches durch Bandgrenzen definiert ist, sowie eine von einem Datensender für die Übertragung zu verwendende Frequenz A und einen Toleranzbereich um die Frequenz A herum, in dem die Übertragung des Datensenders bedingt durch dessen Quarztoleranz tatsächlich stattfindet;

Fig. 4    in einem Diagramm ein Frequenzband eines Kommunikationssystems, welches durch Bandgrenzen definiert ist, sowie einen von einem breiten Sprungmuster verwendeten Frequenzbereich und dessen Toleranzbereich, und einen von einem schmalen Sprungmuster verwendeten Frequenzbereich und dessen Toleranzbereich;

Fig. 5    in einem Diagramm ein Frequenzband eines Kommunikationssystems, welches durch Bandgrenzen definiert ist, sowie ungenutzte Frequenzbereiche des Frequenzbands die daraus resultieren, dass ein Datensender mit einem geringen Toleranzbereich das in Fig. 4 gezeigte schmale Sprungmuster verwendet;

Fig. 6    ein Flussdiagramm eines Verfahrens zum Senden eines Signals, gemäß einem Beispiel;

Fig. 7    ein Flussdiagramm eines Verfahrens zum Empfangen eines Signals, gemäß einem Beispiel;

Fig. 8    ein Flussdiagramm eines Verfahrens zum Senden eines Signals, gemäß einem Beispiel;

Fig. 9    ein Flussdiagramm eines Verfahrens zum Empfangen eines Signals, gemäß einem Beispiel;

Fig. 10    ein Flussdiagramm eines Verfahrens zum Erzeugen von Sprungmustern, gemäß einem Beispiel;

Fig. 11    in einem Diagramm einen Aufbau eines Frames mit einem TSMA Sprungmuster;

Fig. 12    in einem Diagramm eine schematische Ansicht eines Aufbaus eines TSMA-Sprungmusters;

Fig. 13a    in einem Diagramm Haupt- und Nebenmaxima einer Autokorrelationsfunktion eines Sprungmusters, welches vorgegebene Autokorrelationseigenschaften aufweist, aufgetragen über die Frequenz und die Zeit;

Fig. 13b    in einem Diagramm Haupt- und Nebenmaxima einer Autokorrelationsfunktion eines Sprungmusters, welches vorgegebene Autokorrelationseigenschaften nicht aufweist, aufgetragen über die Frequenz und die Zeit;

Fig. 14a    in einem Diagramm Haupt- und Nebenmaxima einer Kreuzkorrelationsfunktion zweier Sprungmuster, welche vorgegebene Kreuzkorrelationseigenschaften aufweisen, aufgetragen über die Frequenz und die Zeit;

Fig. 14b    in einem Diagramm Haupt- und Nebenmaxima einer Kreuzkorrelationsfunktion zweier Sprungmuster, welche vorgegebene Kreuzkorrelationseigenschaften nicht aufweisen, aufgetragen über die Frequenz und die Zeit; und

Fig. 15    ein Flussdiagramm eines Verfahrens 260 zur Erzeugung von Sprungmustern, gemäß einem Beispiel.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

1. Individuelle Sprungmuster

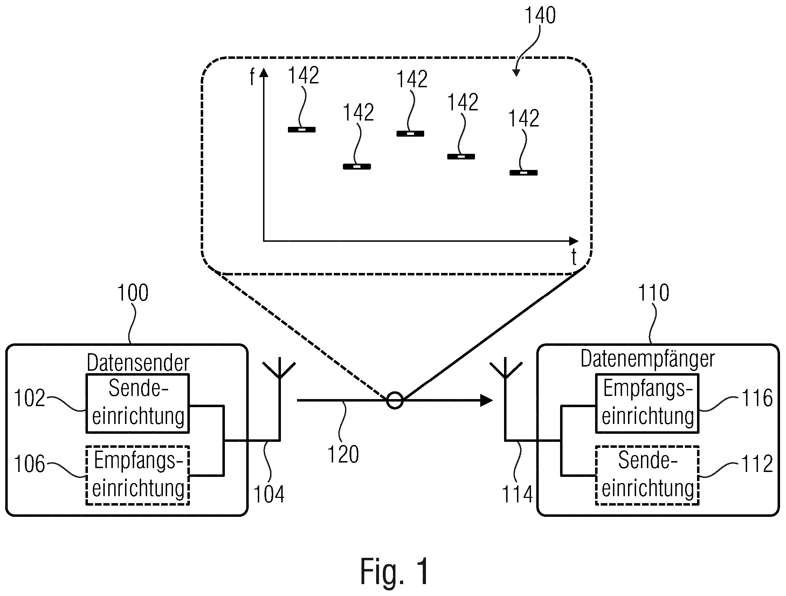

Fig. 1 zeigt ein schematisches Blockschaltbild eines Systems mit einem Datensender 100 und einem Datenempfänger 110, gemäß einem Beispiel.

Der Datensender 100 ist ausgebildet, um ein Signal 120 zu senden, wobei das Signal ein individuelles Sprungmuster aufweist, wobei das individuelle Sprungmuster von einem Betriebsparameter abhängig ist.

Der Datenempfänger 110 ist ausgebildet, um das Signal 120 von dem Datensender 100 zu empfangen, wobei das Signal 120 das individuelle Sprungmuster aufweist, wobei das individuelle Sprungmuster von dem Betriebsparameter abhängig ist.

Bei Beispielen nutzen der Datensender 100 und der Datenempfänger 110 für die Kommunikation anstelle eines einheitlichen (globalen) Sprungmusters, welches von allen Datensendern und Datenempfängern eines Kommunikationssystems gleichermaßen verwendet wird, ein individuelles Sprungmuster 140. Dieses individuelle Sprungmuster ist von einem Betriebsparameter (z.B. einem Betriebsparameter des Datensender 100, Datenempfängers 110 oder Kommunikationssystems) abhängig und wird somit nur von dem Datensender 100 und dem Datenempfänger 110 selbst oder einer kleinen Gruppe von Datensendern und/oder Datenempfängern genutzt, wodurch die Störfestigkeit deutlich erhöht werden kann.

Beispielsweise kann der Datensender 100 und/oder der Datenempfänger 110 ausgebildet sein, um das individuelle Sprungmuster 140 in Abhängigkeit von dem Betriebsparameter zu berechnen, z.B. unter Verwendung einer Abbildungsvorschrift mit dem Betriebsparameter als Eingangsgröße. Ferner kann der Datensender 100 und/oder der Datenempfänger 110 ausgebildet sein, um ein Sprungmuster aus einem Satz von Sprungmustern in Abhängigkeit von dem Betriebsparameter auszuwählen (oder zu selektieren), um das individuelle Sprungmuster 140 zu erhalten.

Wie in Fig. 1 angedeutet ist, kann das individuelle Sprungmuster 140 eine Mehrzahl von Sprüngen (engl. hops) 142 aufweisen, die in der Zeit und/oder Frequenz verteilt sind. Die Verteilung der Mehrzahl von Sprüngen 142 in der Zeit und/oder Frequenz kann dabei von dem Betriebsparameter abhängig sein.

Bei Beispielen kann der Datensender 100 ausgebildet sein, um Daten 120 entsprechend des individuellen Sprungmusters 140 in der Zeit und/oder Frequenz verteilt zu senden. Dementsprechend kann der Datenempfänger 110 ausgebildet sein, um Daten 120 zu empfangen, die entsprechend des individuellen Sprungmusters 140 in der Zeit und/oder Frequenz verteilt gesendet werden.

Wie in Fig. 1 beispielhaft gezeigt ist, kann der Datensender 100 eine Sendeeinrichtung (oder Sendemodul, oder Transmitter) 102 aufweisen, die ausgebildet ist, um die Daten 120 zu senden. Die Sendeeinrichtung 102 kann mit einer Antenne 104 des Datensenders 100 verbunden sein. Der Datensender 100 kann ferner eine Empfangseinrichtung (oder Empfangsmodul, oder Receiver) 106 aufweisen, die ausgebildet ist, um Daten zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Der Datenempfänger 110 kann eine Empfangseinrichtung (oder Empfangsmodul, oder Receiver) 116 aufweisen, die ausgebildet ist, um Daten 120 zu empfangen. Die Empfangseinrichtung 116 kann mit einer Antenne 114 des Datenempfängers 110 verbunden sein. Ferner kann der Datenempfänger 110 eine Sendeeinrichtung (oder Sendemodul, oder Transmitter) 112 aufweisen, die ausgebildet ist, um Daten zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Beispielen kann der Datensender 100 ein Sensorknoten sein, während der Datenempfänger 110 eine Basisstation sein kann. Typischerweise umfasst ein Kommunikationssystem zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Der Datensender 100 und der Datenempfänger 110 können optional ausgebildet sein, um Daten 120 unter Verwendung des Telegram-Splitting-Verfahrens (dt. Telegrammaufteilungsverfahrens) zu senden bzw. zu empfangen. Hierbei wird ein Telegramm bzw. Datenpaket 120 in eine Mehrzahl von Sub-Datenpakete (oder Teildatenpakte, oder Teilpakete) 142 aufgeteilt und die Sub-Datenpakete 142 entsprechend des individuellen Sprungmusters 140 in der Zeit verteilt und/oder in der Frequenz verteilt von dem Datensender 100 zu dem Datenempfänger 110 übertragen, wobei der Datenempfänger 110 die Sub-Datenpakete wieder zusammenfügt (oder kombiniert), um das Datenpaket 120 zu erhalten. Jedes der Sub-Datenpakete 142 enthält dabei nur einen Teil des Datenpakets 120. Das Datenpaket 120 kann ferner kanalcodiert sein, so dass zum fehlerfreien Decodieren des Datenpakets 120 nicht alle Sub-Datenpakete 142 sondern nur ein Teil der Sub-Datenpakete 142 erforderlich ist.

Die zeitliche Verteilung der Mehrzahl von Sub-Datenpaketen 142 kann, wie bereits erwähnt, entsprechend eines Zeit- und/oder Frequenzsprungmusters erfolgen.

Ein Zeitsprungmuster kann eine Abfolge von Sendezeitpunkten oder Sendezeitabständen angeben, mit denen die Sub-Datenpakete gesendet werden. Beispielsweise kann ein erstes Sub-Datenpaket zu einem ersten Sendezeitpunkt (oder in einem ersten Sendezeitschlitz) und ein zweites Sub-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpaketen können Sendepausen vorhanden sein in denen nicht gesendet wird. Die Sub-Datenpakete können sich auch zeitlich überlappen (überschneiden).

Ein Frequenzsprungmuster kann eine Abfolge von Sendefrequenzen oder Sendefrequenzsprüngen angeben, mit denen die Sub-Datenpakete gesendet werden. Beispielsweise kann ein erstes Sub-Datenpaket mit einer ersten Sendefrequenz (oder in einem ersten Frequenzkanal) und ein zweites Sub-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpakete 142 auch sowohl in der Zeit- als auch in der Frequenz verteilt von dem Datensender 100 zu dem Datenempfänger 110 übertragen werden. Die Verteilung der Mehrzahl von Sub-Datenpakete in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete übertragen werden, wobei den Sendezeitpunkten (oder Sendezeitabständen) Sendefrequenzen (oder Sendefrequenzsprünge) zugeordnet sind.

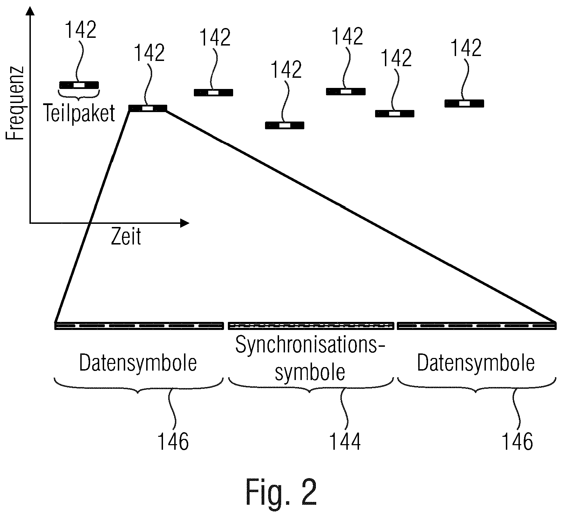

Fig. 2 zeigt in einem Diagramm eine Belegung des Übertragungskanals bei der Übertragung einer Mehrzahl von Sub-Datenpaketen 142 entsprechend einem Zeit- und Frequenzsprungmuster. Dabei beschreibt die Ordinate die Frequenz und die Abszisse die Zeit.

Wie in Fig. 2 zu erkennen ist, kann das Datenpaket 120 beispielhaft auf n = 7 Sub-Datenpakete 142 aufgeteilt werden und entsprechend eines Zeit- und Frequenzsprungmusters verteilt in der Zeit und der Frequenz von dem Datensender 100 zu dem Datenempfänger 110 übertragen werden.

Wie in Fig. 2 weiter zu erkennen ist, kann auch eine Synchronisationssequenz 144 auf die Mehrzahl von Sub-Datenpakete 142 aufgeteilt werden, so dass die Mehrzahl von Sub-Datenpakete 142 neben Daten (Datensymbole in Fig. 2) 146 jeweils einen Teil der Synchronisationssequenz (Synchronisationssymbole in Fig. 2) 144 enthalten.

Im Folgenden werden detaillierte Beispiele des Datensenders 100 und Datenempfängers 110 näher beschrieben, die ein individuelles Sprungmuster für die Übertragung verwenden, wobei das individuelle Sprungmuster von einem Betriebsparameter abhängig ist. Die Verwendung des Telegram-Splitting-Verfahrens ist dabei rein optional.

Ferner wird im Folgenden davon ausgegangen, dass der Betriebsparameter ein Betriebsparameter des Datensenders 100 oder des Kommunikationssystems ist. Dabei kann der Betriebsparameter ein immanenter Betriebsparameter des Datensenders sein oder ein dem Datensender zugewiesener Betriebsparameter.

## 1.1. Variierende Sprungmuster

Bei Beispielen kann, wie bereits mehrfach erwähnt wurde, anstelle eines festen Sprungmusters, ein individuelles Sprungmuster 140 für die Übertragung zwischen Datensender 100 und Datenempfänger 110 verwendet werden.

Hierdurch kann das im Folgenden beschriebene Problem gelöst werden. Bei der Kommunikation mehrerer Teilnehmer mittels Telegram-Splitting im gleichen Band ergibt sich eine schlechtere Störfestigkeit der Übertragung, wenn das gleiche Zeit-Frequenz Sprungmuster für die Datenübertragung von mehreren Knoten genutzt wird. Starten zwei Knoten innerhalb eines kurzen Zeitfensters eine Übertragung mit dem gleichen Sprungmuster, so überlagern sich alle Subpakete des Telegramms und löschen sich im schlechtesten Fall gegenseitig aus.

Für die Zuteilung gibt es je nach Netzwerktopologie verschiedene Möglichkeiten die Sprungmuster zu variieren

Bei Beispielen kann das individuelle Sprungmuster 140 von einem (immanenten) Betriebsparameter des Datensenders 100 abhängig sein, wobei der (immanente) Betriebsparameter des Datensenders eine Adressierungsinformation oder eine Identifizierungsinformation des Datensenders 100 sein kann.

Beispielsweise kann ein Adressierungssprungmuster verwendet werden. Bei der Übertragung zu einem bekannten Teilnehmer kann statt eines vordefinierten Sprungmusters also ein Sprungmuster verwendet werden, welches aus einem Wert errechnet wird, welcher den Zielteilnehmer identifiziert oder adressiert, wie z.B. eine Seriennummer oder eine Netzwerkadresse.

Dies hat den Vorteil, dass die Sprungmuster 140 für jeden Datensender 100 (oder Nutzer) individuell sind und die Wahrscheinlichkeit einer Kollision von identischen Sprungmustern drastisch reduziert werden kann.

Die Anzahl der Sprungmuster, die von einem Datenempfänger (z.B. einer Basisstation) 110 kontinuierlich gesucht werden kann ist jedoch durch die Rechenleistung limitiert. Wird für jeden Datensender (z.B. Knoten) 100 eine individuelle Sprungsequenz definiert, so ist die Anzahl der Knoten die gleichzeitig empfangen werden können entsprechend geringer.

Bei Beispielen kann datensenderseitig (oder wellenformseitig) für jede Übertragung zwischen zwei Teilnehmern ein individuelles Sprungmuster 140 verwendet werden, welches beispielsweise von einer Adressierungsinformation oder Identifizierungsinformation, wie beispielsweise einem Datum, einer Seriennummer oder einer Netzwerkadresse, abgeleitet werden kann, die den Empfänger oder Sender identifiziert.

Bei Beispielen kann datenempfängerseitig bei der Verwendung eines Zeit- und Frequenzsprungmuster, welches den Sender identifiziert, eine Zeit- und Frequenzsprungmusterliste vorgehalten werden, welche die Sprungmuster oder das identifizierende Datum der Datensender enthält, welche empfangen werden sollen.

### 1.2 Lokale Sprungmuster

Bei Beispielen kann das individuelle Sprungmuster 140 von einem (zugewiesenen) Betriebsparameter des Datensenders 100 abhängig sein, wobei der (zugewiesene) Betriebsparameter des Datensenders 100 eine Funkzelle sein kann.

Hierdurch kann das im Folgenden beschriebene Problem gelöst werden. Wird ein funkbasiertes Netzwerk bestehend aus mehreren zentralen Knoten aufgebaut (z.B. viele Endknoten die mit einer Basisstation kommunizieren), so bilden sich Funkzellen um jeden zentralen Knoten. Sind die Übertragungen in einer Funkzelle nicht durch klassische Multiplexingverfahren (z.B. Frequenzmultiplexing) und endsprechende Netzplanung voneinander entkoppelt, so stören die Kommunikationen einer Zelle auch die Kommunikationen aller überlappenden oder angrenzen Funkzellen. Dieses Problem ergibt sich ebenso im Telegram Splitting basierten Netzwerk, da alle Teilnehmer (z.B. Datensender) zur Kommunikation mit dem zentralen Knoten (z.B. Datenempfänger) die globalen Zeit-Frequenz-Sprungmuster verwenden.

Bei Beispielen kann jeder zentrale Teilnehmer (z.B. Datenempfänger 110) einen eigenen Satz an lokalen Zeit- und Frequenzsprungmustern haben, welches es erlaubt die Funkzellen des Netzwerks auch überlappend zu betreiben. Diese können die globalen Sprungmuster ergänzen, oder komplett ersetzen.

Die Zuteilung kann bei der Anmeldung erfolgen. In einem sternförmigen Netzwerk, bei dem viele Knoten mit einer Basisstation kommunizieren, kann die initiale Kommunikation über die globalen Sprungmuster gehandhabt werden. Wird ein Knoten nun einer Basisstation zugeteilt, bzw. meldet sich an dieser an, so teilt dieser dem Endknoten mit, welcher Satz an lokalen Sprungmustern verwendet wird.

Die Mitteilung welcher Satz verwendet wird, kann explizit durch Übertragung der Zeit-Frequenz-Sprungmuster des Satzes erfolgen. Es ist ebenso möglich einen oder mehrere Sätze an lokalen Sprungmustern in den Knoten zu definieren und bei der Kontaktaufnahme den zu verwendenden Satz auszuhandeln.

Bei Beispielen kann das individuelle Sprungmuster 140 von einem (zugewiesenen) Betriebsparameter des Datensenders 100 abhängig sein, wobei der (zugewiesene) Betriebsparameter des Datensenders 100 eine geografische Position sein kann.

Beispielsweise können regionale Sprungmuster verwendet werden. Ist den Knoten ihre Position bekannt (z.B. mittels GNSS), so können die Knoten mit dieser Information bestimmen, welchen Satz an lokalen Sprungmustern sie verwenden können. Dies kann wieder mittels vorher hinterlegten Sätzen, oder durch Berechnung aus der Position erfolgen. Ebenso kann die Auswahl des Sprungmustersatzes auch durch andere äußere Einflüsse, wie z.B. Funksignale fremder Systeme, festgelegt werden. Die Position kann auch durch die Basisstation signalisiert werden.

### 1.3 QoS Sprungmuster (QoS = quality of service, dt. Dienstgüte)

Bei Beispielen kann das individuelle Sprungmuster 140 aus einem Satz von Sprungmustern ausgewählt werden, wobei jedem Sprungmuster des Satzes von Sprungmustern eine definierte Nutzungshäufigkeit (=Betriebsparameter) zugewiesen werden kann. Das bedeutet, dass die Verwendung der Sprungmuster nicht gleichmäßig erfolgt, sondern gezielt ungleichmäßig.

Hierdurch kann das im Folgenden beschriebene Problem gelöst werden. Um die maximale theoretische Kapazität des Netzwerks zu erreichen, ist es notwendig, dass alle Sprungmuster mit der gleichen Häufigkeit genutzt werden. Dies hat jedoch zur Folge, dass die Wahrscheinlichkeit eines Paketausfalls beim Überschreiten der Kapazitätsgrenze für alle Sprungmuster gleich schlecht wird und keine Pakete mehr übermittelt werden können.

### 1.3.1. Variierende Nutzungshäufigkeit

Bei Beispielen kann eine variierende Nutzungshäufigkeit verwendet werden. Hierdurch kann eine fortschreitende Verschlechterung des Netzwerks (engl. graceful network-degradation) reduziert oder sogar vermieden werden.

Beispielsweise kann die Häufigkeit, mit der die Sprungmuster genutzt werden, im Sprungmustersatz fest hinterlegt werden. Dies hat zur Folge, dass die Netzwerkkapazität für die häufig genutzten Sprungmuster schneller erreicht wird. Wählt man die Nutzungshäufigkeit der restlichen Sprungmuster entsprechend niedriger, so steigt die Wahrscheinlichkeit eine Nachricht mit einem wenig genutzten Sprungmuster erfolgreich zu übertragen, da die Vollüberlappungswahrscheinlichkeit sinkt.

Hierdurch wird das Netzwerk in der Kapazitätsgrenze zwar weniger Nachrichten erfolgreich übertragen können, jedoch bricht es bei Überschreiten der Grenze nicht komplett ein, sondern die Latenz des Netzwerks steigt entsprechend der gewählten Nutzungshäufigkeit. Dies ermöglicht einen kontrollierten und vorhersagbaren Leistungsverlust des Netzwerks an der Kapazitätsgrenze.

Bei Beispielen kann die Verwendungshäufigkeit des Sprungmusters zur Aussendung datensenderseitig (und/oder auch datenempfängerseitig) nach einer vordefinierten Regel zur Nutzungshäufigkeit bestimmt werden.

Bei Beispielen kann datenempfängerseitig die Rechenleistung, die zum decodieren eines Sprungmusters bereitgestellt wird, entsprechend der Nutzungshäufigkeit der Sprungmuster zugeteilt werden.

Zur Illustration sei folgendes Beispiel betrachtet. Im Zeit-Frequenz-Sprungmustersatz S1 sind die Sprungmuster M1 und M2 definiert. Jedem Satz wird nun eine relative Nutzungshäufigkeit zugeteilt: M1 75% und M2 25%. Das bedeutet das Sprungmuster M1 wird drei Mal so häufig zur Aussendung genutzt als M2. Damit ist die Wahrscheinlichkeit, dass eine Übertragung mit dem Sprungmuster M1 durch die simultane Übertragung eines anderen Knotens mit Sprungmuster M1, gestört wird, dreimal höher als die Übertragung mit dem Sprungmuster M2, da dieses im Netzwerk seltener verwendet wird.

1.3.2. Anwendungsspezifische bzw. proprietäre Sprungmuster

Bei Beispielen kann das individuelle Sprungmuster aus einem Satz von Sprungmustern in Abhängigkeit von einem (zugewiesenen) Betriebsparameter ausgewählt werden, wobei der (zugewiesene) Betriebsparameter eine Anwendung ist. Die Sprungmuster können also je nach Anwendung ausgewählt werden. So dürfen manche Sprungmuster nur für bestimmte Nachrichtentypen (z.B. Alarme) verwendet werden. Dies ermöglicht es, auch QoS für gewisse Dienste zu verwirklichen oder proprietäre Erweiterungen der globalen Sprungmuster für einen bestimmten Netzwerkanbieter zu erlauben.

Hierdurch kann das im Folgenden beschriebene Problem gelöst werden. Wichtige oder spezielle Nachrichten (z.B. Alarme) können mittels der bekannten globalen Sprungmuster nur mit gleicher Durchkommenswahrscheinlichkeit wie eine normale Nachricht übertragen werden. Je nach Nachricht kann es jedoch gewünscht sein, dass die Übertragung eine höhere oder niedrigere Priorität, und demnach eine höhere bzw. niedrigere Durchkommenswahrscheinlichkeit, bekommt als andere. Beispielsweise hat ein Feueralarm oder die Meldung eines KFZ, dass es verunfallt ist, eine höhere Priorität als andere.

Bei Beispielen kann datensenderseitig (oder wellenformseitig) das Sprungmuster, das zur Aussendung verwendet wird, in Abhängigkeit von den zu versendenden Daten gewählt werden.

Bei Beispielen kann datenempfängerseitig die Rechenleistung, die zum decodieren eines Sprungmusters bereitgestellt wird, entsprechend der Priorität des Sprungmusters angepasst werden.

1.4 Leistungsabhängige Sprungmuster

Bei Beispielen kann das individuelle Sprungmuster von einem (immanenten) Betriebsparameter des Datensenders 100 abhängig sein, wobei der (immanente) Betriebsparameter des Datensenders 100 eine Quarztoleranz sein kann.

Hierdurch kann das im Folgenden beschriebene Problem gelöst werden. Ein Funkübertragungssystem ist regulatorisch und implementierungstechnisch an einen vordefinierten Frequenzkanal gebunden. Durch Toleranzen bei den verwendeten Quarzen ist es nicht möglich, die Frequenz auf der eine Nachricht tatsächlich ausgesendet wird, exakt zu bestimmen. Auf Grund dessen sind häufig Schutzbänder definiert, in denen gezielt keine Aussendung stattfindet, welche aber durch die Toleranzen auch genutzt werden.

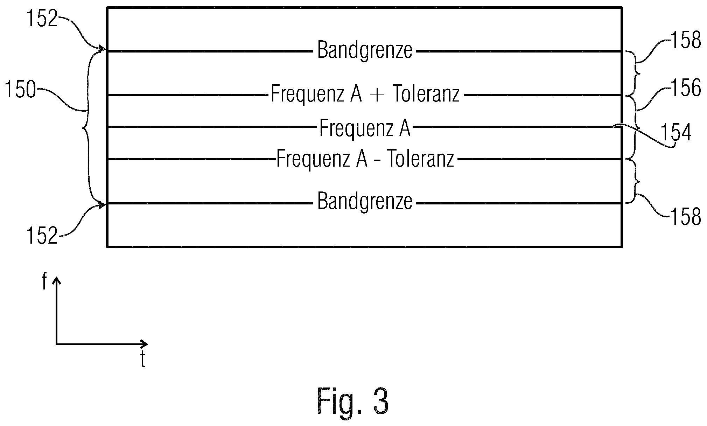

Fig. 3 zeigt in einem Diagramm ein Frequenzband 150 eines Kommunikationssystems, welches durch Bandgrenzen 152 definiert ist, sowie eine von einem Datensender 100 für die Übertragung zu verwendende Frequenz A 154 und einen Toleranzbereich 156 um die Frequenz A 154 herum, in dem die Übertragung des Datensenders 100 bedingt durch dessen Quarztoleranz tatsächlich stattfinden kann. Dabei beschreibt die Ordinate die Frequenz und die Abszisse die Zeit.

Mit anderen Worten, Fig. 3 zeigt eine Aussendung definiert auf Frequenz A 154. Die tatsächliche Aussendung findet auf einer Frequenz im Bereich Frequenz A $\pm$ Toleranz (blauer Bereich) 156 statt, da keine 100%ig genaue Bestimmung möglich ist. Um mit diesem Versatz weiterhin im vorgeschriebenen Band zu bleiben, muss ein gewisser Spielraum definiert sein 158, welcher nicht für Aussendungen vorgesehen ist, aber groß genug ist, damit bei großen Toleranzen die Bandgrenzen 152 nicht überschritten werden.

Um die Frequenzressourcen möglichst komplett zu nutzen, ist es wünschenswert die Schutzbänder möglichst schmal zu halten, was jedoch die Anforderungen an die verwendeten Quarze und damit die Kosten der Knoten erhöht.

Die zuvor genannten Punkte treten auch bei Telegram-Splitting-Funkübertragungssystemen auf und bedingen dadurch, dass bei den Zeit- und Frequenzsprungmustern weniger Frequenzsubkanäle genutzt werden können, je größer die erlaubte Toleranz für die Knoten des Funksystems ist.

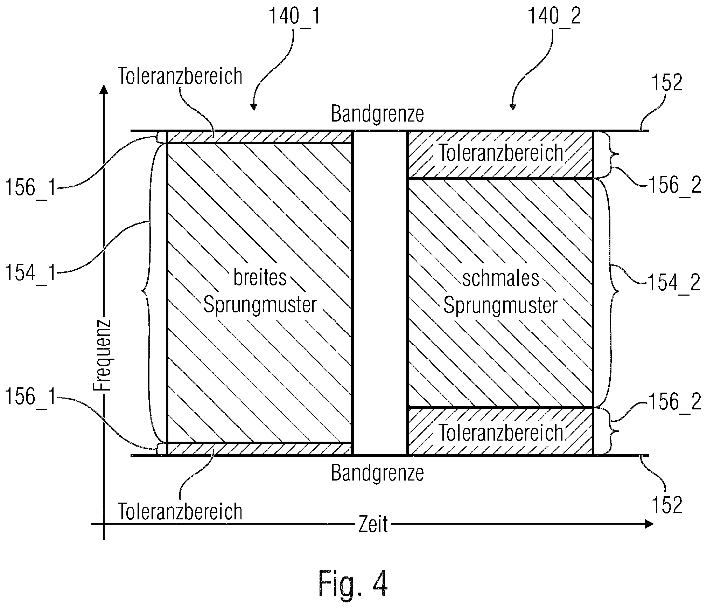

So ergeben sich für Knoten mit hoher Genauigkeit kleinere Toleranzbereiche am Rande des Sprungmusters, was es erlaubt, ein breites Sprungmuster für diese Knoten zu definieren, ohne die Bandgrenzen zu überschreiten. Sind die Toleranzen größer, so ist es nötig, den Toleranzbereich zu vergrößern, was es erfordert das Sprungmuster schmaler zu gestalten um ebenfalls weiterhin innerhalb der Bandgrenzen zu senden. Dies ist in Fig. 4 nochmals verbildlicht.

Fig. 4 zeigt in einem Diagramm ein Frequenzband eines Kommunikationssystems, welches durch Bandgrenzen 152 definiert ist, sowie einen von einem breiten Sprungmuster 140_1 verwendeten Frequenzbereich 154_1 und dessen Toleranzbereich 156_1, und einen von einem schmalen Sprungmuster 140_2 verwendeten Frequenzbereich 154_2 und dessen Toleranzbereich 156_2. Mit anderen Worten, Fig. 4 zeigt einen Vergleich von breitem und schmalem Sprungmuster bedingt durch unterschiedlich große Toleranzbereiche. Dabei beschreibt die Ordinate die Frequenz und die Abszisse die Zeit.

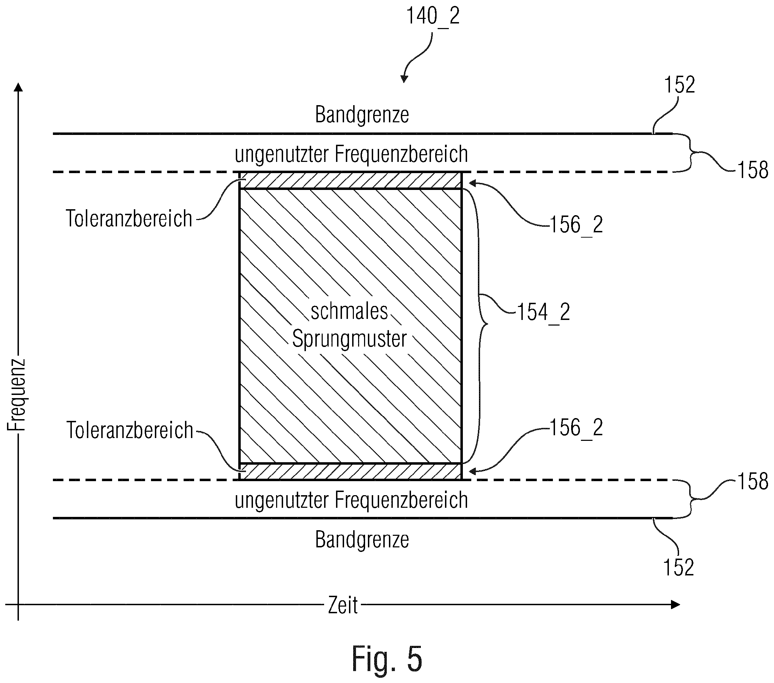

Nutzen nun Knoten mit einer geringen Toleranz die Sprungmuster, die für Knoten mit hoher Toleranz definiert wurden, so ist die Wahrscheinlichkeit, dass diese Knoten sich gegenseitig stören erhöht, da diese den Toleranzbereich nicht voll ausnutzen und somit effektiv weniger Frequenzressourcen nutzen. Dies ist in Fig. 5 gezeigt.

Im Detail zeigt Fig. 5 in einem Diagramm ein Frequenzband 150 eines Kommunikationssystems, welches durch Bandgrenzen 152 definiert ist, sowie ungenutzte Frequenzbereiche 158 des Frequenzbands die daraus resultieren, dass ein Datensender 100 mit einem geringen Toleranzbereich 156_2 das in Fig. 4 gezeigte schmale Sprungmuster 140_2 verwendet. Mit anderen Worten, Fig. 5 zeigt ein schmales Sprungmuster bei Knoten mit geringer Toleranz. Dabei beschreibt die Ordinate die Frequenz und die Abszisse die Zeit.

Bei Beispielen können die Sprungmuster (oder Sprungsequenzen) 140 an die Toleranzen der Datensender 100 (z.B. Knoten) angepasst werden.

Dies hat den Vorteil, dass teureren Datensendern (z.B. Knoten), die geringere Toleranzen aufweisen, eine größere Anzahl an Funkkanälen zur Verfügung steht, als günstigeren Datensendern (z.B. Knoten), die höhere Toleranzen aufweisen, wodurch sich die Störwahrscheinlichkeit der Datensender (z.B. Knoten) untereinander verringert. Zudem können günstige Datensender (z.B. Knoten) trotzdem im gleichen Netz betrieben werden.

1.4.1. Sprungmuster zum Ausgleich zu hoher Quarztoleranzen

Bei Beispielen kann das individuelle Sprungmuster 140 von einem (immanenten) Betriebsparameter des Datensenders 100 abhängig sein, wobei der (immanente) Betriebsparameter eine Quarztoleranz des Datensenders 100 sein kann, wobei der Datensender 100 ausgebildet sein kann, um in Abhängigkeit von der Quarztoleranz einen zu verwendenden maximalen Bereich von Frequenzsubkanälen eines Frequenzkanals zu ermitteln, und um das individuelle Sprungmuster 140 so zu berechnen oder aus einem Satz von Sprungmustern so auszuwählen, dass dieses innerhalb des zu verwendenden maximalen Bereichs von Frequenzsubkanälen des Frequenzkanals (oder Frequenzbands) liegt.

Beispielsweise können für Datensender 100 (z.B. Knoten) mit hohen Toleranzen Sätze an Sprungmustern definiert werden, welche eine kleinere Anzahl an Subkanälen nutzen, wodurch eine Einhaltung des Gesamt-Kanals gewährleistet werden kann.

Bei Beispielen kann datensenderseitig (oder wellenformseitig) das Sprungmuster 140, das zur Aussendung verwendet wird, in Abhängigkeit von den Toleranzen des Datensenders 100 gewählt werden.

Beispielsweise können breite Sprungmuster mit Subkanälen näher am Randbereich des Bandes 150 für Datensender 100 mit geringen Toleranzen gewählt werden, während schmale Sprungmuster mit Subkanälen weiter vom Randbereich des Bandes 150 entfernt für Datensender 100 mit großen Toleranzen gewählt werden können.

1.4.2. Auslassung der Randkanäle bei hohen Quarztoleranzen

Datensender (z.B. Knoten) mit hohen Toleranzen sollten entsprechend ihrer Toleranz keine Sub-Datenpakete 142 auf den Randsubkanälen aussenden, bei denen Sie auf Grund der Quarztoleranz nicht gewährleisten können, dass die Aussendung noch innerhalb des Kanals stattfindet.

Sind die Sprungmuster so gewählt, dass die Subkanäle gleichmäßig genutzt werden, so fallen durch diese Maßnahme nur wenige Subpakete aus der Übertragung und durch den im Telegram-Splitting verwendeten Fehlerschutz ist die Empfangbarkeit und Rekonstruierbarkeit der Nachrichten der schlechten Datensender (z.B. Knoten) weiterhin gewährleistet.

Bei Beispielen kann datensenderseitig (oder wellenformseitig) das Sprungmuster 140, das zur Aussendung verwendet wird, in Abhängigkeit von den Toleranzen des Datensenders 100 an den Rändern soweit ungenutzt gelassen werden, wie es die Toleranzen erfordern.

Bei Beispielen kann der Datenempfänger 110 ausgebildet sein, um Sprungmuster zu empfangen, welche durch die Toleranzen der Datensender 100 in der Frequenz so stark verschoben sind, dass sie eigentlich außerhalb des definierten Bandes 150 liegen. Ferner kann der Datenempfänger 110 ausgebildet sein, um ein durch die Frequenztoleranzen gestrecktes oder gestauchtes Sprungmuster weiterhin zu empfangen, beispielsweise durch eine Definition weiterer Empfangssprungmuster, die der verzerrten Version des Ursprünglichen Sprungmusters entsprechen.

### 1.4.3. Punktierung des Sprungmusters zum Ausgleich der Batterie

Bei Beispielen kann das individuelle Sprungmuster von einem (immanenten) Betriebsparameter des Datensenders 100 abhängig sein, wobei der (immanente) Betriebsparameter des Datensenders 100 eine verfügbare Sendeenergie bzw. eine von einer Energieversorgungseinrichtung (z.B. Knopfzelle oder Energy-Harvesting-Element) des Datensenders 100 bereitstellbare Energiemenge sein kann.

Der Datensender 100 kann dabei ausgebildet sein, um ein Sprungmuster in Abhängigkeit von der verfügbaren Sendeenergie zu punktieren, um das individuelle Sprungmuster 140 zu erhalten.

Beispielsweise kann der Datensender 100 (z.B. Knoten) eine Stromversorgung aufweisen, welche eine längere Regenerationsphase nach einer Aussendung auf dem Funkkanal benötigt als es die Pause zwischen einzelnen Sub-Datenpaketen 142 zulassen würde. In diesem Fall kann der Datensender 100 (z.B. Knoten) das Zeit- und Frequenzsprungmuster entsprechend "punktieren", um die minimale Pause, die er für die Regeneration benötigt, einhalten zu können. Hierbei ist zu beachten, dass die Anzahl der ausgelassenen Sub-Datenpakete 142 entsprechend der Rate des verwendeten Fehlerschutzes so gewählt wird, dass die Decodierbarkeit der Daten weiterhin erhalten bleibt.

Bei Beispielen kann datensenderseitig (oder wellenformseitig) das Sprungmuster, das zur Aussendung verwendet wird, so punktiert werden, dass die Pausenzeiten zwischen zwei Aussendungen einen batterieschonenden Betrieb erlauben.

### 1.4.4 Frequenzversetztes Sprungmuster

Bei Beispielen kann das individuelle Sprungmuster 140 von einem (immanenten) Betriebsparameter des Datensenders 100 abhängig sein, wobei der (immanente) Betriebsparameter ein Frequenzversatz sein kann, mit dem der Datensender ein Sprungmuster versieht, um das individuelle Sprungmuster 140 zu erhalten. Der Frequenzversatz kann ein zufälliger Frequenzversatz sein.

Wird für einen Knoten mit geringen Toleranzen ein zu schmales Sprungmuster definiert, so ergibt sich das Problem der ungenutzten Frequenzbereiche wie Fig. 5 dargestellt. Das kann umgangen werden, wenn das Sprungmuster 140 im Ganzen der Frequenz zufällig versetzt wird. Die Grenzen des zufälligen Frequenzversatzes können entsprechend so gewählt werden, dass die bisher durch das schmale Sprungmuster ungenutzten Bereiche auch genutzt werden.

Für eine spätere Verarbeitung im Datenempfänger 110 kann es von Vorteil sein, wenn der verwendete zufällige Frequenzversatz in einem Teil der versendeten Daten hinterlegt wird. Dies ermöglicht es dem Datenempfänger weiterhin den durch die Toleranz verursachten Frequenzversatz zu bestimmen. Ohne die Information ist dies unter Umständen nicht möglich, da dem Datenempfänger evtl. nicht bekannt ist, auf welcher nominalen Frequenz, ohne Toleranz, der Datensender 100 ausgesendet hat.

### 1.4.5. Over-Provisioning (dt. Überbereitstellung) Sprungmuster Punktierung

Bei Beispielen kann ein Sprungmuster auch so gewählt werden, dass die Anzahl der versendeten Teilpakete die Anzahl der definierten Aussendungen im Sprungmuster unterschreitet. Das bedeutet, dass bei der Aussendung zufällig Sprünge ausgelassen werden können ohne die Übertragungswahrscheinlichkeit negativ zu beeinflussen, da weiterhin alle Sub-Datenpakete versendet werden. Dies ermöglicht es die Kapazität im Netzwerk zu erhöhen, da die zufälligen Auslassungen die Wahrscheinlichkeit der Komplettüberlappung verringern.

Bei Beispiele kann datensenderseitig (oder wellenformseitig) ein Sprungmuster, welches mehr Sprünge definiert als Sub-Datenpakete versendet werden sollen, durch zufällige Punktierung auf die benötigte Anzahl an Sprüngen gekürzt werden.

Bei Beispielen kann datenempfängerseitig die Detektion weiter über alle definierten Sprünge durchgeführt werden, da die Punktierung nicht bekannt ist. Eine genaue Bestimmung der Punktierung ist beispielsweise durch Vergleichen der Detektionsgüte von verschiedenen Punktierungsmustern möglich.

### 1.5 Erweiterungs-Sprungmuster

Bei Beispielen kann für die Übertragung zwischen Datensender 100 und Datenempfänger 110 ferner ein weiteres (oder zweites) individuelles Sprungmusters verwendet werden, wobei das weitere (oder zweite) individuelle Sprungmuster von dem (ersten) individuellen Sprungmuster 140 oder dem Betriebsparameter abhängig ist. Das weitere (oder zweite) individuelle Sprungmuster wird nachfolgend als Erweiterungs-Sprungmuster bezeichnet, während das (erste) individuelle Sprungmuster 140 als Kern-Sprungmuster bezeichnet wird. Das Kern-Sprungmuster kann dabei dem oben beschriebenen individuellen Sprungmuster 140 entsprechen.

Die Kern-Sprungsequenz 140 kann dabei eine feste Länge (feste Anzahl an Sprüngen 142) aufweisen und für die Übertragung von Daten fester Länge verwendet werden, während die Erweiterungs-Sprungsequenz eine variable Länge (variable Anzahl an Sprüngen) aufweisen kann und für die Übertragung von Daten variabler Länge verwendet werden.

Damit der Gewinn aus der Anpassung der Kern-Sprungsequenz (= individuelles Sprungmuster) nicht verloren geht, können die speziellen Eigenschaften der Kern-Sprungsequenz bei der Generierung der Erweiterungs-Sprungsequenz berücksichtig werden, so dass auch die Erweiterungs-Sprungsequenz neben der Möglichkeit der Übertragung zusätzlicher Daten variabler Länge die oben genannten Vorteile aufweist.

1.5.1. Erweiterungs-Sequenz mit Kern-Sprungsequenz-Kanälen

Bei Beispielen kann die Erweiterungs-Sprungsequenz in Abhängigkeit von der Kern-Sprungsequenz so berechnet, angepasst oder aus einem Satz von Sprungmustern ausgewählt werden, dass die Erweiterungs-Sprungsequenz nur Frequenzsubkanäle aufweist, die auch die Kern-Sprungsequenz aufweist. Dabei kann die Erweiterungs-Sprungsequenz weniger Frequenzsubkanäle aufweisen als die Kern-Sprungsequenz.

Beispielsweise können bei der Erzeugung (oder Bildung) der Erweiterungs-Sprungsequenz nur die Subkanäle genutzt werden, die auch von der Kern-Sprungsequenz 140 genutzt werden. Etwaige fehlende Subkanäle werden ebenso ausgelassen, wie dies anhand der nachfolgenden Tabelle beispielhaft verdeutlicht wird:

| Subkanal | Genutzt in Kernsequenz | Verfügbar für Erweiterungssequenz |
|---|---|---|
| 0 | Nein | Nein |
| 1 | Ja | Ja |
| 2 | Ja | Ja |
| 3 | Ja | Ja |
| 4 | Nein | Nein |
| 5 | Ja | Ja |
| 6 | Ja | Ja |
| 7 | Nein | Nein |
| 8 | Nein | Nein |
| 9 | Ja | Ja |
| 10 | Nein | Nein |
| 11 | Ja | Ja |
| 12 | Nein | Nein |

Zur Generierung kann beispielsweise eine Pseudozufallszahl für jedes Sub-Datenpaket erstellt werden und die resultierende Zahl durch die Modulo Operation auf die entsprechende Anzahl an Subkanälen beschränkt werden. Die Zufallszahl kann dem Datenempfänger 110 durch die Kern-Sprungsequenz 140 ebenso bekannt sein wie die Methode zur Zufallszahlengenerierung.

Bei Beispielen können für die Erweiterungs-Sprungsequenz datensenderseitig nur die Subkanäle der Kern-Sprungsequenz 140 genutzt werden.

Bei Beispielen können datenempfängerseitig die erwarteten Sub-Datenpakete der Erweiterungs-Sprungsequenz entsprechend angepasst werden.

1.5.2. Erweiterungssequenz innerhalb der Kernsequenzgrenzen

Bei Beispielen kann die Erweiterungs-Sprungsequenz in Abhängigkeit von der Kern-Sprungsequenz so berechnet, angepasst oder aus einem Satz von Sprungmustern ausgewählt werden, dass die Erweiterungs-Sprungsequenz auch Frequenzsubkanäle aufweist, die die Kern-Sprungsequenz nicht aufweist.

Beispielsweise können bei der Erzeugung (oder Bildung) der Erweiterungs-Sprungsequenz für die Erweiterungs-Sprungsequenz (alle) Subkanäle genutzt werden, welche kleiner gleich dem höchsten genutzten Frequenzsubkanal der Kern-Sprungsequenz und größer gleich dem niedrigsten genutzten Frequenzsubkanal der Kern-Sprungsequenz sind, wie dies anhand der nachfolgenden Tabelle beispielhaft verdeutlicht wird:

| Subkanal | Genutzt in Kernsequenz | Verfügbar für Erweiterungssequenz |
|---|---|---|
| 0 | Nein | Nein |
| 1 | Ja | Ja |
| 2 | Ja | Ja |
| 3 | Ja | Ja |
| 4 | Nein | Ja |
| 5 | Ja | Ja |
| 6 | Ja | Ja |
| 7 | Nein | Ja |
| 8 | Nein | Ja |
| 9 | Ja | Ja |
| 10 | Nein | Ja |
| 11 | Ja | Ja |
| 12 | Nein | Nein |

Zur Generierung kann beispielsweise eine Pseudozufallszahl für jedes Sub-Datenpaket erstellt werden und die resultierende Zahl durch die Modulo Operation auf die entsprechende Anzahl an Subfrequenzkanälen beschränkt werden. Die Zufallszahl kann dem Datenempfänger durch die Kern-Sprungsequenz ebenso bekannt sein wie die Methode zur Zufallszahlengenerierung.

Bei Beispielen können für die Erweiterungs-Sprungsequenz datensenderseitig nur die Subkanäle genutzt werden, die nicht für die Kern-Sprungsequenz 140 genutzt werden.

Bei Beispielen können datenempfängerseitig die erwarteten Sub-Datenpakete der Erweiterungs-Sprungsequenz entsprechend angepasst werden.

### 1.6. Weitere Beispiele

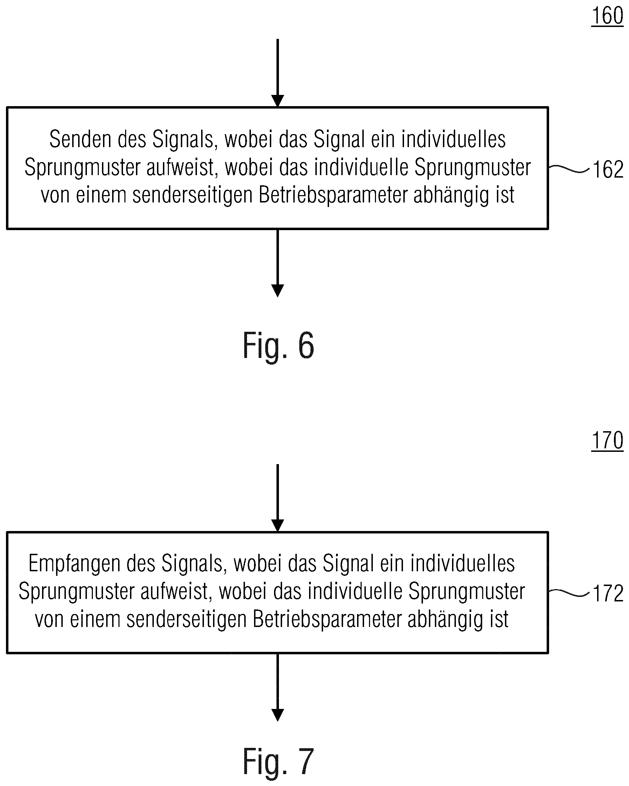

Fig. 6 zeigt ein Flussdiagramm eines Verfahrens 160 zum Senden eines Signals, gemäß einem Beispiel. Das Verfahren 160 umfasst einen Schritt 162 des Sendens des Signals, wobei das Signal ein individuelles Sprungmuster aufweist, wobei das individuelle Sprungmuster von einem senderseitigen Betriebsparameter abhängig ist.

Fig. 7 zeigt ein Flussdiagramm eines Verfahrens 170 zum Empfangen 172 eines Signals, gemäß einem Beispiel. Das Verfahren 170 umfasst einen Schritt des Empfangens des Signals, wobei das Signal ein individuelles Sprungmuster aufweist, wobei das individuelle Sprungmuster von einem senderseitigen Betriebsparameter abhängig ist.

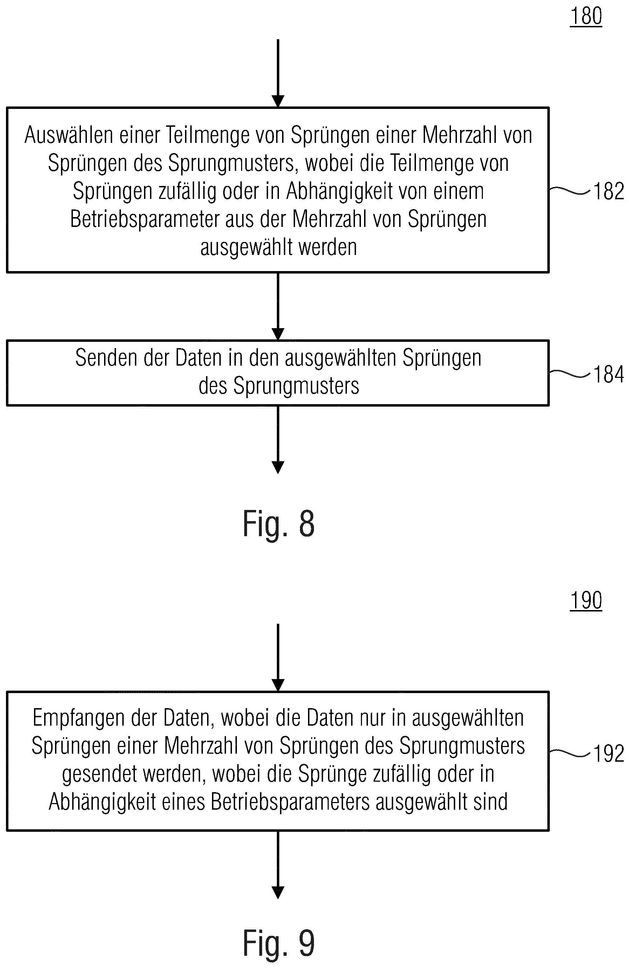

Fig. 8 zeig ein Flussdiagramm eines Verfahrens 180 zum Senden von Daten entsprechend eines Sprungmusters, gemäß einem Beispiel. Das Verfahren 180 umfasst einen Schritt 182 des Auswählens einer Teilmenge von Sprüngen einer Mehrzahl von Sprüngen des Sprungmusters, wobei die Teilmenge von Sprüngen zufällig oder in Abhängigkeit von einem Betriebsparameter aus der Mehrzahl von Sprüngen ausgewählt werden. Ferner umfasst das Verfahren 180 einen Schritt 184 des Sendens der Daten in den ausgewählten Sprüngen des Sprungmusters.

Fig. 9 zeigt ein Flussdiagram eines Verfahrens 190 zum Empfangen von Daten entsprechend eines Sprungmusters, gemäß einem Beispiel. Das Verfahren 190 umfasst einen Schritt 192 des Empfangens der Daten, wobei die Daten nur in ausgewählten Sprüngen einer Mehrzahl von Sprüngen des Sprungmusters gesendet werden, wobei die Sprünge zufällig oder in Abhängigkeit eines Betriebsparameters ausgewählt sind.

### 2. Erzeugung von Sprungmustern

Im Folgenden werden Beispiele eines Verfahrens zum Erzeugen von Sprungmustern näher beschrieben.

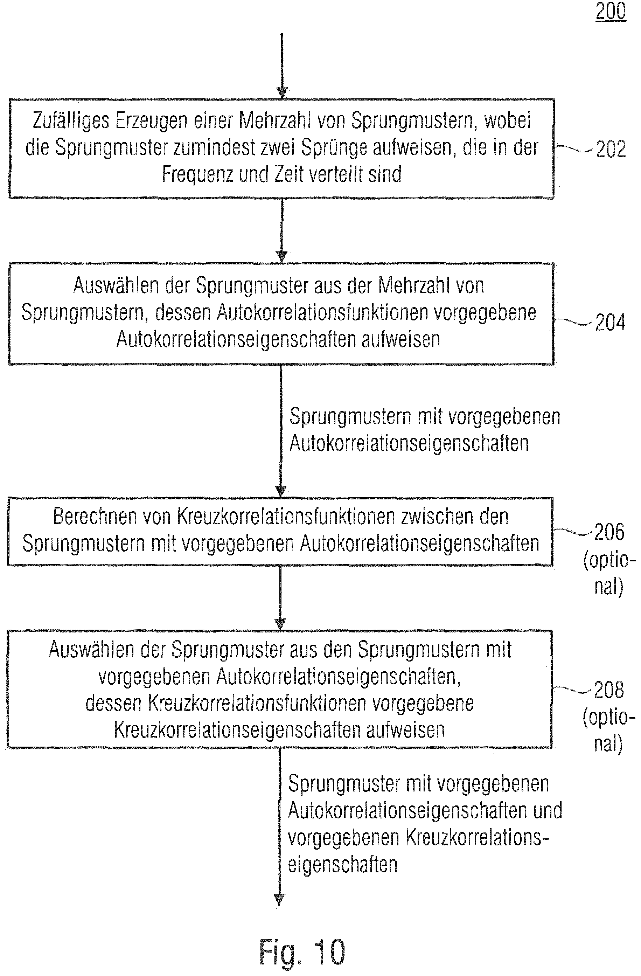

Fig. 10 zeigt ein Flussdiagramm eines Verfahrens 200 zum Erzeugen von Sprungmustern, gemäß einem Beispiel. Das Verfahren 200 umfasst einen Schritt 202 des zufälligen Erzeugens einer Mehrzahl von Sprungmustern, wobei die Sprungmuster zumindest zwei Sprünge aufweisen, die in der Frequenz und Zeit verteilt sind. Das Verfahren 200 umfasst ferner einen Schritt 204 des Auswählens der Sprungmuster aus der Mehrzahl von Sprungmustern, deren Autokorrelationsfunktionen vorgegebene Autokorrelationseigenschaften aufweisen, um Sprungmuster mit vorgegebenen Autokorrelationseigenschaften zu erhalten.

Bei Beispielen können diejenigen Sprungmuster die vorgegebenen Autokorrelationseigenschaften erfüllen, deren Autokorrelationsfunktions-Nebenmaxima einen vorgegebenen minimalen Amplitudenschwellwert nicht überschreiten. Der Amplitudenschwellwert kann beispielsweise gleich einer Anzahl von Sprüngen eines Clusters einer Mehrzahl von Clustern sein, in die das Sprungmuster unterteilt ist. Ein Cluster kann beispielsweise eine Anzahl von Sprüngen sein, die den gleichen Zeit- und/oder Frequenzabstand zueinander aufweisen.

Bei Beispielen können diejenigen Sprungmuster die vorgegebenen Autokorrelationseigenschaften erfüllen, deren Teilsumme über eine vorgegebene Anzahl von größten Amplitudenwerten der jeweiligen Autokorrelationsfunktion gebildet, kleiner als ein vorgegebener Schwellwert ist. Der Schwellwert kann dabei so gewählt werden, dass zumindest zwei Sprungmuster (oder eine vorgegebene Anzahl von Sprungmustern) die vorgegebenen Autokorrelationseigenschaften erfüllen.

Wie in Fig. 10 zu erkennen ist, kann das Verfahren 200 ferner einen Schritt 206 des Berechnens von Kreuzkorrelationsfunktionen zwischen den Sprungmustern mit vorgegebenen Autokorrelationseigenschaften aufweisen. Ferner kann das Verfahren 200 einen Schritt 208 des Auswählens der Sprungmuster aus den Sprungmustern mit vorgegebenen Autokorrelationseigenschaften, deren Kreuzkorrelationsfunktionen vorgegebene Kreuzkorrelationseigenschaften aufweisen, um Sprungmuster mit vorgegebenen Autokorrelationseigenschaften und vorgegebenen Kreuzkorrelationseigenschaften zu erhalten.

Bei Beispielen können diejenigen Sprungmuster die vorgegebenen Kreuzkorrelationseigenschaften erfüllen, deren Teilsummen über eine vorgegebene Anzahl von größten Amplitudenwerten der jeweiligen Kreuzkorrelationsfunktion gebildet, am kleinsten sind.

2.1 Erzeugung von Sprungmustern für TSMA

Sprungmuster, die mit dem in Fig. 10 gezeigtem Verfahren erzeugt sind, können beispielsweise in einem System zur unidirektionalen oder bidirektionalen Datenübertragung von vielen Sensorknoten zu einer Basisstation unter Verwendung des sogenannten "Telegram Splitting Multiple Access (TSMA)" Zugriffsverfahrens zum Einsatz kommen.

Bei TSMA wird dabei die Übertragung einer Nachricht in eine Vielzahl kurzer Bursts (= Sprünge, oder Sub-Datenpakete) 142 unterteilt, zwischen denen sich jeweils unterschiedlich lange übertragungsfreie Zeitintervalle befinden. Die Bursts 142 können dabei nach einem echten oder einem Pseudo-Zufallsprinzip sowohl über die Zeit als auch über die zur Verfügung stehenden Frequenzen verteilt werden.

Dieser Ansatz des Telegram-Splittings liefert dabei eine besonders große Robustheit gegenüber Störungen anderer Sensorknoten, egal ob sie nun aus dem eigenen oder aus fremden Systemen kommen. Die Störrobustheit bei den eigenen Sensorknoten wird insbesondere durch das möglichst gleichmäßige Verteilen der verschiedenen Nutzersignal-Bursts sowohl über den Zeit- wie auch den Frequenzbereich erzielt.

Diese zufallsähnliche Verteilung kann durch verschiedene Maßnahmen erreicht werden, wie z.B. (1) durch unvermeidbare Toleranzabweichungen des Kristallreferenzoszillators bzgl. der Frequenz, (2) durch den zufälligen asynchronen Kanalzugriff erfolgt eine beliebige Granularität im Zeitbereich, und (3) durch unterschiedliche Burst-Anordnung der verschiedenen Sensorknoten zu verschiedenen Sprungmustern.

Der Entwurf und die Optimierung derartiger Sprungmuster (engl. hopping pattern) wird im Folgenden detailliert erläutert.

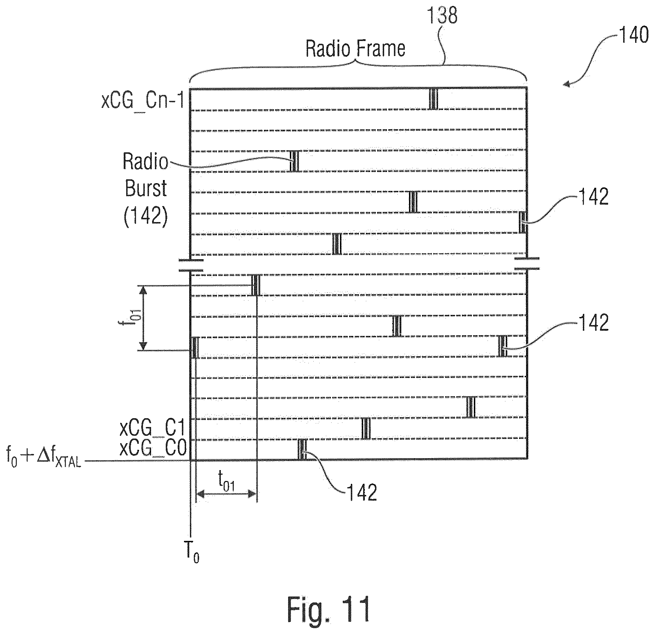

Bei dem Übertragungsverfahren TSMA sind die einzelnen Bursts eines Datenpakets 120 (im Folgenden auch als Frame bezeichnet), wie in Fig. 11 dargestellt, sowohl über die Zeit wie auch über die Frequenzen verteilt.

Im Detail zeigt Fig. 11 in einem Diagramm einen Aufbau eines Frames 120 mit einem TSMA Sprungmuster 140. Dabei beschreibt die Ordinate die Frequenz bzw. Kanäle (Frequenzkanäle) und die Abszisse die Zeit.

Die Startzeit $T_0$ eines Frames 120 mit der Gesamtdauer $T_{Frame}$ wird vom Sensorknoten 100 aufgrund der asynchronen Übertragung zufällig ausgewählt. Die Zeitdauer $T_{Burst}$ eines Bursts 142 kann variieren, ist im Folgenden ohne Einschränkung der Allgemeingültigkeit als konstant angenommen, wohingegen die Zeitintervalle $t_{n,(n+1)}$, welche jeweils den Abstand zweier benachbarter Burst-Mitten (hier der beiden Bursts mit den Indizes $n$ und $n+1$) kennzeichnen, jeweils Zufallsgrößen sind, die alle innerhalb eines vorgebbaren Bereichs $T_{A\_min} \leq t_{n,(n+1)} \leq T_{A\_max}$ für $n \in \{1,2,...,N\}$ liegen. $N$ ist die Anzahl der Bursts 142 innerhalb eines Frames 120. Für die zur Übertragung verwendeten Frequenzen wird angenommen, dass diese in Form diskreter Frequenzkanäle vorliegen, welche in einem vorgegebenen Frequenzkanalraster liegen. Die Frequenzseparierung $f_{n,(n+1)}$ zwischen 2 Bursts 142 ist ein Vielfaches des TSMA-Trägerabstandes $B_C$.

Die Anzahl der verfügbaren Frequenzkanäle sei mit $L$ vorgegeben und es gelte $N \leq L$. Insofern sind mehr oder exakt so viele Frequenzkanäle vorhanden, wie von den $N$ Bursts 142 benötigt werden und innerhalb eines Frames 120 befindet sich damit jeder der $N$ Bursts 142 in einem anderen Frequenzkanal.

Die Anordnung der $N$ Bursts 142 in Zeit und Frequenz wird im Folgenden als TSMA-Muster (TSMA-Sprungmuster) bezeichnet. Ist dieses Sprungmuster dem Empfänger bekannt, dann kann dieser sich anhand der in manchen oder jedem Burst 142 befindlichen Pilot-Sequenzen darauf synchronisieren und anschließend die Empfangsdaten dekodieren.

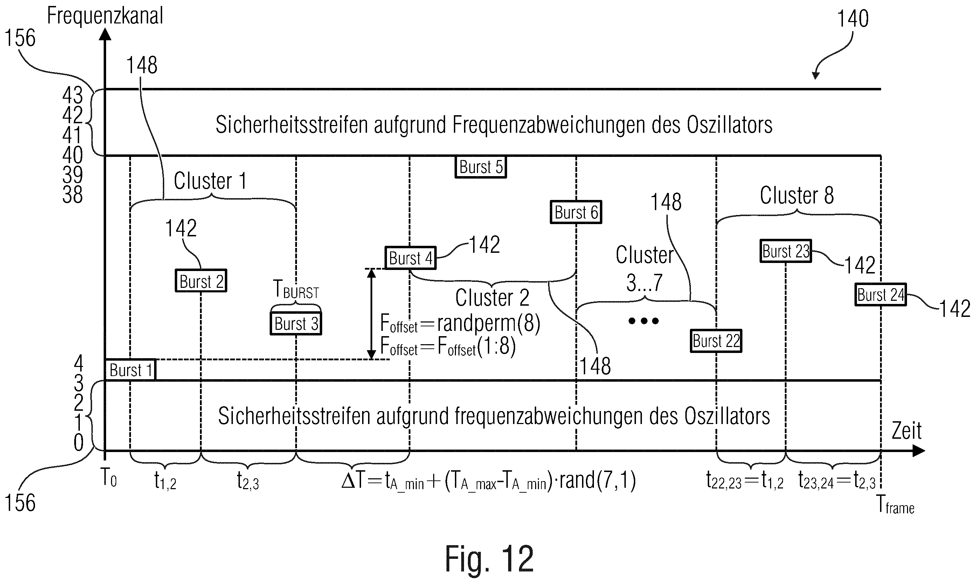

Bezüglich des Designs einer oder mehrerer TSMA-Muster können nachfolgend aufgeführte systembedingte Einschränkungen beachtet werden: (1) Die Frequenzabweichung des Oszillators von seiner Nominalfrequenz kann berücksichtigt werden. Ja nach den Systemparametern und Hardwareanforderungen kann die Frequenzabweichung durchaus ein Mehrfaches des Trägerabstandes sein. Da dieser Frequenzoffset sowohl positive als auch negative Werte annehmen kann, kann entsprechend an beiden Rändern des insgesamt zur Nutzung betrachteten Frequenzbereichs ein Sicherheitsstreifen 156 von $S$ Frequenzkanal vorgesehen werden, in denen kein Burst liegt (siehe auch Fig. 12). Insofern reduziert sich der Freiheitsgrad für die einzelnen Bursts des Sprungmusters auf $(L-2 \cdot S)$ Frequenzen, wobei immer noch $N \leq (L-2 \cdot S)$ gilt. (2) Aufgrund der zeitlich asynchronen Übertragung ist dem Empfänger 110 nicht bekannt, wann ein Sender 100 sendet und auch welcher Sender sendet ist dem Empfänger unbekannt. Insofern wäre es für die Detektion eines Signales mit einem erheblichen Mehraufwand verbunden, wenn die Muster-Anordnung, also die Gruppierung der $N$ Bursts 142 innerhalb des Zeitbereichs $T_{Frame}$ und über die $(L-2 \cdot S)$ Frequenzen völlig zufällig wäre. Insofern können beispielsweise $C$ aufeinanderfolgende Bursts 142 zu einem sogenannten Cluster 148 zusammengefasst werden, die bezüglich ihrer Zeit- und Frequenzabstände relativ zueinander z.B. identisch sind. Ein Sprungmuster 140 besteht damit aus $N/C$ Cluster 148 mit jeweils $C$ Bursts 142. C kann dabei vorteilhafterweise so gewählt werden, dass es ganzzahliger Teiler von $N$ ist. Es gilt also $N/C \mid N \Leftrightarrow \exists\, k \in \mathbb{Z} : k \cdot N/C = N$. Details werden in Fig. 12 gezeigt besprochen. Es sei aber schon hier erwähnt, dass ein Sprungmuster-Aufbau, bestehend aus $N/C$ Clustern 148, die in ihrer inneren Struktur völlig identisch sind, gewisse Nachteile bezüglich ihrer Korrelationseigenschaften aufweisen (Auftreten von stark ausgeprägten Nebenmaximas mit jeweils einer Amplitude von $N/C$ in der 2D-Autokorrelationfunktion. Alle ersten Bursts 142 in den $N/C$ Clustern haben frequenzversetzt (und eventuell auch zeitversetzt) identisches Wiederholmuster. Entsprechend kommt es vor, dass sich gleich $N/C$ Burst 142 gegenseitig stören. Dieser Nachteil kann aber in Hinblick auf die dadurch erzielbaren Vereinfachungen im Empfänger in Kauf genommen werden. Eine Clustergröße von C=1 (und somit kein Cluster) ist immer am vorteilhaftesten bezüglich der Korrelationseigenschaften. (3) Aufgrund des Telegram Splittings ist die Zeitdauer $T_{Burst}$ eines Bursts 142 relativ kurz im Verhältnis zur Übertragungszeit des gesamten Frames 120. Lässt man nach dem Senden des ersten Bursts 142 eine gewisse Mindestzeit $T_{A\_min}$ verstreichen, kann dies bzgl. des Stromverbrauchs der batteriebetriebenen Sensorknoten gewisse Vorteile aufweisen (Erholungszeit der Batterie nach vergleichsweise energieintensivem Sendevorgang). Dieser Mindestabstand $T_{A\_min}$ sollte als Designvorgabe auch möglichst innerhalb der Cluster eingehalten werden.

Unter Berücksichtigung der oben aufgeführten Einschränkungen ergibt sich der in Fig. 12 dargestellte Aufbau eines TSMA-Musters 142.

Im Detail zeigt Fig. 12 in einem Diagramm eine schematische Ansicht eines Aufbaus eines TSMA-Sprungmusters 142. Dabei beschreibt die Ordinate die Frequenz in Frequenzkanälen und die Abszisse die Zeit. Mit anderen Worten, Fig. 12 zeigt eine Struktur des TSMA-Sprungmusters 142 mit Cluster-Anordnung und Frequenzbelegung.

Zur besseren Verständlichkeit seien in Fig. 12 die Werte soweit nötig und rein beispielhaft mit konkreten Zahlen unterlegt: $L = 44$, $S = 4$, $N = 24$, $C = 3$. Jeweils $S=4$ Frequenzbänder sind aufgrund der Frequenzabweichung des Oszillators von seiner Nominalfrequenz für die BurstBelegung gesperrt, wodurch noch 36 Frequenzbänder für die 24 Bursts, bzw. die 8 Cluster verbleiben.

Es ergeben sich die im Folgenden beschriebenen Freiheitsgrade bezüglich der Frequenzkanalbelegung. Da die 3 Bursts in den 8 Cluster relativ zueinander jeweils einen gleichen Frequenzabstand haben können, können mindestens 8 weitere Frequenzbänder reserviert werden, womit maximal ein Hub von 28 Frequenzbändern für die Basiszuordnung der 3 Bursts übrigbleibt. Beispielsweise kann eine beliebige relative Zuordnung mit 3 verschiedenen Frequenzbändern erfolgen. Ein möglichst großer Frequenzhub bei benachbarten Bursts wie es beispielsweise bei den Basiszuordnungen (1,28,14) oder (1,24,12) der Fall ist, erweist sich in Bezug auf die späteren Optimierungen als vorteilhaft. Auch die Zuordnung der einzelnen Cluster zueinander kann nach dem Zufallsprinzip erfolgen. Beispielsweise kann die Reihenfolge der Zahlen {1,2,3,4,5,6,7,8} beliebig miteinander permutiert werden (Matlab-Befehl: randperm(8)) und diese 8 verschiedenen Werte können jeweils mit der Basiszuordnung addiert werden, um die Frequenzzuordnung der Bursts in den 8 Clustern zu erhalten.

Es ergeben sich die im Folgenden beschriebene Freiheitsgrade bezüglich der Zeitintervalle. Hier gilt es sowohl die 2 Zeitintervalle zwischen den 3 Bursts der Cluster festzulegen, wie auch die 7 Zeitabstände zwischen den 8 Clustern. Eine gewisse Mindestzeit $T_{A\_min}$ soll dabei nicht unterschritten werden. Eine obere Zeitschranke $T_{A\_max}$ ergibt sich durch die Vorgabe der Framedauer $T_{Frame}$ Die Bestimmung der Zeitintervalle kann ebenfalls durch auswürfeln erfolgen (Matlab-Befehl: $\Delta T = T_{A\_min} + (T_{A\_max} - T_{A\_min}) \cdot \text{rand}(7,1)$).

Beim "Telegram Splitting Multiple Access (TSMA)" Zugriffsverfahren wird die Nachricht entsprechend dem Sprungmuster 140 sowohl in Zeit- wie auch in Frequenzrichtung in viele kleine Bursts 142 zerlegt. Durch die asynchrone Übertragung und die unterschiedlichen Frequenzablagen der einzelnen Sensorknoten 100 werden die Bursts 142 sowohl über die Zeit als auch über das zur Verfügung stehende Frequenzspektrum verschmiert. Besitzen alle Sensorknoten 100 das gleiche Sprungmuster, dann kommt es mit steigender Teilnehmerzahl immer öfter dazu, dass sich Bursts unterschiedlicher Teilnehmer zeitlich überlagern und damit gegenseitig stören. Je mehr Bursts 142 innerhalb eines Frames 120 von Bursts anderer Teilnehmer gestört werden, umso größer wird die Wahrscheinlichkeit, dass die empfängerseitige Fehlerkorrektur versagt und Übertragungsfehler auftreten.

Beispiele schaffen einen Satz von Sprungmustern, welche idealerweise die Paketfehlerrate (Frame oder Paket Error Rate, FER, PER) des Funkübertragungssystems minimieren. Dies geschieht unter der Annahme, dass alle Funkteilnehmer denselben Satz von Sprungmustern verwenden. Während hinsichtlich der Anordnung der Funkfrequenzen in einem Sprungmuster durch Einführung von diskreten Funkkanälen nur eine endliche (wenn auch i.d.R. außerordentlich große) Anzahl von Permutationen möglich ist, führt die zeitliche Anordnung der Bursts 142 aufgrund einer kontinuierlichen Zeitachse zu einer extrem großen Anzahl von Permutationsmöglichkeiten, d.h. Sprungmustern. Damit ist eine "Vollsuche" über alle möglichen Sprungmuster fast ausgeschlossen. Das der Erfindung zugrundeliegende Verfahren basiert daher auf einem Monte-Carlo-Ansatz, welcher aus einer sehr großen Zahl von (pseudo-) zufällig erzeugten Sprungmuster durch geeignete Design-Kriterien einen Satz mit den besten Eigenschaften im Sinne einer zu erwartenden, minimalen Fehlerrate auswählt. Die Anzahl der Sprungmuster in diesem Satz beläuft sich auf $P_{Auswahl}$.

Zur Erstellung geeigneter Sprungmuster 142 wird eine Metrik benötigt, welche idealerweise mit der zu erwartenden Paketfehlerrate in einem streng monotonen Zusammenhang steht, deren Minimierung also idealerweise die Paketfehlerrate minimiert. Bei Beispielen kann als Entwurfskriterium die zweidimensionale (2D-)Autokorrelierte bzw. Kreuzkorrelierte des Sprungmusters betrachtet werden.

Die 2D-Autokorrelierte (AKF) $\Theta_{x,x}$ der Matrix $\boldsymbol{X}$ des Sprungmusters 142, welche die Fläche über die mit Vielfachen von $T_A$ abgetastete Zeitdauer $T_{Frame}$ und das belegte Frequenzspektrum mit den L Frequenzbändern aufspannt, lässt sich wie folgt angeben:

$$\theta_{x,x}(f,t) = \sum_{l=0}^{L-1} \sum_{m=0}^{M-1} x_{l,m} \cdot x_{l+f,m+t}$$

wobei $L$ die Zeilenanzahl der Matrix $\boldsymbol{X}$ und $M = T_{Frame}/T_A$ die Spaltenanzahl der Matrix $\boldsymbol{X}$ ist. Falls sich an der betreffenden Stelle $x(l,m)$ der Matrix $\boldsymbol{X}$ ein Burst befindet, dann erfolgt an dieser Stelle ein Eintrag in $\boldsymbol{X}$ mit $x(l,m) = 1$, ansonsten bleibt $x(l,m) = 0$. Die indizierten Elemente von $\boldsymbol{X}$, die außerhalb des belegten Bereichs liegen, sind ebenfalls Null:

$$x(l,m) = 0, \, l < 0 \text{ oder } l \geq L \text{ oder } m < 0 \text{ oder } m \geq M$$

Da sich der Oszillator-Frequenzfehler pro Teilnehmer definitionsgemäß maximal auf eine Abweichung von S Frequenzkanälen belaufen kann, erstreckt sich der Frequenz-Index $f$ in der AKF von $-2S$ bis $+2S$. Der Zeit-Index $t$ läuft dagegen von $-T_{Frame}$ bis $T_{Frame}$, in Schritten von $T_{Ffame}/T_A$. Die AKF-Dimension von $\Theta_{x,x}$ ist damit $(4S+1) \times (2M+1)$.

In der Zeit- und Frequenzinformations-Matrix $\boldsymbol{X}$ kann, falls gewünscht, auch der Einfluss von Nachbarkanalstörungen berücksichtigt werden. Dies ist dann wichtig, wenn die Empfangsfilter im Empfänger 110 keine besondere Trennschärfe (Selektivität) hinsichtlich von Nachbarkanalstörungen aufweisen. Dazu kann ein Metrik-Vektor $\boldsymbol{m_{Met}}$ = *{Gleichkanal, 1ster Nachbarkanal, 2ter Nachbarkanal, ...}* eingeführt werden, der in der Matrix $\boldsymbol{X}$ die entsprechende Information einfügt. Spezifiziert man beispielsweise eine Metrik mit $\boldsymbol{m_{Met}}$ = *{1, 0.5, 0.1}*, dann werden in $\boldsymbol{X}$ an der Stelle $x(l,m)$, wo wir die Anwesenheit eines Burst unterstellen, eine *1* und an den beiden Positionen der Nachbarfrequenzen $x(l-1,m)$ und $x(l+1,m)$ steht eine *0.5*. Entsprechend befindet sich noch weiter außen bei $x(l-2,m)$ und $x(l+2,m)$ der Wert *0.1* für den 2ten Nachbarkanal. Diese Indizierung kann an allen Positionen geschehen, wo sich ein Burst in $\boldsymbol{X}$ befindet.

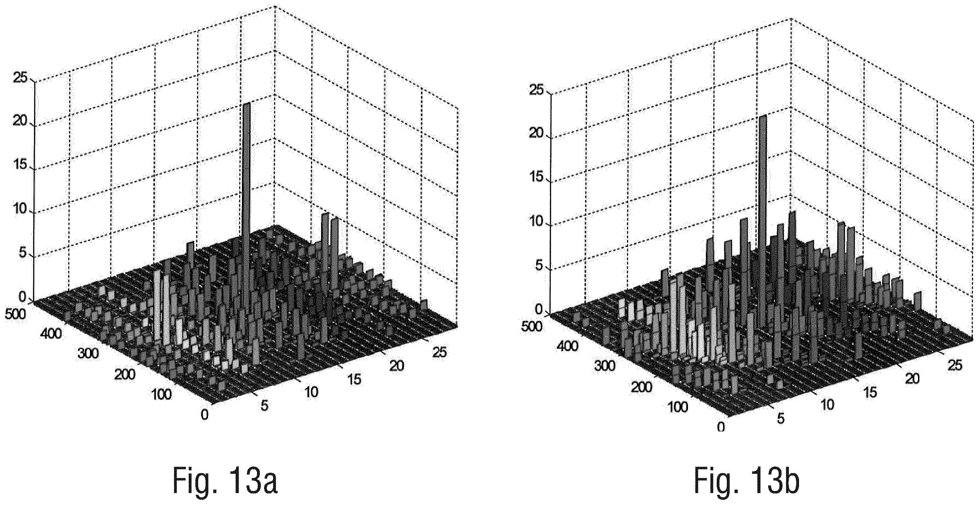

Fig. 13a und 13b zeigen zwei AKF-Beispiele. In Fig. 13a treten neben dem unvermeidbaren Hauptmaximum bei $t = f = 0$ (Da die unverschobene Folge mit sich selbst am ähnlichsten ist, hat die 2D-AKF für die in beiden Dimensionen (Zeit und Frequenz) unverschobene Folge den höchsten Wert, in unserem Fall eben $N$ Burst-Kollisionen) und den 2 oder 4 möglichen Nebenmaximas mit den Amplituden von jeweils $N/C$ aufgrund der Cluster-Bildung, nur noch Werte auf, die kleiner oder gleich einem Schwellwert $N_{Schwelle}$ sind. Je niedriger diese Schwelle ist, desto weniger Bursts sind dann in einem Frame gestört und die Wahrscheinlichkeit eines Übertragungsfehlers sinkt. Fig. 13b zeigt dagegen ein ungünstigeres Sprungmuster, bei dem der Schwellwert an einigen Stellen überschritten wird. Die Wahrscheinlichkeit von Übertragungsfehlern steigt dadurch an.

Im Folgenden werden die einzelnen Designschritte detailliert beschrieben.

In einem ersten Design-Schritt können daher $P_{Optimal}$ Kandidaten der Sprungmuster generiert werden, deren AKF-Nebenmaxima einen vorgegebenen minimalen Amplitudenschwellwert $N_{Schwelle} \geq C$ ($C$ ist die Cluster-Größe) nicht übersteigen. Die Erzeugung von Kandidaten der Sprungmuster erfolgt im Rahmen einer Monte-Carlo-Simulation, in welcher Sprungmuster mit zufälligen Zeit- und Frequenzmustern (im Rahmen der erwähnten Randbedingungen, siehe oben) generiert werden. Falls für den Schwellwert $N_{Schwelle} > C$ gilt, sollte die Anzahl der Werte, die den Wert C übersteigen, möglichst gering sein.

Dazu können die $(4S+1) \times (2M+1)$ Elemente der 2D-Autokorrelierten $\Theta_{x,x}$ in aufsteigender Reihenfolge in einem Vektor $\boldsymbol{V_{Sort}}$ sortiert werden. Da die Gesamtsumme über alle AKF-Elemente für alle Sprungmuster immer annähernd konstant ist und die meisten AKF-Elemente Werte von 0, 1 oder C (vollständige Cluster-Kollision) aufweisen, interessieren lediglich, falls vorhanden, die Werte größer C. Insofern reicht es aus, dass lediglich die letzten $v_{AKF}$ Elemente von $\boldsymbol{V_{Sort}}$ ,also $\boldsymbol{V_{Sort}}(end\text{-} v_{AKF}+1\text{:}end)$ betrachtet werden. Als Kriterium (vorgegebene Autokorrelationseigenschaft) kann daher festgelegt werden, dass die Summe $SUM_{AKF}$ dieser $v_{AKF}$ Elemente möglichst einen Summenschwellwert von $S_{Sum\_AKF\_Schwelle} = (v_{AKF}\text{-}1)\cdot C+N$ nicht übersteigt. Findet man hierzu nicht genügend verschiedene Sprungmuster, dann kann der Wert von $S_{Sum\_AKF\_Schwelle}$ schrittweise um 1 erhöht werden, bis eine ausreichende Anzahl $P_{Optimal}$ von Sprungmustern zur Verfügung steht. Speziell wenn mittels des Metrik-Vektor $\boldsymbol{m_{Met}}$ Nachbarkanalstörungen in die Berechnung der 2D-AKF einfließen, dann kann der Summenschwellwert $S_{Sum\_AKF\_Schwelle}$ deutlich ansteigen.

Falls unterschiedliche Sätze von Sprungmustern 142 gesucht werden sollen, kann der erste Design-Schritt mit einem neuen Parametersatz wiederholt werden. Beispielsweise kann der Wunsch bestehen, mehrere Sätze von Sprungmustern mit unterschiedlichen Oszillator-Abweichungen zu generieren und gemeinsam zu optimieren. Unterschiedliche Oszillator-Abweichung bewirken verschieden Sicherheitsstreifen $S$, wodurch sich der Freiheitsgrad der möglichen Burstbelegung verändert. Insofern ändern sich dadurch auch einige Parameter innerhalb der AKF-Berechnung.

Wenn eine vorgegebene Zahl $P_{Auswahl}$ verschiedener Sprungmuster gesucht wird, dann sollten diese möglichst orthogonal zueinander sein und die einzelnen 2D-Kreuzkorrelationsmatrizen (2D-KKF)

$$\theta_{x,y}(f,t) = \sum_{l=0}^{L-1} \sum_{m=0}^{M-1} x_{l,m} \cdot y_{l+f,m+t}$$

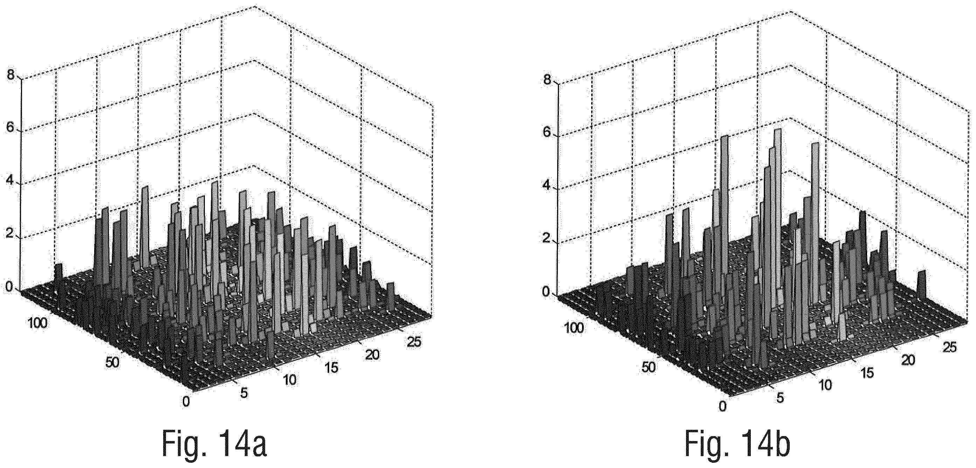

der beiden Sprungmuster mit den Matrizen $\boldsymbol{X}$ und $\boldsymbol{Y}$ möglichst geringe Maximal-Werte aufweisen, da hohe Maximal-Werte in der Funkübertragung potentiell einer großen Zahl von kollidierenden Bursts in einem einzelnen Frame entsprechen. Der Zeit-Index von $\Theta_{x,y}$ läuft unverändert in Schritten von $T_{Frame}/T_A$ von $\text{-} T_{Frame}$ bis $T_{Frame}$. Der KKF-Frequenz-Index $f$ erstreckt sich dagegen allgemein von $\text{-}(S_x+S_y)$ bis $+(S_x+S_y)$, da die beiden betrachteten Sprungmuster unterschiedliche Abweichungen in ihrem Frequenzfehlerverhalten (Oszillatorfrequenzabweichungen) aufweisen können. Fig. 14a und 14b zeigen wieder zwei 2D-KKF-Beispiele, einen günstigen Fall (Fig. 14a) sowie einen ungünstigen Fall (Fig. 14b).

In einem zweiten Design-Schritt können, ausgehend von den $P_{Optimal}$ vorab ausgewählten Sprungmuster-Kandidaten mit ihren zugehörigen 2D-Autokorrelationsfolgen $\Theta_{x,x}$, sämtliche $(P_{Optimal}\text{-}1)$ x $(P_{Optimal})$ möglichen, i.d.R. unterschiedlichen Kreuzkorrelationsfolgen $\Theta_{x,y}$ berechnet werden. Bei jeder 2D-KKF können dann im Anschluss die Werte von $\Theta_{x,y}$ erneut in aufsteigender Reihenfolge sortiert (analog dem Prozedere bei der 2D-AKF), die Summe der letzten $v_{KKF}$ Elemente berechnet, *also $SUM_{KKF} = sum(\boldsymbol{V_{Sort}}(end\text{-} v_{kKF}+1\text{:}end))$* und in einer quadratischen $(P_{Optimal}$ x $P_{Optimal})$ Matrix $\boldsymbol{O_{vKKF}}$ abgespeichert werden.

In einem dritten Schritt gilt es die $P_{Auswahl}$ verschiedenen Sprungmuster 142 zu suchen, welche untereinander die günstigsten 2D-KKF-Eigenschaften aufweisen, da diese mit einer vergleichsweise niedrigen maximalen Anzahl kollidierender Bursts in einem Frame korrelieren. Dazu können die Eigenschaften von $((P_{Auswahl}\text{-}1)\cdot P_{Auswahl})/2$ verschiedenen 2D-KKF anhand der abgespeicherten Summen $SUM_{KKF}$ in der Matrix $\boldsymbol{O_{vKKF}}$ ausgewertet werden. Diejenigen $P_{Auswahl}$ verschiedener Sprungmuster, deren Gesamtsumme über die $((P_{Auswahl}\text{-}1)\cdot P_{Auswahl})/2$ verschiedenen Teilsummen $SUM_{KKF}$ aus $\boldsymbol{O_{vKKF}}$ ein Minimum ergibt, ergibt die optimalen $P_{Auswahl}$ Sprungmuster. Da im Zuge einer umfangreichen Monte-Carlo-Simulation $P_{Auswahl} \ll P_{Optimal}$ anzustreben ist, existieren entsprechend dem Binomialkoeffizienten "$P_{Optimall}$" über $P_{Auswahl}$" verschiedene Kombinationsmöglichkeiten, ein Umfang, der in der Regel nicht mehr vollständig abzuarbeiten ist. Insofern können immer $P_{Auswahl}$ Sprungmuster neu und zufällig aus den $P_{Optimal}$ vorhandenen Sprungmuster ausgewählt werden Matlab-Befehle: F=randperm$(1\text{:}P_{Optimal})$ und *Pattern$_{Auswahl=}$* F$(1\text{:}P_{Auswahl}))$ und immer jeweils die Gesamtsumme GS aus den verschiedenen Teilsummen $SUM_{KKF}$ berechnet werden. Bei entsprechend großem Stichprobenumfang ergibt sich ein lokales Minimum der Gesamtsumme, welches dann den gewünschten Satz von $P_{Auswahl}$ Sprungmuster liefert.

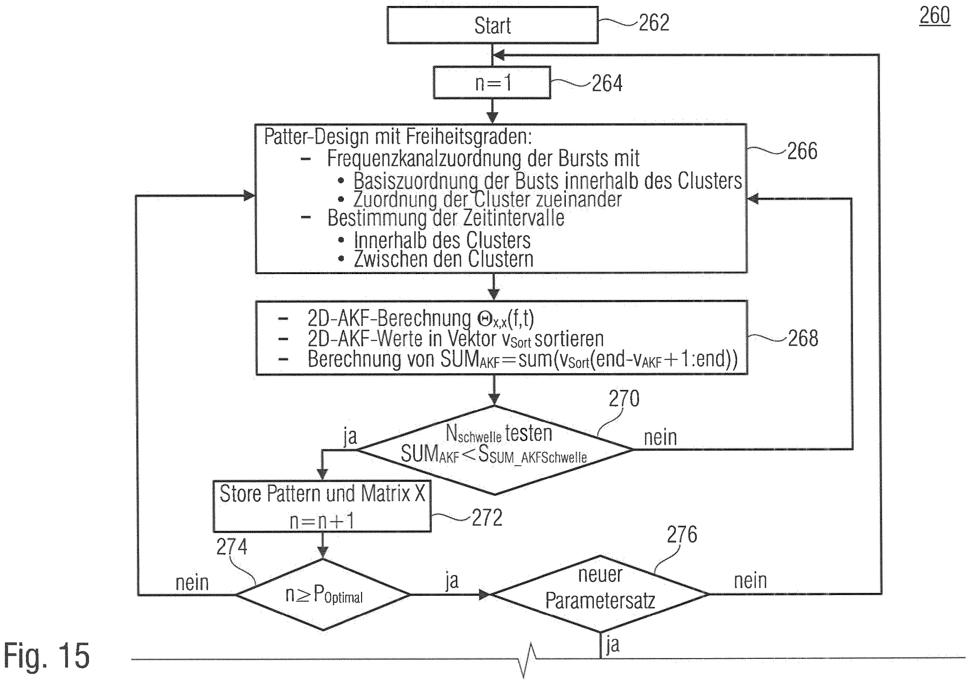

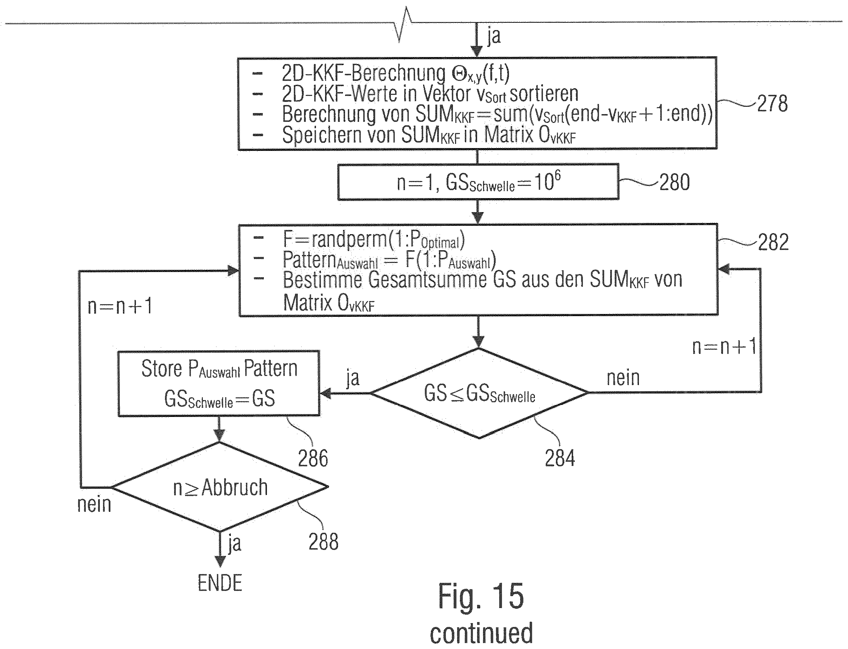

Der vollständige Design-Prozess, wie auch die Freiheitsgrade bei der Festlegung der Sprungmuster ist in Fig. 15 nochmals dargestellt. Die Möglichkeit mehrere Sätze von Sprungmustern gleichzeitig zu optimieren, ist berücksichtigt, aber nur angedeutet.

Im Detail zeigt Fig. 15 ein Flussdiagramm eines Verfahrens 260 zur Erzeugung von Sprungmustern, gemäß einem Beispiel.

In einem ersten Schritt 262 wird das Verfahren 260 gestartet.

In einem zweiten Schritt 264 wird n gleich eins gesetzt, wobei n eine Laufvariable ist.

In einem dritten Schritt 266 kann ein Sprungmuster zufällig erzeugt werden. Hierbei können die oben genannten Freiheitsgrade bezüglich der Frequenzkanalbelegung, wie zum Beispiel eine Frequenzkanalzuordnung der Burts mit Basiszuordnung der Bursts innerhalb des Clusters und eine Zuordnung der Cluster zueinander, berücksichtigt werden. Ferner können die oben genannten Freiheitsgrade bezüglich der Zeitintervalle, wie zum Beispiel eine Bestimmung der Zeitintervalle innerhalb des Clusters und zwischen den Clustern, berücksichtigt werden.

In einem vierten Schritt 268 kann die Autokorrelationsfunktion des zufällig erzeugten Sprungmusters berechnet werden. Beispielsweise kann eine 2D-AKF-Berechnung $\Theta_{x,x}(f,t)$ erfolgen. Ferner können die 2D-AKF-Werte in einem Vektor $v_{Sort}$ sortiert werden. Ferner kann eine Teilsumme über eine vorgegebene Anzahl von größten Amplitudenwerten der Autokorrelationsfunktion gebildet werden, $SUM_{AKF} = sum(v_{Sort}(end-v_{AKF}+1:end))$.

In einem fünften Schritt 270 kann ermittelt werden, ob das zufällig erzeugte Sprungmuster die vorgegebenen Autokorrelationseigenschaften aufweist. Beispielsweise kann ermittelt werden, ob die AKF-Nebenmaxima des Sprungmusters einen vorgegebenen minimalen Amplitudenschwellwert $N_{Schwelle} \geq C$ ($C$ ist die Cluster-Größe) nicht übersteigen, im Detail, kann ermittelt werden, ob die Summe $SUM_{AKF}$ dieser $v_{AKF}$ Elemente (Teilsumme) den Summenschwellwert von $S_{Sum\_AKF\_Schwelle}$ von beispielsweise $(v_{AKF}-1) \cdot C+N$ nicht übersteigt.

Wenn das Sprungmuster die vorgegebenen Autokorrelationseigenschaften nicht aufweist, dann wird der dritte Schritt wiederholt. Wenn das Sprungmuster die vorgegebenen Autokorrelationseigenschaften aufweist, dann wird das Verfahren fortgesetzt.

In einem sechsten Schritt 272 wird kann das Sprungmuster (mit den vorgegebenen Autokorrelationseigenschaften) und die Matrix **X** gespeichert werden. Ferner kann der Index n um eins erhöht werden, n = n+1.

In einem siebten Schritt 274 kann überprüft werden, ob eine optimale Anzahl $P_{Optimal}$ von Sprungmustern zur Verfügung steht.

Wenn keine eine optimale Anzahl $P_{Optimal}$ von Sprungmustern zur Verfügung steht, dann wird der dritte Schritt 266 wiederholt. Wenn eine optimale Anzahl $P_{Optimal}$ von Sprungmustern zur Verfügung steht, dann wird das Verfahren fortgesetzt.

In einem achten Schritt 276 wird ermittelt, ob ein weiterer Satz von Sprungmustern für einen anderen Parametersatz (z.B. einem anderen Oszillatoroffset) erzeugt werden soll. Wenn ja, dann wird der zweite Schritt 264 wiederholt. Wenn nein, dann wird das Verfahren fortgesetzt.

In einem neunten Schritt 278 werden die Kreuzkorrelationsfunktionen zwischen den Sprungmustern mit vorgegebenen Autokorrelationseigenschaften berechnet. Beispielsweise kann eine 2D-KKF-Berechnung $\Theta_{x,y}(f,t)$ erfolgen, die 2D-KKF-Werte in einem Vektor $v_{Sort}$ sortiert werden, die Teilsummen $SUM_{KKF} = Sum(v_{Sort}(end-v_{KKF}+1:end))$ berechnet werden, und die Teilsummen $SUM_{KKF}$ in einer Matrix $O_{vKKF}$ gespeichert werden.

In einem zehnten Schritt 280 kann n gleich eins und $GS_{Schwelle}$ auf eine große Schwelle, wie zum Beispiel $10^6$ gesetzt werden.

In einem elften Schritt 282 werden $P_{Auswahl}$ Sprungmuster neu und zufällig aus den $P_{Optimal}$ vorhandenen Sprungmustern ausgewählt. Hierzu werden $P_{Optimal}$ verschiedene Zahlen in zufälliger Reihenfolge herausgewürfelt, F = randperm(1: $P_{Optimal}$). Hiervon können die ersten $P_{Auswahl}$ davon ausgewählt werden, $Pattern_{Auswahl} = F(1: P_{Auswahl})$. Anhand des $Pattern_{Auswahl}$ kann dann die Gesamtsumme GS aus den einzelnen Teilsummen $SUM_{KKF}$, die in der Matrix $O_{vKKF}$ stehen, berechnet werden.

In einem zwölften Schritt 282 kann ermittelt werden, ob GS $\leq$ $GS_{Schwelle}$ ist. Wenn GS $\leq$ $GS_{Schwelle}$ nicht erfüllt ist, dann wird n um eins erhöht, n = n+1, und der elfte Schritt 282 wiederholt. Wenn GS $\leq$ $GS_{Schwelle}$ ist, dann wird die Schwelle $GS_{Schwelle}$ mit GS überschrieben und das Verfahren fortgesetzt.

In einem dreizehnten Schritt 286 kann das ausgewählte Sprungmuster gespeichert werden.

In einem vierzehnten Schritt 288 kann ermittelt werden ob, n $\geq$ Abbruch ist. Wenn n $\geq$ Abbruch nicht erfüllt ist, dann wird n um eins erhöht, n = n+1, und der elfte Schritt 282 wiederholt. Wenn n $\geq$ Abbruch erfüllt ist, dann ist das Verfahren beendet.

<u>2.2 Beispielhafte Sprungmuster für TSMA</u>

Im Folgenden werden beispielhafte zwei Sprungmuster beschrieben, die mit dem oben genannten Verfahren erzeugt wurden.

Sprungmuster 1

Ein erstes Sprungmuster ist eine Kombination aus einem Zeitsprungmuster und einem Frequenzsprungmuster für Knoten 100 mit einer Quarztoleranz von +/- 20 ppm oder besser, wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |

| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
|---|---|---|---|---|---|---|---|---|---|---|---|---|---|---|---|---|---|---|---|---|---|---|---|
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand einer Mitte des jeweiligen Sprungs zu einer Mitte eines unmittelbar darauffolgenden Sprungs in (vorzugsweise Vielfachen von) Symboldauern angibt;

wobei das Frequenzsprungmuster eines aus den in der folgenden Tabelle genannten acht Frequenzsprungmustern mit jeweils 24 Sprüngen ist:

| Muster Nummer | # von Sub-Datenpaketen im Kernrahmen $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern von UCG_C0 bis UCG_C23 angibt.

Sprungmuster 2

Ein zweites Sprungmuster ist eine Kombination aus einem Zeitsprungmuster und einem Frequenzsprungmuster für Knoten 100 mit einer Quarztoleranz von +/- 10 ppm oder besser, wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 489 | 373 | 319 | 500 | 373 | 319 | 482 | 373 | 319 | 637 | 373 | 319 | 342 | 373 | 319 | 346 | 373 | 319 | 405 | 373 | 319 |
| 2 | 373 | 319 | 505 | 373 | 319 | 545 | 373 | 319 | 403 | 373 | 319 | 412 | 373 | 319 | 420 | 373 | 319 | 446 | 373 | 319 | 393 | 373 | 319 |
| 3 | 373 | 319 | 349 | 373 | 319 | 349 | 373 | 319 | 443 | 373 | 319 | 649 | 373 | 319 | 629 | 373 | 319 | 344 | 373 | 319 | 354 | 373 | 319 |
| 4 | 373 | 319 | 507 | 373 | 319 | 426 | 373 | 319 | 658 | 373 | 319 | 601 | 373 | 319 | 364 | 373 | 319 | 345 | 373 | 319 | 342 | 373 | 319 |
| 5 | 373 | 319 | 430 | 373 | 319 | 375 | 373 | 319 | 427 | 373 | 319 | 476 | 373 | 319 | 632 | 373 | 319 | 557 | 373 | 319 | 349 | 373 | 319 |
| 6 | 373 | 319 | 485 | 373 | 319 | 357 | 373 | 319 | 611 | 373 | 319 | 438 | 373 | 319 | 372 | 373 | 319 | 460 | 373 | 319 | 417 | 373 | 319 |
| 7 | 373 | 319 | 620 | 373 | 319 | 490 | 373 | 319 | 402 | 373 | 319 | 517 | 373 | 319 | 353 | 373 | 319 | 366 | 373 | 319 | 345 | 373 | 319 |
| 8 | 373 | 319 | 353 | 373 | 319 | 341 | 373 | 319 | 634 | 373 | 319 | 556 | 373 | 319 | 646 | 373 | 319 | 341 | 373 | 319 | 364 | 373 | 319 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand einer Mitte des jeweiligen Sprungs zu einer Mitte eines unmittelbar darauffolgenden Sprungs in (vorzugsweise Vielfachen von) Symboldauern angibt;

wobei das Frequenzsprungmuster eines aus den in der folgenden Tabelle genannten acht Frequenzsprungmustern mit jeweils 24 Sprüngen ist:

| Muster Nummer | # von Sub-Datenpaketen im Kernrahmen $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 24 | 14 | 8 | 28 | 18 | 9 | 29 | 19 | 3 | 23 | 13 | 7 | 27 | 17 | 0 | 20 | 10 | 6 | 26 | 16 | 5 | 25 | 15 |
| 2 | 2 | 22 | 12 | 0 | 20 | 10 | 7 | 27 | 17 | 8 | 28 | 18 | 1 | 21 | 11 | 4 | 24 | 14 | 9 | 29 | 19 | 6 | 26 | 16 |
| 3 | 0 | 20 | 10 | 6 | 26 | 16 | 4 | 24 | 14 | 3 | 23 | 13 | 2 | 22 | 12 | 5 | 25 | 15 | 9 | 29 | 19 | 1 | 21 | 11 |
| 4 | 7 | 27 | 17 | 4 | 24 | 14 | 2 | 22 | 12 | 8 | 28 | 18 | 1 | 21 | 11 | 9 | 29 | 19 | 6 | 26 | 16 | 0 | 20 | 10 |
| 5 | 3 | 23 | 13 | 2 | 22 | 12 | 8 | 28 | 18 | 5 | 25 | 15 | 0 | 20 | 10 | 7 | 27 | 17 | 6 | 26 | 16 | 1 | 21 | 11 |
| 6 | 1 | 21 | 11 | 3 | 23 | 13 | 8 | 28 | 18 | 9 | 29 | 19 | 2 | 22 | 12 | 5 | 25 | 15 | 0 | 20 | 10 | 7 | 27 | 17 |
| 7 | 6 | 26 | 16 | 7 | 27 | 17 | 9 | 29 | 19 | 4 | 24 | 14 | 0 | 20 | 10 | 3 | 23 | 13 | 8 | 28 | 18 | 5 | 25 | 15 |
| 8 | 1 | 21 | 11 | 7 | 27 | 17 | 3 | 23 | 13 | 9 | 29 | 19 | 4 | 24 | 14 | 6 | 26 | 16 | 8 | 28 | 18 | 0 | 20 | 10 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern von UCG_C0 bis UCG_29 angibt.

Sprungmuster 3

Ein erstes Sprungmuster ist eine Kombination aus einem Zeitsprungmuster und einem Frequenzsprungmuster für Knoten 100 mit einer Quarztoleranz von +/- 20 ppm oder besser, wobei das Zeitsprungmuster eines aus den in der folgenden Tabelle genannten acht Zeitsprungmuster mit jeweils 18 Sprüngen ist:

# von Sub-Datenpaketen im Kernrahmen $S_C$

| Muster Nummer r | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| 1 | 47 1 | 59 5 | 59 4 | 49 6 | 54 5 | 44 5 | 44 0 | 53 5 | 60 1 | 52 2 | 43 0 | 54 5 | 51 9 | 43 9 | 48 4 | 43 8 | 60 5 |
| 2 | 51 2 | 42 4 | 64 9 | 44 7 | 55 0 | 61 1 | 62 4 | 41 8 | 50 1 | 46 4 | 60 6 | 50 9 | 63 6 | 44 3 | 46 5 | 43 4 | 43 1 |
| 3 | 62 5 | 54 8 | 54 0 | 43 4 | 52 0 | 55 9 | 48 8 | 53 1 | 50 1 | 46 5 | 45 9 | 42 8 | 44 4 | 45 9 | 50 5 | 45 9 | 63 3 |
| 4 | 45 7 | 48 9 | 61 2 | 45 0 | 45 7 | 44 0 | 56 7 | 53 8 | 51 6 | 51 4 | 54 0 | 47 4 | 59 2 | 44 5 | 57 7 | 44 4 | 49 3 |
| 5 | 48 8 | 64 3 | 62 6 | 54 1 | 56 0 | 55 0 | 45 0 | 47 5 | 52 0 | 45 6 | 61 8 | 44 7 | 45 5 | 44 0 | 45 5 | 51 0 | 47 7 |
| 6 | 54 8 | 44 4 | 45 9 | 52 9 | 45 3 | 52 5 | 44 0 | 55 3 | 58 3 | 52 7 | 52 0 | 46 1 | 57 5 | 45 7 | 46 4 | 53 3 | 42 1 |
| 7 | 46 1 | 60 7 | 50 1 | 53 4 | 50 5 | 56 9 | 56 1 | 47 2 | 50 9 | 45 0 | 55 5 | 44 0 | 42 3 | 49 4 | 44 8 | 52 5 | 48 5 |
| 8 | 57 7 | 61 1 | 46 4 | 55 2 | 45 1 | 50 8 | 47 8 | 43 8 | 44 3 | 50 7 | 42 0 | 55 3 | 52 0 | 57 6 | 58 0 | 56 4 | 40 4 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 18 Sprünge aufweist, wobei in der Tabelle jede Zelle einen zeitlichen Abstand einer Mitte des jeweiligen Sprungs zu einer Mitte eines unmittelbar darauffolgenden Sprungs in (vorzugsweise Vielfachen von) Symboldauern angibt;

wobei das Frequenzsprungmuster eines aus den in der folgenden Tabelle genannten acht Frequenzsprungmustern mit jeweils 18 Sprüngen ist:

| Muster Nummer | # von Sub-Datenpaketen im Kernrahmen $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 19 | 18 | 12 | 21 | 15 | 14 | 22 | 2 | 5 | 10 | 17 | 6 | 8 | 4 | 7 | 20 | 13 | 0 |
| 2 | 10 | 4 | 1 | 7 | 23 | 6 | 3 | 8 | 17 | 2 | 18 | 9 | 22 | 14 | 11 | 16 | 5 | 21 |
| 3 | 0 | 16 | 11 | 20 | 9 | 13 | 23 | 21 | 2 | 19 | 1 | 15 | 3 | 7 | 12 | 4 | 22 | 6 |
| 4 | 14 | 9 | 0 | 15 | 7 | 5 | 8 | 18 | 1 | 12 | 19 | 23 | 17 | 16 | 10 | 2 | 13 | 11 |
| 5 | 6 | 12 | 19 | 10 | 4 | 22 | 13 | 17 | 11 | 5 | 23 | 3 | 1 | 8 | 14 | 0 | 9 | 20 |
| 6 | 16 | 20 | 3 | 5 | 21 | 10 | 17 | 1 | 12 | 18 | 15 | 11 | 0 | 9 | 2 | 14 | 6 | 8 |
| 7 | 15 | 0 | 8 | 18 | 9 | 23 | 11 | 20 | 14 | 3 | 16 | 22 | 19 | 13 | 7 | 21 | 12 | 4 |
| 8 | 4 | 7 | 16 | 22 | 13 | 19 | 2 | 3 | 6 | 15 | 10 | 20 | 23 | 5 | 21 | 17 | 18 | 1 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern von UCG_C0 bis UCG_23 angibt.

Sprungmuster 4

Ein zweites Sprungmuster ist eine Kombination aus einem Zeitsprungmuster und einem Frequenzsprungmuster für Knoten 100 mit einer Quarztoleranz von +/- 10 ppm oder besser, wobei das Zeitsprungmuster eines aus den in der folgenden Tabelle genannten acht Zeitsprungmuster mit jeweils 18 Sprüngen ist:

# von Sub-Datenpaketen im Kernrahmen $S_C$

| Muster Nummer r | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| 1 | 44 2 | 45 5 | 58 6 | 52 0 | 43 6 | 48 5 | 50 6 | 44 6 | 59 0 | 45 9 | 63 7 | 46 6 | 59 7 | 44 5 | 47 1 | 41 9 | 54 7 |
| 2 | 44 7 | 59 4 | 45 9 | 51 2 | 57 7 | 49 0 | 51 0 | 50 0 | 57 6 | 58 1 | 51 2 | 44 1 | 48 3 | 50 7 | 46 7 | 44 7 | 61 2 |
| 3 | 52 5 | 44 6 | 42 8 | 45 0 | 43 4 | 44 5 | 45 7 | 56 3 | 47 0 | 53 7 | 52 9 | 52 7 | 53 7 | 51 3 | 42 8 | 52 5 | 62 0 |
| 4 | 62 6 | 46 7 | 45 0 | 54 4 | 56 4 | 50 5 | 45 0 | 64 5 | 45 7 | 42 3 | 43 3 | 43 9 | 55 9 | 54 7 | 44 9 | 64 1 | 50 8 |
| 5 | 59 0 | 59 2 | 42 3 | 54 4 | 44 4 | 55 3 | 47 5 | 43 1 | 45 2 | 55 1 | 45 4 | 45 9 | 45 0 | 51 2 | 49 9 | 53 2 | 44 7 |
| 6 | 47 6 | 42 0 | 51 6 | 42 2 | 55 8 | 48 3 | 47 4 | 46 2 | 47 4 | 45 8 | 52 9 | 59 6 | 56 2 | 41 9 | 41 7 | 60 0 | 63 4 |
| 7 | 50 0 | 46 2 | 60 1 | 48 4 | 55 6 | 59 1 | 42 3 | 42 9 | 54 0 | 52 3 | 53 0 | 60 6 | 58 9 | 45 9 | 41 5 | 41 9 | 60 6 |
| 8 | 42 2 | 47 3 | 45 8 | 53 5 | 42 0 | 42 3 | 50 2 | 42 5 | 60 2 | 47 2 | 55 5 | 65 0 | 50 9 | 57 9 | 59 5 | 51 0 | 56 8 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 18 Sprünge aufweist, wobei in der Tabelle jede Zelle einen zeitlichen Abstand einer Mitte des jeweiligen Sprungs zu einer Mitte eines unmittelbar darauffolgenden Sprungs in (vorzugsweise Vielfachen von) Symboldauern angibt;

wobei das Frequenzsprungmuster eines aus den in der folgenden Tabelle genannten acht Frequenzsprungmustern mit jeweils 18 Sprüngen ist:

| Muster Nummer | # von Sub-Datenpaketen im Kernrahmen $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 2 | 14 | 16 | 18 | 0 | 26 | 21 | 9 | 6 | 28 | 5 | 24 | 22 | 29 | 17 | 27 | 13 | 12 |
| 2 | 23 | 7 | 19 | 15 | 8 | 3 | 1 | 11 | 10 | 20 | 25 | 4 | 6 | 9 | 14 | 17 | 5 | 0 |
| 3 | 10 | 23 | 11 | 2 | 25 | 22 | 4 | 24 | 27 | 8 | 16 | 15 | 1 | 18 | 28 | 7 | 21 | 26 |
| 4 | 12 | 13 | 29 | 20 | 3 | 19 | 26 | 15 | 1 | 21 | 27 | 6 | 17 | 14 | 4 | 2 | 25 | 7 |
| 5 | 19 | 22 | 12 | 13 | 11 | 28 | 23 | 18 | 16 | 0 | 10 | 24 | 3 | 5 | 29 | 20 | 8 | 9 |
| 6 | 16 | 12 | 18 | 25 | 19 | 23 | 20 | 4 | 5 | 6 | 9 | 27 | 21 | 10 | 15 | 28 | 24 | 13 |
| 7 | 14 | 29 | 26 | 11 | 22 | 2 | 0 | 1 | 7 | 3 | 8 | 9 | 23 | 4 | 27 | 16 | 15 | 17 |
| 8 | 0 | 24 | 28 | 3 | 29 | 5 | 14 | 8 | 18 | 22 | 20 | 17 | 10 | 6 | 26 | 11 | 21 | 12 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern von UCG_C0 bis UCG_29 angibt.

Findet allgemein eine Angabe eines Sprungs in Vielfachen von Symboldauern statt, so bezieht sich dies vorzugsweise auf ein ganzzahliges Vielfaches der Symboldauern oder auf einen Bruchteil einer Symboldauer.

## 3. Weitere Ausführungsbeispiele

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Abkürzungsverzeichnis

| | |
|---|---|
| $C$: | Anzahl der Bursts die ein Cluster bilden |
| $L$: | Anzahl der zur Verfügung stehender Frequenzbänder |
| $N$: | Anzahl der Bursts aus denen ein Frame besteht |
| $N_{Schwelle}$ | Amplitudenschwellwert bei der AKF-Kandidatenerzeugung |

| $P_{Auswahl}$ | Anzahl der bzgl. 2D-AKF und KKF-Eigenschaften optimierenden Sprungmuster |
|---|---|
| S: | Anzahl der Frequenzbänder die aufgrund von Oszillator-Frequenzfehler als Sicherheitsstreifen keine Bursts beinhalten dürfen |
| $T_A$: | Abtastrate der Zeitachse |
| $T_{Burst}$: | Zeitdauer eines Bursts |
| $T_{Frame}$: | Zeitdauer eines Frames |
| TSMA: | Telegram Splitting Multiple Access |
| TSMA pattern: | Sprungmuster eines Frames im Zeit- und Frequenzbereich |
| **X** | Matrix mit Zeit- und Frequenzinformation der Sprungmuster |
| $\Theta_{x,x}$ | 2D-Autokorrelationsfunktion (2D-AKF) |
| $\Theta_{x,y}$ | 2D-Kreuzkorrelationsfunktion (2D-KKF) |

**Patentansprüche**

**1.** Verfahren zum Senden eines Signals von einem Datensender zu einem Datenempfänger, wobei das Verfahren aufweist:

Senden eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;
wobei das Frequenzsprungmuster eines aus den in der folgenden Tabelle genannten acht Frequenzsprungmustern mit jeweils 24 Sprüngen ist:

| Muster Nummer | # von Sub-Datenpaketen im Kernrahmen $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern (UCG_C0-UCG_C23) angibt,
wobei das Signal von einem Knoten gesendet wird, der eine Quarztoleranz von +/- 20 ppm oder besser aufweist.

**2.** Verfahren zum Senden eines Signals von einem Datensender zu einem Datenempfänger, wobei das Verfahren aufweist:

Senden eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 489 | 373 | 319 | 500 | 373 | 319 | 482 | 373 | 319 | 637 | 373 | 319 | 342 | 373 | 319 | 346 | 373 | 319 | 405 | 373 | 319 |
| 2 | 373 | 319 | 505 | 373 | 319 | 545 | 373 | 319 | 403 | 373 | 319 | 412 | 373 | 319 | 420 | 373 | 319 | 446 | 373 | 319 | 393 | 373 | 319 |
| 3 | 373 | 319 | 349 | 373 | 319 | 349 | 373 | 319 | 443 | 373 | 319 | 649 | 373 | 319 | 629 | 373 | 319 | 344 | 373 | 319 | 354 | 373 | 319 |
| 4 | 373 | 319 | 507 | 373 | 319 | 426 | 373 | 319 | 658 | 373 | 319 | 601 | 373 | 319 | 364 | 373 | 319 | 345 | 373 | 319 | 342 | 373 | 319 |
| 5 | 373 | 319 | 430 | 373 | 319 | 375 | 373 | 319 | 427 | 373 | 319 | 476 | 373 | 319 | 632 | 373 | 319 | 557 | 373 | 319 | 349 | 373 | 319 |
| 6 | 373 | 319 | 485 | 373 | 319 | 357 | 373 | 319 | 611 | 373 | 319 | 438 | 373 | 319 | 372 | 373 | 319 | 460 | 373 | 319 | 417 | 373 | 319 |
| 7 | 373 | 319 | 620 | 373 | 319 | 490 | 373 | 319 | 402 | 373 | 319 | 517 | 373 | 319 | 353 | 373 | 319 | 366 | 373 | 319 | 345 | 373 | 319 |
| 8 | 373 | 319 | 353 | 373 | 319 | 341 | 373 | 319 | 634 | 373 | 319 | 556 | 373 | 319 | 646 | 373 | 319 | 341 | 373 | 319 | 364 | 373 | 319 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;
wobei das Frequenzsprungmuster eines aus den in der folgenden Tabelle genannten acht Frequenzsprungmustern mit jeweils 24 Sprüngen ist:

| Muster Nummer | # von Sub-Datenpaketen im Kernrahmen $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 24 | 14 | 8 | 28 | 18 | 9 | 29 | 19 | 3 | 23 | 13 | 7 | 27 | 17 | 0 | 20 | 10 | 6 | 26 | 16 | 5 | 25 | 15 |
| 2 | 2 | 22 | 12 | 0 | 20 | 10 | 7 | 27 | 17 | 8 | 28 | 18 | 1 | 21 | 11 | 4 | 24 | 14 | 9 | 29 | 19 | 6 | 26 | 16 |
| 3 | 0 | 20 | 10 | 6 | 26 | 16 | 4 | 24 | 14 | 3 | 23 | 13 | 2 | 22 | 12 | 5 | 25 | 15 | 9 | 29 | 19 | 1 | 21 | 11 |
| 4 | 7 | 27 | 17 | 4 | 24 | 14 | 2 | 22 | 12 | 8 | 28 | 18 | 1 | 21 | 11 | 9 | 29 | 19 | 6 | 26 | 16 | 0 | 20 | 10 |
| 5 | 3 | 23 | 13 | 2 | 22 | 12 | 8 | 28 | 18 | 5 | 25 | 15 | 0 | 20 | 10 | 7 | 27 | 17 | 6 | 26 | 16 | 1 | 21 | 11 |
| 6 | 1 | 21 | 11 | 3 | 23 | 13 | 8 | 28 | 18 | 9 | 29 | 19 | 2 | 22 | 12 | 5 | 25 | 15 | 0 | 20 | 10 | 7 | 27 | 17 |
| 7 | 6 | 26 | 16 | 7 | 27 | 17 | 9 | 29 | 19 | 4 | 24 | 14 | 0 | 20 | 10 | 3 | 23 | 13 | 8 | 28 | 18 | 5 | 25 | 15 |
| 8 | 1 | 21 | 11 | 7 | 27 | 17 | 3 | 23 | 13 | 9 | 29 | 19 | 4 | 24 | 14 | 6 | 26 | 16 | 8 | 28 | 18 | 0 | 20 | 10 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern (UCG_C0-UCG_C29) angibt,
wobei das Signal von einem Knoten gesendet wird, der eine Quarztoleranz von +/- 10 ppm oder besser aufweist.

3. Verfahren nach einem der vorangehenden Ansprüche 1 bis 2, wobei ein Datenpaket aufgeteilt in eine Mehrzahl von Sub-Datenpakete entsprechend des Sprungmusters gesendet wird, so dass in jedem Sprung des Sprungmusters ein Sub-Datenpaket der Mehrzahl von Sub-Datenpakete gesendet wird.

4. Verfahren nach einem der vorangehenden Ansprüche 1 bis 3, wobei das Sprungmuster eine Kombination des Zeitsprungmusters und des Frequenzsprungmusters ist, wobei das Zeitsprungmuster und das Frequenzsprungmuster in der jeweiligen Tabelle die gleiche Zeilennummer aufweisen.

5. Verfahren zum Empfangen eines Signals mit einem Datenempfänger, wobei das Verfahren aufweist:

Empfangen eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;

wobei das Frequenzsprungmuster eines aus den in der folgenden Tabelle genannten acht Frequenzsprungmustern mit jeweils 24 Sprüngen ist:

| Muster Nummer | # von Sub-Datenpaketen im Kernrahmen $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern (UCG_C0-UCG_C23) angibt, wobei das Signal von einem Knoten empfangen wird, der eine Quarztoleranz von +/-20 ppm oder besser aufweist.

6. Verfahren zum Empfangen eines Signals mit einem Datenempfänger, wobei das Verfahren aufweist:

Empfangen eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 24 Sprüngen ist:

| Nr. | # von Sub-Datenpaketen im Kernrahmen $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 489 | 373 | 319 | 500 | 373 | 319 | 482 | 373 | 319 | 637 | 373 | 319 | 342 | 373 | 319 | 346 | 373 | 319 | 405 | 373 | 319 |
| 2 | 373 | 319 | 505 | 373 | 319 | 545 | 373 | 319 | 403 | 373 | 319 | 412 | 373 | 319 | 420 | 373 | 319 | 446 | 373 | 319 | 393 | 373 | 319 |
| 3 | 373 | 319 | 349 | 373 | 319 | 349 | 373 | 319 | 443 | 373 | 319 | 649 | 373 | 319 | 629 | 373 | 319 | 344 | 373 | 319 | 354 | 373 | 319 |
| 4 | 373 | 319 | 507 | 373 | 319 | 426 | 373 | 319 | 658 | 373 | 319 | 601 | 373 | 319 | 364 | 373 | 319 | 345 | 373 | 319 | 342 | 373 | 319 |
| 5 | 373 | 319 | 430 | 373 | 319 | 375 | 373 | 319 | 427 | 373 | 319 | 476 | 373 | 319 | 632 | 373 | 319 | 557 | 373 | 319 | 349 | 373 | 319 |
| 6 | 373 | 319 | 485 | 373 | 319 | 357 | 373 | 319 | 611 | 373 | 319 | 438 | 373 | 319 | 372 | 373 | 319 | 460 | 373 | 319 | 417 | 373 | 319 |
| 7 | 373 | 319 | 620 | 373 | 319 | 490 | 373 | 319 | 402 | 373 | 319 | 517 | 373 | 319 | 353 | 373 | 319 | 366 | 373 | 319 | 345 | 373 | 319 |
| 8 | 373 | 319 | 353 | 373 | 319 | 341 | 373 | 319 | 634 | 373 | 319 | 556 | 373 | 319 | 646 | 373 | 319 | 341 | 373 | 319 | 364 | 373 | 319 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 24 Sprünge aufweist, wobei in der Tabelle jede Zelle einen zeitlichen Abstand eines Referenzpunkts des jeweiligen Sprungs zu einem gleichen Referenzpunkt eines unmittelbar vorangehenden Sprungs in Symboldauern oder Vielfachen von Symboldauern angibt;
wobei das Frequenzsprungmuster eines aus den in der folgenden Tabelle genannten acht Frequenzsprungmustern mit jeweils 24 Sprüngen ist:

| Muster Nummer | # von Sub-Datenpaketen im Kernrahmen $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 24 | 14 | 8 | 28 | 18 | 9 | 29 | 19 | 3 | 23 | 13 | 7 | 27 | 17 | 0 | 20 | 10 | 6 | 26 | 16 | 5 | 25 | 15 |
| 2 | 2 | 22 | 12 | 0 | 20 | 10 | 7 | 27 | 17 | 8 | 28 | 18 | 1 | 21 | 11 | 4 | 24 | 14 | 9 | 29 | 19 | 6 | 26 | 16 |
| 3 | 0 | 20 | 10 | 6 | 26 | 16 | 4 | 24 | 14 | 3 | 23 | 13 | 2 | 22 | 12 | 5 | 25 | 15 | 9 | 29 | 19 | 1 | 21 | 11 |
| 4 | 7 | 27 | 17 | 4 | 24 | 14 | 2 | 22 | 12 | 8 | 28 | 18 | 1 | 21 | 11 | 9 | 29 | 19 | 6 | 26 | 16 | 0 | 20 | 10 |
| 5 | 3 | 23 | 13 | 2 | 22 | 12 | 8 | 28 | 18 | 5 | 25 | 15 | 0 | 20 | 10 | 7 | 27 | 17 | 6 | 26 | 16 | 1 | 21 | 11 |
| 6 | 1 | 21 | 11 | 3 | 23 | 13 | 8 | 28 | 18 | 9 | 29 | 19 | 2 | 22 | 12 | 5 | 25 | 15 | 0 | 20 | 10 | 7 | 27 | 17 |
| 7 | 6 | 26 | 16 | 7 | 27 | 17 | 9 | 29 | 19 | 4 | 24 | 14 | 0 | 20 | 10 | 3 | 23 | 13 | 8 | 28 | 18 | 5 | 25 | 15 |
| 8 | 1 | 21 | 11 | 7 | 27 | 17 | 3 | 23 | 13 | 9 | 29 | 19 | 4 | 24 | 14 | 6 | 26 | 16 | 8 | 28 | 18 | 0 | 20 | 10 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern (UCG_C0-UCG_C29) angibt,
wobei das Signal von einem Knoten empfangen wird, der eine Quarztoleranz von +/-10 ppm oder besser aufweist.

7. Verfahren zum Senden eines Signals von einem Datensender zu einem Datenempfänger, wobei das Verfahren aufweist:

Senden eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 18 Sprüngen ist:

| Muster Nummer | # von Sub-Datenpaketen im Kernrahmen $S_C$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 471 | 595 | 594 | 496 | 545 | 445 | 440 | 535 | 601 | 522 | 430 | 545 | 519 | 439 | 484 | 438 | 605 |
| 2 | 512 | 424 | 649 | 447 | 550 | 611 | 624 | 418 | 501 | 464 | 606 | 509 | 636 | 443 | 465 | 434 | 431 |
| 3 | 625 | 548 | 540 | 434 | 520 | 559 | 488 | 531 | 501 | 465 | 459 | 428 | 444 | 459 | 505 | 459 | 633 |
| 4 | 457 | 489 | 612 | 450 | 457 | 440 | 567 | 538 | 516 | 514 | 540 | 474 | 592 | 445 | 577 | 444 | 493 |
| 5 | 488 | 643 | 626 | 541 | 560 | 550 | 450 | 475 | 520 | 456 | 618 | 447 | 455 | 440 | 455 | 510 | 477 |
| 6 | 548 | 444 | 459 | 529 | 453 | 525 | 440 | 553 | 583 | 527 | 520 | 461 | 575 | 457 | 464 | 533 | 421 |
| 7 | 461 | 607 | 501 | 534 | 505 | 569 | 561 | 472 | 509 | 450 | 555 | 440 | 423 | 494 | 448 | 525 | 485 |
| 8 | 577 | 611 | 464 | 552 | 451 | 508 | 478 | 438 | 443 | 507 | 420 | 553 | 520 | 576 | 580 | 564 | 404 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 18 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;

wobei das Frequenzsprungmuster eines aus den in der folgenden Tabelle genannten acht Frequenzsprungmustern mit jeweils 18 Sprüngen ist:

| Muster Nummer | # von Sub-Datenpaketen im Kernrahmen $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 19 | 18 | 12 | 21 | 15 | 14 | 22 | 2 | 5 | 10 | 17 | 6 | 8 | 4 | 7 | 20 | 13 | 0 |
| 2 | 10 | 4 | 1 | 7 | 23 | 6 | 3 | 8 | 17 | 2 | 18 | 9 | 22 | 14 | 11 | 16 | 5 | 21 |
| 3 | 0 | 16 | 11 | 20 | 9 | 13 | 23 | 21 | 2 | 19 | 1 | 15 | 3 | 7 | 12 | 4 | 22 | 6 |
| 4 | 14 | 9 | 0 | 15 | 7 | 5 | 8 | 18 | 1 | 12 | 19 | 23 | 17 | 16 | 10 | 2 | 13 | 11 |
| 5 | 6 | 12 | 19 | 10 | 4 | 22 | 13 | 17 | 11 | 5 | 23 | 3 | 1 | 8 | 14 | 0 | 9 | 20 |
| 6 | 16 | 20 | 3 | 5 | 21 | 10 | 17 | 1 | 12 | 18 | 15 | 11 | 0 | 9 | 2 | 14 | 6 | 8 |
| 7 | 15 | 0 | 8 | 18 | 9 | 23 | 11 | 20 | 14 | 3 | 16 | 22 | 19 | 13 | 7 | 21 | 12 | 4 |
| 8 | 4 | 7 | 16 | 22 | 13 | 19 | 2 | 3 | 6 | 15 | 10 | 20 | 23 | 5 | 21 | 17 | 18 | 1 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle eine Sendefrequenz des jeweiligen Sprungs des jeweiligen Frequenzsprungmusters in Trägern (UCG_C0-UCG_C23) angibt, wobei das Signal von einem Knoten gesendet wird, der eine Quarztoleranz von +/- 20 ppm oder besser aufweist.

8. Verfahren zum Senden eines Signals von einem Datensender zu einem Datenempfänger, wobei das Verfahren aufweist:

Senden eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 18 Sprüngen ist:

| Muster Nummer | # von Sub-Datenpaketen im Kernrahmen $S_C$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 442 | 455 | 586 | 520 | 436 | 485 | 506 | 446 | 590 | 459 | 637 | 466 | 597 | 445 | 471 | 419 | 547 |
| 2 | 447 | 594 | 459 | 512 | 577 | 490 | 510 | 500 | 576 | 581 | 512 | 441 | 483 | 507 | 467 | 447 | 612 |
| 3 | 525 | 446 | 428 | 450 | 434 | 445 | 457 | 563 | 470 | 537 | 529 | 527 | 537 | 513 | 428 | 525 | 620 |
| 4 | 626 | 467 | 450 | 544 | 564 | 505 | 450 | 645 | 457 | 423 | 433 | 439 | 559 | 547 | 449 | 641 | 508 |
| 5 | 590 | 592 | 423 | 544 | 444 | 553 | 475 | 431 | 452 | 551 | 454 | 459 | 450 | 512 | 499 | 532 | 447 |
| 6 | 476 | 420 | 516 | 422 | 558 | 483 | 474 | 462 | 474 | 458 | 529 | 596 | 562 | 419 | 417 | 600 | 634 |
| 7 | 500 | 462 | 601 | 484 | 556 | 591 | 423 | 429 | 540 | 523 | 530 | 606 | 589 | 459 | 415 | 419 | 606 |
| 8 | 422 | 473 | 458 | 535 | 420 | 423 | 502 | 425 | 602 | 472 | 555 | 650 | 509 | 579 | 595 | 510 | 568 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 18 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;

wobei das Frequenzsprungmuster eines aus den in der folgenden Tabelle genannten acht Frequenzsprungmustern mit jeweils 18 Sprüngen ist:

| Muster Nummer | # von Sub-Datenpaketen im Kernrahmen $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 116 | 17 | 18 |
| 1 | 2 | 14 | 16 | 18 | 0 | 26 | 21 | 9 | 6 | 28 | 5 | 24 | 22 | 29 | 17 | 27 | 13 | 12 |
| 2 | 23 | 7 | 19 | 15 | 8 | 3 | 1 | 11 | 10 | 20 | 25 | 4 | 6 | 9 | 14 | 17 | 5 | 0 |
| 3 | 10 | 23 | 11 | 2 | 25 | 22 | 4 | 24 | 27 | 8 | 16 | 15 | 1 | 18 | 28 | 7 | 21 | 26 |
| 4 | 12 | 13 | 29 | 20 | 3 | 19 | 26 | 15 | 1 | 21 | 27 | 6 | 17 | 14 | 4 | 2 | 25 | 7 |
| 5 | 19 | 22 | 12 | 13 | 11 | 28 | 23 | 18 | 16 | 0 | 10 | 24 | 3 | 5 | 29 | 20 | 8 | 9 |
| 6 | 16 | 12 | 18 | 25 | 19 | 23 | 20 | 4 | 5 | 6 | 9 | 27 | 21 | 10 | 15 | 28 | 24 | 13 |
| 7 | 14 | 29 | 26 | 11 | 22 | 2 | 0 | 1 | 7 | 3 | 8 | 9 | 23 | 4 | 27 | 16 | 15 | 17 |
| 8 | 0 | 24 | 28 | 3 | 29 | 5 | 14 | 8 | 18 | 22 | 20 | 17 | 10 | 6 | 26 | 11 | 21 | 12 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern (UCG_C0-UCG_C29) angibt, wobei das Signal von einem Knoten gesendet wird, der eine Quarztoleranz von +/- 10 ppm oder besser aufweist.

9. Verfahren nach einem der vorangehenden Ansprüche 7 bis 8, wobei ein Datenpaket aufgeteilt in eine Mehrzahl von Sub-Datenpakete entsprechend des Sprungmusters gesendet wird, so dass in jedem Sprung des Sprungmusters ein Sub-Datenpaket der Mehrzahl von Sub-Datenpakete gesendet wird.

10. Verfahren nach einem der vorangehenden Ansprüche 7 bis 9, wobei das Sprungmuster eine Kombination des Zeitsprungmusters und des Frequenzsprungmusters ist, wobei das Zeitsprungmuster und das Frequenzsprungmuster in der jeweiligen Tabelle die gleiche Zeilennummer aufweisen.

11. Verfahren zum Empfangen eines Signals mit einem Datenempfänger, wobei das Verfahren aufweist:

Empfangen eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 18 Sprüngen ist:

# von Sub-Datenpaketen im Kernrahmen $S_C$

| Muster Nummer | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| 1 | 471 | 595 | 594 | 496 | 545 | 445 | 440 | 535 | 601 | 522 | 430 | 545 | 519 | 439 | 484 | 438 | 605 |
| 2 | 512 | 424 | 649 | 447 | 550 | 611 | 624 | 418 | 501 | 464 | 606 | 509 | 636 | 443 | 465 | 434 | 431 |
| 3 | 625 | 548 | 540 | 434 | 520 | 559 | 488 | 531 | 501 | 465 | 459 | 428 | 444 | 459 | 505 | 459 | 633 |
| 4 | 457 | 489 | 612 | 450 | 457 | 440 | 567 | 538 | 516 | 514 | 540 | 474 | 592 | 445 | 577 | 444 | 493 |
| 5 | 488 | 643 | 626 | 541 | 560 | 550 | 450 | 475 | 520 | 456 | 618 | 447 | 455 | 440 | 455 | 510 | 477 |
| 6 | 548 | 444 | 459 | 529 | 453 | 525 | 440 | 553 | 583 | 527 | 520 | 461 | 575 | 457 | 464 | 533 | 421 |
| 7 | 461 | 607 | 501 | 534 | 505 | 569 | 561 | 472 | 509 | 450 | 555 | 440 | 423 | 494 | 448 | 525 | 485 |
| 8 | 577 | 611 | 464 | 552 | 451 | 508 | 478 | 438 | 443 | 507 | 420 | 553 | 520 | 576 | 580 | 564 | 404 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 18 Sprünge aufweist, wobei in der Tabelle jede Zelle einen zeitlichen Abstand eines Referenzpunkts des jeweiligen Sprungs zu einem gleichen Referenzpunkt eines unmittelbar darauffolgenden Sprungs in Symboldauern oder Vielfachen von Symboldauern angibt;

wobei das Frequenzsprungmuster eines aus den in der folgenden Tabelle genannten acht Frequenzsprungmustern mit jeweils 18 Sprüngen ist:

| Muster Nummer | # von Sub-Datenpaketen im Kernrahmen $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 19 | 18 | 12 | 21 | 15 | 14 | 22 | 2 | 5 | 10 | 17 | 6 | 8 | 4 | 7 | 20 | 13 | 0 |
| 2 | 10 | 4 | 1 | 7 | 23 | 6 | 3 | 8 | 17 | 2 | 18 | 9 | 22 | 14 | 11 | 16 | 5 | 21 |
| 3 | 0 | 16 | 11 | 20 | 9 | 13 | 23 | 21 | 2 | 19 | 1 | 15 | 3 | 7 | 12 | 4 | 22 | 6 |
| 4 | 14 | 9 | 0 | 15 | 7 | 5 | 8 | 18 | 1 | 12 | 19 | 23 | 17 | 16 | 10 | 2 | 13 | 11 |
| 5 | 6 | 12 | 19 | 10 | 4 | 22 | 13 | 17 | 11 | 5 | 23 | 3 | 1 | 8 | 14 | 0 | 9 | 20 |
| 6 | 16 | 20 | 3 | 5 | 21 | 10 | 17 | 1 | 12 | 18 | 15 | 11 | 0 | 9 | 2 | 14 | 6 | 8 |
| 7 | 15 | 0 | 8 | 18 | 9 | 23 | 11 | 20 | 14 | 3 | 16 | 22 | 19 | 13 | 7 | 21 | 12 | 4 |
| 8 | 4 | 7 | 16 | 22 | 13 | 19 | 2 | 3 | 6 | 15 | 10 | 20 | 23 | 5 | 21 | 17 | 18 | 1 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern (UCG_C0-UCG_C23) angibt,

wobei das Signal von einem Knoten empfangen wird, der eine Quarztoleranz von +/-20 ppm oder besser aufweist.

**12.** Verfahren zum Empfangen eines Signals mit einem Datenempfänger, wobei das Verfahren aufweist:

Empfangen eines Signals mit einem Sprungmuster;
wobei das Sprungmuster ein Zeitsprungmuster, ein Frequenzsprungmuster oder eine Kombination aus dem Zeitsprungmuster und dem Frequenzsprungmuster ist;
wobei das Zeitsprungmuster eines aus den in der folgenden Tabelle genannten acht Zeitsprungmuster mit jeweils 18 Sprüngen ist:

# von Sub-Datenpaketen im Kernrahmen $S_C$

| Muster Nummer | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| 1 | 442 | 455 | 586 | 520 | 436 | 485 | 506 | 446 | 590 | 459 | 637 | 466 | 597 | 445 | 471 | 419 | 547 |
| 2 | 447 | 594 | 459 | 512 | 577 | 490 | 510 | 500 | 576 | 581 | 512 | 441 | 483 | 507 | 467 | 447 | 612 |
| 3 | 525 | 446 | 428 | 450 | 434 | 445 | 457 | 563 | 470 | 537 | 529 | 527 | 537 | 513 | 428 | 525 | 620 |
| 4 | 626 | 467 | 450 | 544 | 564 | 505 | 450 | 645 | 457 | 423 | 433 | 439 | 559 | 547 | 449 | 641 | 508 |
| 5 | 590 | 592 | 423 | 544 | 444 | 553 | 475 | 431 | 452 | 551 | 454 | 459 | 450 | 512 | 499 | 532 | 447 |
| 6 | 476 | 420 | 516 | 422 | 558 | 483 | 474 | 462 | 474 | 458 | 529 | 596 | 562 | 419 | 417 | 600 | 634 |
| 7 | 500 | 462 | 601 | 484 | 556 | 591 | 423 | 429 | 540 | 523 | 530 | 606 | 589 | 459 | 415 | 419 | 606 |
| 8 | 422 | 473 | 458 | 535 | 420 | 423 | 502 | 425 | 602 | 472 | 555 | 650 | 509 | 579 | 595 | 510 | 568 |

wobei in der Tabelle jede Zeile ein Zeitsprungmuster ist, wobei in der Tabelle jede Spalte ein Sprung des jeweiligen Zeitsprungmusters angefangen von einem zweiten Sprung ist, so dass jedes Zeitsprungmuster 18 Sprünge aufweist, wobei in der Tabelle jede Zelle einen zeitlichen Abstand eines Referenzpunkts des jeweiligen Sprungs zu einem gleichen Referenzpunkt eines unmittelbar vorangehenden Sprungs in Symboldauern oder Vielfachen von Symboldauern angibt;

wobei das Frequenzsprungmuster eines aus den in der folgenden Tabelle genannten acht Frequenzsprungmustern mit jeweils 18 Sprüngen ist:

➥Too large Table

| Muster Nummer | # von Sub-Datenpaketen im Kernrahmen $S_C$ | | | | | | | | | | | | | | | | | |
|---|---|---|---|---|---|---|---|---|---|---|---|---|---|---|---|---|---|---|
| | 1 | 2 | 3 | 4 | 5 1 | 6 | 7 | 8 | 9 | 110 | 11 | 12 | 13 | 14 | 15 | 16 | 17 | 18 |
| 1 | 2 | 14 | 16 | 18 | 0 | 26 | 21 | 9 | 6 | 28 | 5 | 24 | 22 | 29 | 17 | 27 | 13 | 12 |
| 2 | 23 | 7 | 19 | 15 | 8 | 3 | 1 | 11 | 10 | 20 | 25 | 4 | 6 | 9 | 14 | 17 | 5 | 0 |
| 3 | 10 | 23 | 11 | 2 | 25 | 22 | 4 | 24 | 27 | 8 | 16 | 15 | 1 | 18 | 28 | 7 | 21 | 26 |
| 4 | 12 | 13 | 29 | 20 | 3 | 19 | 26 | 15 | 1 | 21 | 27 | 6 | 17 | 14 | 4 | 2 | 25 | 7 |
| 5 | 19 | 22 | 12 | 13 | 11 | 28 | 23 | 18 | 16 | 0 | 10 | 24 | 3 | 5 | 29 | 20 | 8 | 9 |
| 6 | 16 | 12 | 18 | 25 | 19 | 23 | 20 | 4 | 5 | 6 | 9 | 27 | 21 | 10 | 15 | 28 | 24 | 13 |
| 7 | 14 | 29 | 26 | 11 | 22 | 2 | 0 | 1 | 7 | 3 | 8 | 9 | 23 | 4 | 27 | 16 | 15 | 17 |
| 8 | 0 | 24 | 28 | 3 | 29 | 5 | 14 | 8 | 18 | 22 | 20 | 17 | 10 | 6 | 26 | 11 | 21 | 12 |

wobei in der Tabelle jede Zeile ein Frequenzsprungmuster ist, wobei in der Tabelle jede Spalte ein Sprung des jeweiligen Frequenzsprungmusters ist, wobei in der Tabelle jede Zelle einen Sendefrequenz des jeweiligen Sprungs des jeweiligen Frequenzsprungmusters in Trägern (UCG_C0-UCG_C29) angibt,

wobei das Signal von einem Knoten empfangen wird, der eine Quarztoleranz von +/-20 ppm oder besser aufweist.

## Claims

1. Method for transmitting a signal from a data transmitter to a data receiver, the method comprising:

transmitting a signal with a hopping pattern;
wherein the hopping pattern is a time hopping pattern, a frequency hopping pattern, or a combination of the time hopping pattern and the frequency hopping pattern;
wherein the time hopping pattern is one of the following eight time hopping patterns having 24 hops each:

| No. | # of sub-data packets in the core frame $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wherein each line in the table is a time hopping pattern, wherein each column in the table is a hop of the respective time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;
wherein the frequency hopping pattern is one of the following eight frequency hopping patterns having 24 hops each:

| Pattern number | # of sub-data packets in the core frame $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers (UCG_C0-UCG_23).

wherein the signal is transmitted by a node comprising a quartz tolerance of +/- 20 ppm or better.

2. Method for transmitting a signal from a data transmitter to a data receiver, the method comprising:

transmitting a signal with a hopping pattern;

wherein the hopping pattern is a time hopping pattern, a frequency hopping pattern, or a combination of the time hopping pattern and the frequency hopping pattern;

wherein the time hopping pattern is one of the following eight time hopping patterns having 24 hops each:

| No. | # of sub-data packets in the core frame $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 489 | 373 | 319 | 500 | 373 | 319 | 482 | 373 | 319 | 637 | 373 | 319 | 342 | 373 | 319 | 346 | 373 | 319 | 405 | 373 | 319 |
| 2 | 373 | 319 | 505 | 373 | 319 | 545 | 373 | 319 | 403 | 373 | 319 | 412 | 373 | 319 | 420 | 373 | 319 | 446 | 373 | 319 | 393 | 373 | 319 |
| 3 | 373 | 319 | 349 | 373 | 319 | 349 | 373 | 319 | 443 | 373 | 319 | 649 | 373 | 319 | 629 | 373 | 319 | 344 | 373 | 319 | 354 | 373 | 319 |
| 4 | 373 | 319 | 507 | 373 | 319 | 426 | 373 | 319 | 658 | 373 | 319 | 601 | 373 | 319 | 364 | 373 | 319 | 345 | 373 | 319 | 342 | 373 | 319 |
| 5 | 373 | 319 | 430 | 373 | 319 | 375 | 373 | 319 | 427 | 373 | 319 | 476 | 373 | 319 | 632 | 373 | 319 | 557 | 373 | 319 | 349 | 373 | 319 |
| 6 | 373 | 319 | 485 | 373 | 319 | 357 | 373 | 319 | 611 | 373 | 319 | 438 | 373 | 319 | 372 | 373 | 319 | 460 | 373 | 319 | 417 | 373 | 319 |
| 7 | 373 | 319 | 620 | 373 | 319 | 490 | 373 | 319 | 402 | 373 | 319 | 517 | 373 | 319 | 353 | 373 | 319 | 366 | 373 | 319 | 345 | 373 | 319 |
| 8 | 373 | 319 | 353 | 373 | 319 | 341 | 373 | 319 | 634 | 373 | 319 | 556 | 373 | 319 | 646 | 373 | 319 | 341 | 373 | 319 | 364 | 373 | 319 |

wherein each line in the table is a time hopping pattern, wherein each column in the table is a hop of the respective time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;

wherein the frequency hopping pattern is one of the following eight frequency hopping patterns having 24 hops each:

| Pattern number | # of sub-data packets in the core frame $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 24 | 14 | 8 | 28 | 18 | 9 | 29 | 19 | 3 | 23 | 13 | 7 | 27 | 17 | 0 | 20 | 10 | 6 | 26 | 16 | 5 | 25 | 15 |
| 2 | 2 | 22 | 12 | 0 | 20 | 10 | 7 | 27 | 17 | 8 | 28 | 18 | 1 | 21 | 11 | 4 | 24 | 14 | 9 | 29 | 19 | 6 | 26 | 16 |
| 3 | 0 | 20 | 10 | 6 | 26 | 16 | 4 | 24 | 14 | 3 | 23 | 13 | 2 | 22 | 12 | 5 | 25 | 15 | 9 | 29 | 19 | 1 | 21 | 11 |
| 4 | 7 | 27 | 17 | 4 | 24 | 14 | 2 | 22 | 12 | 8 | 28 | 18 | 1 | 21 | 11 | 9 | 29 | 19 | 6 | 26 | 16 | 0 | 20 | 10 |
| 5 | 3 | 23 | 13 | 2 | 22 | 12 | 8 | 28 | 18 | 5 | 25 | 15 | 0 | 20 | 10 | 7 | 27 | 17 | 6 | 26 | 16 | 1 | 21 | 11 |
| 6 | 1 | 21 | 11 | 3 | 23 | 13 | 8 | 28 | 18 | 9 | 29 | 19 | 2 | 22 | 12 | 5 | 25 | 15 | 0 | 20 | 10 | 7 | 27 | 17 |
| 7 | 6 | 26 | 16 | 7 | 27 | 17 | 9 | 29 | 19 | 4 | 24 | 14 | 0 | 20 | 10 | 3 | 23 | 13 | 8 | 28 | 18 | 5 | 25 | 15 |
| 8 | 1 | 21 | 11 | 7 | 27 | 17 | 3 | 23 | 13 | 9 | 29 | 19 | 4 | 24 | 14 | 6 | 26 | 16 | 8 | 28 | 18 | 0 | 20 | 10 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers (UCG_C0-UCG_C29).

wherein the signal is transmitted by a node comprising a quartz tolerance of +/- 10 ppm or better.

3. Method according to any of the preceding claims 1 to 2, wherein a data packet is transmitted divided into a plurality of sub-data packets according to the hopping pattern so that a sub-data packet of the plurality of sub-data packets is transmitted in each hop of the hopping pattern.

4. Method according to any of the preceding claims 1 to 2, wherein the hopping pattern is a combination of the time hopping pattern and the frequency hopping pattern; wherein the time hopping pattern and the frequency hopping pattern comprise the same line number in the respective table.

5. Method for receiving a signal with a data receiver, the method comprising:

receiving a signal having a hopping pattern;
wherein the hopping pattern is a time hopping pattern, a frequency hopping pattern, or a combination of the time hopping pattern and the frequency hopping pattern;
wherein the time hopping pattern is one of the following eight time hopping patterns having 24 hops each:

| No. | # of sub-data packets in the core frame $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

wherein each line in the table is a time hopping pattern, wherein each column in the table is a hop of the respective time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;
wherein the frequency hopping pattern is one of the following eight frequency hopping patterns having 24 hops each:

| No. | # of sub-data packets in the core frame $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers (UCG_C0-UCG_C23),
wherein the signal is received from a node comprising a quartz tolerance of +/- 20 ppm or better.

6. Method for receiving a signal with a data receiver, the method comprising

receiving a signal having a hopping pattern;
wherein the hopping pattern is a time hopping pattern, a frequency hopping pattern, or a combination of the time hopping pattern and the frequency hopping pattern;
wherein the time hopping pattern is one of the following eight time hopping patterns having 24 hops each:

| No. | # of sub-data packets in the core frame $S_C$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 489 | 373 | 319 | 500 | 373 | 319 | 482 | 373 | 319 | 637 | 373 | 319 | 342 | 373 | 319 | 346 | 373 | 319 | 405 | 373 | 319 |
| 2 | 373 | 319 | 505 | 373 | 319 | 545 | 373 | 319 | 403 | 373 | 319 | 412 | 373 | 319 | 420 | 373 | 319 | 446 | 373 | 319 | 393 | 373 | 319 |
| 3 | 373 | 319 | 349 | 373 | 319 | 349 | 373 | 319 | 443 | 373 | 319 | 649 | 373 | 319 | 629 | 373 | 319 | 344 | 373 | 319 | 354 | 373 | 319 |
| 4 | 373 | 319 | 507 | 373 | 319 | 426 | 373 | 319 | 658 | 373 | 319 | 601 | 373 | 319 | 364 | 373 | 319 | 345 | 373 | 319 | 342 | 373 | 319 |
| 5 | 373 | 319 | 430 | 373 | 319 | 375 | 373 | 319 | 427 | 373 | 319 | 476 | 373 | 319 | 632 | 373 | 319 | 557 | 373 | 319 | 349 | 373 | 319 |
| 6 | 373 | 319 | 485 | 373 | 319 | 357 | 373 | 319 | 611 | 373 | 319 | 438 | 373 | 319 | 372 | 373 | 319 | 460 | 373 | 319 | 417 | 373 | 319 |
| 7 | 373 | 319 | 620 | 373 | 319 | 490 | 373 | 319 | 402 | 373 | 319 | 517 | 373 | 319 | 353 | 373 | 319 | 366 | 373 | 319 | 345 | 373 | 319 |
| 8 | 373 | 319 | 353 | 373 | 319 | 341 | 373 | 319 | 634 | 373 | 319 | 556 | 373 | 319 | 646 | 373 | 319 | 341 | 373 | 319 | 364 | 373 | 319 |

wherein each line in the table is a time hopping pattern, wherein each column in the table is a hop of the respective time hopping pattern starting from a second hop so that each time hopping pattern comprises 24 hops, wherein each cell in the table indicates a temporal interval of a reference point of the respective hop to a same reference point of an immediately subsequent hop in symbol durations or multiples of symbol durations;

wherein the frequency hopping pattern is one of the following eight frequency hopping patterns having 24 hops each:

| Pattern Number | # of sub-data packets in the core frame $S_C$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 24 | 14 | 8 | 28 | 18 | 9 | 29 | 19 | 3 | 23 | 13 | 7 | 27 | 17 | 0 | 20 | 10 | 6 | 26 | 16 | 5 | 25 | 15 |
| 2 | 2 | 22 | 12 | 0 | 20 | 10 | 7 | 27 | 17 | 8 | 28 | 18 | 1 | 21 | 11 | 4 | 24 | 14 | 9 | 29 | 19 | 6 | 26 | 16 |
| 3 | 0 | 20 | 10 | 6 | 26 | 16 | 4 | 24 | 14 | 3 | 23 | 13 | 2 | 22 | 12 | 5 | 25 | 15 | 9 | 29 | 19 | 1 | 21 | 11 |
| 4 | 7 | 27 | 17 | 4 | 24 | 14 | 2 | 22 | 12 | 8 | 28 | 18 | 1 | 21 | 11 | 9 | 29 | 19 | 6 | 26 | 16 | 0 | 20 | 10 |
| 5 | 3 | 23 | 13 | 2 | 22 | 12 | 8 | 28 | 18 | 5 | 25 | 15 | 0 | 20 | 10 | 7 | 27 | 17 | 6 | 26 | 16 | 1 | 21 | 11 |
| 6 | 1 | 21 | 11 | 3 | 23 | 13 | 8 | 28 | 18 | 9 | 29 | 19 | 2 | 22 | 12 | 5 | 25 | 15 | 0 | 20 | 10 | 7 | 27 | 17 |
| 7 | 6 | 26 | 16 | 7 | 27 | 17 | 9 | 29 | 19 | 4 | 24 | 14 | 0 | 20 | 10 | 3 | 23 | 13 | 8 | 28 | 18 | 5 | 25 | 15 |
| 8 | 1 | 21 | 11 | 7 | 27 | 17 | 3 | 23 | 13 | 9 | 29 | 19 | 4 | 24 | 14 | 6 | 26 | 16 | 8 | 28 | 18 | 0 | 20 | 10 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers of (UCG_C0-UCG_C29),

wherein the signal is received from a node comprising a quartz tolerance of +/- 10 ppm or better.

7. Method for transmitting a signal from a data transmitter to a data receiver, the method comprising:

transmitting a signal with a hopping pattern;

wherein the hopping pattern is a time hopping pattern, a frequency hopping pattern, or a combination of the time hopping pattern and the frequency hopping pattern;

wherein the time hopping pattern is one of the following eight time hopping patterns having 18 hops each:

| Pattern number | # of sub-data packets in the core frame $S_C$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 471 | 595 | 594 | 496 | 545 | 445 | 440 | 535 | 601 | 522 | 430 | 545 | 519 | 439 | 484 | 438 | 605 |
| 2 | 512 | 424 | 649 | 447 | 550 | 611 | 624 | 418 | 501 | 464 | 606 | 509 | 636 | 443 | 465 | 434 | 431 |
| 3 | 625 | 548 | 540 | 434 | 520 | 559 | 488 | 531 | 501 | 465 | 459 | 428 | 444 | 459 | 505 | 459 | 633 |
| 4 | 457 | 489 | 612 | 450 | 457 | 440 | 567 | 538 | 516 | 514 | 540 | 474 | 592 | 445 | 577 | 444 | 493 |
| 5 | 488 | 643 | 626 | 541 | 560 | 550 | 450 | 475 | 520 | 456 | 618 | 447 | 455 | 440 | 455 | 510 | 477 |
| 6 | 548 | 444 | 459 | 529 | 453 | 525 | 440 | 553 | 583 | 527 | 520 | 461 | 575 | 457 | 464 | 533 | 421 |
| 7 | 461 | 607 | 501 | 534 | 505 | 569 | 561 | 472 | 509 | 450 | 555 | 440 | 423 | 494 | 448 | 525 | 485 |
| 8 | 577 | 611 | 464 | 552 | 451 | 508 | 478 | 438 | 443 | 507 | 420 | 553 | 520 | 576 | 580 | 564 | 404 |

wherein each line in the table is a time hopping pattern, wherein each column in the table is a hop of the respective time hopping pattern starting from a second hop so that each time hopping pattern comprises 18 hops, wherein each cell in the table indicates a temporal interval of a reference point of the respective hop to a same reference point of an immediately subsequent hop in symbol durations or multiples of symbol durations;

wherein the frequency hopping pattern is one of the following eight frequency hopping patterns having 18 hops each:

| Pattern number | # of sub-data packets in the core frame $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 19 | 18 | 12 | 21 | 15 | 14 | 22 | 2 | 5 | 10 | 17 | 6 | 8 | 4 | 7 | 20 | 13 | 0 |
| 2 | 10 | 4 | 1 | 7 | 23 | 6 | 3 | 8 | 17 | 2 | 18 | 9 | 22 | 14 | 11 | 16 | 5 | 21 |
| 3 | 0 | 16 | 11 | 20 | 9 | 13 | 23 | 21 | 2 | 19 | 1 | 15 | 3 | 7 | 12 | 4 | 22 | 6 |
| 4 | 14 | 9 | 0 | 15 | 7 | 5 | 8 | 18 | 1 | 12 | 19 | 23 | 17 | 16 | 10 | 2 | 13 | 11 |
| 5 | 6 | 12 | 19 | 10 | 4 | 22 | 13 | 17 | 11 | 5 | 23 | 3 | 1 | 8 | 14 | 0 | 9 | 20 |
| 6 | 16 | 20 | 3 | 5 | 21 | 10 | 17 | 1 | 12 | 18 | 15 | 11 | 0 | 9 | 2 | 14 | 6 | 8 |
| 7 | 15 | 0 | 8 | 18 | 9 | 23 | 11 | 20 | 14 | 3 | 16 | 22 | 19 | 13 | 7 | 21 | 12 | 4 |
| 8 | 4 | 7 | 16 | 22 | 13 | 19 | 2 | 3 | 6 | 15 | 10 | 20 | 23 | 5 | 21 | 17 | 18 | 1 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers (UCG_C0-UCG_23).

wherein the signal is transmitted by a node comprising a quartz tolerance of +/- 20 ppm or better.

8. Method for transmitting a signal from a data transmitter to a data receiver, the method comprising:

transmitting a signal according to a hopping pattern;

wherein the hopping pattern is a time hopping pattern, a frequency hopping pattern, or a combination of the time hopping pattern and the frequency hopping pattern;

wherein the time hopping pattern is one of the following eight time hopping patterns having 18 hops each:

| Pattern number | # of sub-data packets in the core frame $S_C$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 442 | 455 | 586 | 520 | 436 | 485 | 506 | 446 | 590 | 459 | 637 | 466 | 597 | 445 | 471 | 419 | 547 |
| 2 | 447 | 594 | 459 | 512 | 577 | 490 | 510 | 500 | 576 | 581 | 512 | 441 | 483 | 507 | 467 | 447 | 612 |
| 3 | 525 | 446 | 428 | 450 | 434 | 445 | 457 | 563 | 470 | 537 | 529 | 527 | 537 | 513 | 428 | 525 | 620 |
| 4 | 626 | 467 | 450 | 544 | 564 | 505 | 450 | 645 | 457 | 423 | 433 | 439 | 559 | 547 | 449 | 641 | 508 |
| 5 | 590 | 592 | 423 | 544 | 444 | 553 | 475 | 431 | 452 | 551 | 454 | 459 | 450 | 512 | 499 | 532 | 447 |
| 6 | 476 | 420 | 516 | 422 | 558 | 483 | 474 | 462 | 474 | 458 | 529 | 596 | 562 | 419 | 417 | 600 | 634 |
| 7 | 500 | 462 | 601 | 484 | 556 | 591 | 423 | 429 | 540 | 523 | 530 | 606 | 589 | 459 | 415 | 419 | 606 |
| 8 | 422 | 473 | 458 | 535 | 420 | 423 | 502 | 425 | 602 | 472 | 555 | 650 | 509 | 579 | 595 | 510 | 568 |

wherein each line in the table is a time hopping pattern, wherein each column in the table is a hop of the respective time hopping pattern starting from a second hop so that each time hopping pattern comprises 18 hops, wherein each cell in the table indicates a temporal interval of a reference point of the respective hop to a same reference point of an immediately subsequent hop in - preferably multiples of - symbol durations;

wherein the frequency hopping pattern is one of the following eight frequency hopping patterns having 18 hops each:

| Pattern number | # of sub-data packets in the core frame $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 2 | 14 | 16 | 18 | 0 | 26 | 21 | 9 | 6 | 28 | 5 | 24 | 22 | 29 | 17 | 27 | 13 | 12 |
| 2 | 23 | 7 | 19 | 15 | 8 | 3 | 1 | 11 | 10 | 20 | 25 | 4 | 6 | 9 | 14 | 17 | 5 | 0 |
| 3 | 10 | 23 | 11 | 2 | 25 | 22 | 4 | 24 | 27 | 8 | 16 | 15 | 1 | 18 | 28 | 7 | 21 | 26 |
| 4 | 12 | 13 | 29 | 20 | 3 | 19 | 26 | 15 | 1 | 21 | 27 | 6 | 17 | 14 | 4 | 2 | 25 | 7 |
| 5 | 19 | 22 | 12 | 13 | 11 | 28 | 23 | 18 | 16 | 0 | 10 | 24 | 3 | 5 | 29 | 20 | 8 | 9 |
| 6 | 16 | 12 | 18 | 25 | 19 | 23 | 20 | 4 | 5 | 6 | 9 | 27 | 21 | 10 | 15 | 28 | 24 | 13 |
| 7 | 14 | 29 | 26 | 11 | 22 | 2 | 0 | 1 | 7 | 3 | 8 | 9 | 23 | 4 | 27 | 16 | 15 | 17 |
| 8 | 0 | 24 | 28 | 3 | 29 | 5 | 14 | 8 | 18 | 22 | 20 | 17 | 10 | 6 | 26 | 11 | 21 | 12 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers (UCG_C0-UCG_C29).

wherein the signal is transmitted by a node comprising a quartz tolerance of +/- 10 ppm or better.

9. Method according to any of the preceding claims 7 to 8, wherein a data packet is transmitted divided into a plurality of sub-data packets according to the hopping pattern so that a sub-data packet of the plurality of sub-data packets is transmitted in each hop of the hopping pattern.

10. Method according to any of the preceding claims 7 to 9, wherein the hopping pattern is a combination of the time hopping pattern and the frequency hopping pattern, wherein the time hopping pattern and the frequency hopping pattern comprise the same line number in the respective table.

11. Method for receiving a signal with a data receiver, the method comprising:

receiving a signal having a hopping pattern;

wherein the hopping pattern is a time hopping pattern, a frequency hopping pattern, or a combination of the time hopping pattern and the frequency hopping pattern;

wherein the time hopping pattern is one of the following eight time hopping patterns having 18 hops each:

| Pattern Number | # of sub-data packets in the core frame $S_C$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 471 | 595 | 594 | 496 | 545 | 445 | 440 | 535 | 601 | 522 | 430 | 545 | 519 | 439 | 484 | 438 | 605 |
| 2 | 512 | 424 | 649 | 447 | 550 | 611 | 624 | 418 | 501 | 464 | 606 | 509 | 636 | 443 | 465 | 434 | 431 |
| 3 | 625 | 548 | 540 | 434 | 520 | 559 | 488 | 531 | 501 | 465 | 459 | 428 | 444 | 459 | 505 | 459 | 633 |
| 4 | 457 | 489 | 612 | 450 | 457 | 440 | 567 | 538 | 516 | 514 | 540 | 474 | 592 | 445 | 577 | 444 | 493 |
| 5 | 488 | 643 | 626 | 541 | 560 | 550 | 450 | 475 | 520 | 456 | 618 | 447 | 455 | 440 | 455 | 510 | 477 |
| 6 | 548 | 444 | 459 | 529 | 453 | 525 | 440 | 553 | 583 | 527 | 520 | 461 | 575 | 457 | 464 | 533 | 421 |
| 7 | 461 | 607 | 501 | 534 | 505 | 569 | 561 | 472 | 509 | 450 | 555 | 440 | 423 | 494 | 448 | 525 | 485 |
| 8 | 577 | 611 | 464 | 552 | 451 | 508 | 478 | 438 | 443 | 507 | 420 | 553 | 520 | 576 | 580 | 564 | 404 |

wherein each line in the table is a time hopping pattern, wherein each column in the table is a hop of the respective time hopping pattern starting from a second hop so that each time hopping pattern comprises 18 hops, wherein each cell in the table indicates a temporal interval of a reference point of the respective hop to a same reference point of an immediately subsequent hop in symbol durations or multiples of symbol durations;

wherein the frequency hopping pattern is one of the following eight frequency hopping patterns having 18 hops each:

| Pattern Number | # of sub-data packets in the core frame $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 19 | 18 | 12 | 21 | 15 | 14 | 22 | 2 | 5 | 10 | 17 | 6 | 8 | 4 | 7 | 20 | 13 | 0 |
| 2 | 10 | 4 | 1 | 7 | 23 | 6 | 3 | 8 | 17 | 2 | 18 | 9 | 22 | 14 | 11 | 16 | 5 | 21 |
| 3 | 0 | 16 | 11 | 20 | 9 | 13 | 23 | 21 | 2 | 19 | 1 | 15 | 3 | 7 | 12 | 4 | 22 | 6 |
| 4 | 14 | 9 | 0 | 15 | 7 | 5 | 8 | 18 | 1 | 12 | 19 | 23 | 17 | 16 | 10 | 2 | 13 | 11 |
| 5 | 6 | 12 | 19 | 10 | 4 | 22 | 13 | 17 | 11 | 5 | 23 | 3 | 1 | 8 | 14 | 0 | 9 | 20 |
| 6 | 16 | 20 | 3 | 5 | 21 | 10 | 17 | 1 | 12 | 18 | 15 | 11 | 0 | 9 | 2 | 14 | 6 | 8 |
| 7 | 15 | 0 | 8 | 18 | 9 | 23 | 11 | 20 | 14 | 3 | 16 | 22 | 19 | 13 | 7 | 21 | 12 | 4 |
| 8 | 4 | 7 | 16 | 22 | 13 | 19 | 2 | 3 | 6 | 15 | 10 | 20 | 23 | 5 | 21 | 17 | 18 | 1 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers (UCG_C0-UCG_C23),

wherein the signal is received from a node comprising a quartz tolerance of +/- 20 ppm or better.

12. Method for receiving a signal with a data receiver, the method comprising:

receiving a signal having a hopping pattern;
wherein the hopping pattern is a time hopping pattern, a frequency hopping pattern, or a combination of the time hopping pattern and the frequency hopping pattern;
wherein the time hopping pattern is one of the following eight time hopping patterns having 18 hops each:

| Pattern number | # of sub-data packets in the core frame $S_C$ | | | | | | | | | | | | | | | | |
| --- | --- | --- | --- | --- | --- | --- | --- | --- | --- | --- | --- | --- | --- | --- | --- | --- | --- |
| | 1 | 2 | 3 | 4 | 5 | 6 | 7 | 8 | 9 | 10 | 11 | 12 | 13 | 14 | 15 | 16 | 17 |
| 1 | 442 | 455 | 586 | 520 | 436 | 485 | 506 | 446 | 590 | 459 | 637 | 466 | 597 | 445 | 471 | 419 | 547 |
| 2 | 447 | 594 | 459 | 512 | 577 | 490 | 510 | 500 | 576 | 581 | 512 | 441 | 483 | 507 | 467 | 447 | 612 |
| 3 | 525 | 446 | 428 | 450 | 434 | 445 | 457 | 563 | 470 | 537 | 529 | 527 | 537 | 513 | 428 | 525 | 620 |
| 4 | 626 | 467 | 450 | 544 | 564 | 505 | 450 | 645 | 457 | 423 | 433 | 439 | 559 | 547 | 449 | 641 | 508 |
| 5 | 590 | 592 | 423 | 544 | 444 | 553 | 475 | 431 | 452 | 551 | 454 | 459 | 450 | 512 | 499 | 532 | 447 |
| 6 | 476 | 420 | 516 | 422 | 558 | 483 | 474 | 462 | 474 | 458 | 529 | 596 | 562 | 419 | 417 | 600 | 634 |
| 7 | 500 | 462 | 601 | 484 | 556 | 591 | 423 | 429 | 540 | 523 | 530 | 606 | 589 | 459 | 415 | 419 | 606 |
| 8 | 422 | 473 | 458 | 535 | 420 | 423 | 502 | 425 | 602 | 472 | 555 | 650 | 509 | 579 | 595 | 510 | 568 |

wherein each line in the table is a time hopping pattern, wherein each column in the table is a hop of the respective time hopping pattern starting from a second hop so that each time hopping pattern comprises 18 hops, wherein each cell in the table indicates a temporal interval of a reference point of the respective hop to a same reference point of an immediately subsequent hop in symbol durations or multiples of symbol durations;

wherein the frequency hopping pattern is one of the following eight frequency hopping patterns having 18 hops each:

| Pattern Number | # of sub-data packets in the core frame $S_C$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 2 | 14 | 16 | 18 | 0 | 26 | 21 | 9 | 6 | 28 | 5 | 24 | 22 | 29 | 17 | 27 | 13 | 12 |
| 2 | 23 | 7 | 19 | 15 | 8 | 3 | 1 | 11 | 10 | 20 | 25 | 4 | 6 | 9 | 14 | 17 | 5 | 0 |
| 3 | 10 | 23 | 11 | 2 | 25 | 22 | 4 | 24 | 27 | 8 | 16 | 15 | 1 | 18 | 28 | 7 | 21 | 26 |
| 4 | 12 | 13 | 29 | 20 | 3 | 19 | 26 | 15 | 1 | 21 | 27 | 6 | 17 | 14 | 4 | 2 | 25 | 7 |
| 5 | 19 | 22 | 12 | 13 | 11 | 28 | 23 | 18 | 16 | 0 | 10 | 24 | 3 | 5 | 29 | 20 | 8 | 9 |
| 6 | 16 | 12 | 18 | 25 | 19 | 23 | 20 | 4 | 5 | 6 | 9 | 27 | 21 | 10 | 15 | 28 | 24 | 13 |
| 7 | 14 | 29 | 26 | 11 | 22 | 2 | 0 | 1 | 7 | 3 | 8 | 9 | 23 | 4 | 27 | 16 | 15 | 17 |
| 8 | 0 | 24 | 28 | 3 | 29 | 5 | 14 | 8 | 18 | 22 | 20 | 17 | 10 | 6 | 26 | 11 | 21 | 12 |

wherein each line in the table is a frequency hopping pattern, wherein each column in the table is a hop of the respective frequency hopping pattern, wherein each cell in the table indicates a transmission frequency of the respective hop of the respective frequency hopping pattern in carriers (UCG_C0-UCG_C29),

wherein the signal is received from a node comprising a quartz tolerance of +/- 20 ppm or better.

## Revendications

1. Procédé destiné à émettre un signal par un émetteur de données vers un récepteur de données, dans lequel le procédé présente :

   émettre un signal avec un modèle de saut ;
   dans lequel le modèle de saut est un modèle de saut temporel, un modèle de saut de fréquence ou une combinaison du modèle de saut temporel et du modèle de saut de fréquence ;
   dans lequel le modèle de saut temporel est un modèle parmi les huit modèles de saut temporel désignés dans le tableau suivant avec à chaque fois 24 sauts :

| N° | N° de sous-paquets de données dans la trame centrale $S_c$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

   dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 24 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;
   dans lequel le modèle de saut de fréquence est un modèle parmi les huit modèles de saut de fréquence désignés dans le tableau suivant avec à chaque fois 24 sauts :
   Numéro de modèle N° de sous-paquets de données dans la trame centrale $S_c$

| Numéro de modèle | N° de sous-paquets de données dans la trame centrale S_c | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C23),

dans lequel le signal est émis par un nœud qui présente une tolérance au quartz de +/- 20 ppm ou mieux.

**2.** Procédé destiné à émettre un signal par un émetteur de données vers un récepteur de données, dans lequel le procédé présente :

émettre un signal avec un modèle de saut ;
dans lequel le modèle de saut est un modèle de saut temporel, un modèle de saut de fréquence ou une combinaison du modèle de saut temporel et du modèle de saut de fréquence ;
dans lequel le modèle de saut temporel est un modèle parmi les huit modèles de saut temporel désignés dans le tableau suivant avec à chaque fois 24 sauts :

| N°. | N° de sous-paquets de données dans la trame centrale S_c | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 489 | 373 | 319 | 500 | 373 | 319 | 482 | 373 | 319 | 637 | 373 | 319 | 342 | 373 | 319 | 346 | 373 | 319 | 405 | 373 | 319 |
| 2 | 373 | 319 | 505 | 373 | 319 | 545 | 373 | 319 | 403 | 373 | 319 | 412 | 373 | 319 | 420 | 373 | 319 | 446 | 373 | 319 | 393 | 373 | 319 |
| 3 | 373 | 319 | 349 | 373 | 319 | 349 | 373 | 319 | 443 | 373 | 319 | 649 | 373 | 319 | 629 | 373 | 319 | 344 | 373 | 319 | 354 | 373 | 319 |
| 4 | 373 | 319 | 507 | 373 | 319 | 426 | 373 | 319 | 658 | 373 | 319 | 601 | 373 | 319 | 364 | 373 | 319 | 345 | 373 | 319 | 342 | 373 | 319 |
| 5 | 373 | 319 | 430 | 373 | 319 | 375 | 373 | 319 | 427 | 373 | 319 | 476 | 373 | 319 | 632 | 373 | 319 | 557 | 373 | 319 | 349 | 373 | 319 |
| 6 | 373 | 319 | 485 | 373 | 319 | 357 | 373 | 319 | 611 | 373 | 319 | 438 | 373 | 319 | 372 | 373 | 319 | 460 | 373 | 319 | 417 | 373 | 319 |
| 7 | 373 | 319 | 620 | 373 | 319 | 490 | 373 | 319 | 402 | 373 | 319 | 517 | 373 | 319 | 353 | 373 | 319 | 366 | 373 | 319 | 345 | 373 | 319 |
| 8 | 373 | 319 | 353 | 373 | 319 | 341 | 373 | 319 | 634 | 373 | 319 | 556 | 373 | 319 | 646 | 373 | 319 | 341 | 373 | 319 | 364 | 373 | 319 |

dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 24 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;
dans lequel le modèle de saut de fréquence est un modèle parmi les huit modèles de saut de fréquence désignés dans le tableau suivant avec à chaque fois 24 sauts :

| Numéro de modèle | N° de sous-paquets de données dans la trame centrale S_c | | | | | | | | | | | | | | | | | | | | | | | |
|---|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 24 | 14 | 8 | 28 | 18 | 9 | 29 | 19 | 3 | 23 | 13 | 7 | 27 | 17 | 0 | 20 | 10 | 6 | 26 | 16 | 5 | 25 | 15 |
| 2 | 2 | 22 | 12 | 0 | 20 | 10 | 7 | 27 | 17 | 8 | 28 | 18 | 1 | 21 | 11 | 4 | 24 | 14 | 9 | 29 | 19 | 6 | 26 | 16 |
| 3 | 0 | 20 | 10 | 6 | 26 | 16 | 4 | 24 | 14 | 3 | 23 | 13 | 2 | 22 | 12 | 5 | 25 | 15 | 9 | 29 | 19 | 1 | 21 | 11 |
| 4 | 7 | 27 | 17 | 4 | 24 | 14 | 2 | 22 | 12 | 8 | 28 | 18 | 1 | 21 | 11 | 9 | 29 | 19 | 6 | 26 | 16 | 0 | 20 | 10 |
| 5 | 3 | 23 | 13 | 2 | 22 | 12 | 8 | 28 | 18 | 5 | 25 | 15 | 0 | 20 | 10 | 7 | 27 | 17 | 6 | 26 | 16 | 1 | 21 | 11 |
| 6 | 1 | 21 | 11 | 3 | 23 | 13 | 8 | 28 | 18 | 9 | 29 | 19 | 2 | 22 | 12 | 5 | 25 | 15 | 0 | 20 | 10 | 7 | 27 | 17 |
| 7 | 6 | 26 | 16 | 7 | 27 | 17 | 9 | 29 | 19 | 4 | 24 | 14 | 0 | 20 | 10 | 3 | 23 | 13 | 8 | 28 | 18 | 5 | 25 | 15 |
| 8 | 1 | 21 | 11 | 7 | 27 | 17 | 3 | 23 | 13 | 9 | 29 | 19 | 4 | 24 | 14 | 6 | 26 | 16 | 8 | 28 | 18 | 0 | 20 | 10 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C29),

dans lequel le signal est émis par un nœud qui présente une tolérance au quartz de +/- 10 ppm ou mieux.

**3.** Procédé selon l'une des revendications précédentes 1 à 2, dans lequel un paquet de données divisé en une pluralité de sous-paquets de données est émis conformément au modèle de saut de telle sorte que, dans chaque saut du modèle de saut, un sous-paquet de données de la pluralité de sous-paquets de données est émis.

**4.** Procédé selon l'une des revendications précédentes 1 à 3, dans lequel le modèle de saut est une combinaison du modèle de saut temporel et du modèle de saut de fréquence, dans lequel le modèle de saut temporel et le modèle de saut de fréquence présentent le même numéro de ligne dans les tableaux respectifs.

**5.** Procédé destiné à recevoir un signal avec un récepteur de données, dans lequel le procédé présente :

recevoir un signal avec un modèle de saut ;
dans lequel le modèle de saut est un modèle de saut temporel, un modèle de saut de fréquence ou une combinaison du modèle de saut temporel et du modèle de saut de fréquence ;
dans lequel le modèle de saut temporel est un modèle parmi les huit modèles de saut temporel désignés dans le tableau suivant avec à chaque fois 24 sauts :

| N° | N° de sous-paquets de données dans la trame centrale S$_c$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 330 | 387 | 388 | 330 | 387 | 354 | 330 | 387 | 356 | 330 | 387 | 432 | 330 | 387 | 352 | 330 | 387 | 467 | 330 | 387 | 620 | 330 | 387 |
| 2 | 330 | 387 | 435 | 330 | 387 | 409 | 330 | 387 | 398 | 330 | 387 | 370 | 330 | 387 | 361 | 330 | 387 | 472 | 330 | 387 | 522 | 330 | 387 |
| 3 | 330 | 387 | 356 | 330 | 387 | 439 | 330 | 387 | 413 | 330 | 387 | 352 | 330 | 387 | 485 | 330 | 387 | 397 | 330 | 387 | 444 | 330 | 387 |
| 4 | 330 | 387 | 352 | 330 | 387 | 382 | 330 | 387 | 381 | 330 | 387 | 365 | 330 | 387 | 595 | 330 | 387 | 604 | 330 | 387 | 352 | 330 | 387 |
| 5 | 330 | 387 | 380 | 330 | 387 | 634 | 330 | 387 | 360 | 330 | 387 | 393 | 330 | 387 | 352 | 330 | 387 | 373 | 330 | 387 | 490 | 330 | 387 |
| 6 | 330 | 387 | 364 | 330 | 387 | 375 | 330 | 387 | 474 | 330 | 387 | 355 | 330 | 387 | 478 | 330 | 387 | 464 | 330 | 387 | 513 | 330 | 387 |
| 7 | 330 | 387 | 472 | 330 | 387 | 546 | 330 | 387 | 501 | 330 | 387 | 356 | 330 | 387 | 359 | 330 | 387 | 359 | 330 | 387 | 364 | 330 | 387 |
| 8 | 330 | 387 | 391 | 330 | 387 | 468 | 330 | 387 | 512 | 330 | 387 | 543 | 330 | 387 | 354 | 330 | 387 | 391 | 330 | 387 | 368 | 330 | 387 |

dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 24 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;
dans lequel le modèle de saut de fréquence est un modèle parmi les huit modèles de saut de fréquence désignés dans le tableau suivant avec à chaque fois 24 sauts :

| Numéro de modèle | N° de sous-paquets de données dans la trame centrale S$_c$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 5 | 21 | 13 | 6 | 22 | 14 | 1 | 17 | 9 | 0 | 16 | 8 | 7 | 23 | 15 | 4 | 20 | 12 | 3 | 19 | 11 | 2 | 18 | 10 |
| 2 | 4 | 20 | 12 | 1 | 17 | 9 | 0 | 16 | 8 | 6 | 22 | 14 | 7 | 23 | 15 | 2 | 18 | 10 | 5 | 21 | 13 | 3 | 19 | 11 |
| 3 | 4 | 20 | 12 | 3 | 19 | 11 | 6 | 22 | 14 | 7 | 23 | 15 | 0 | 16 | 8 | 5 | 21 | 13 | 2 | 18 | 10 | 1 | 17 | 9 |
| 4 | 6 | 22 | 14 | 2 | 18 | 10 | 7 | 23 | 15 | 0 | 16 | 8 | 1 | 17 | 9 | 4 | 20 | 12 | 5 | 21 | 13 | 3 | 19 | 11 |
| 5 | 7 | 23 | 15 | 4 | 20 | 12 | 3 | 19 | 11 | 2 | 18 | 10 | 6 | 22 | 14 | 0 | 16 | 8 | 1 | 17 | 9 | 5 | 21 | 13 |
| 6 | 3 | 19 | 11 | 6 | 22 | 14 | 2 | 18 | 10 | 0 | 16 | 8 | 7 | 23 | 15 | 1 | 17 | 9 | 4 | 20 | 12 | 5 | 21 | 13 |
| 7 | 3 | 19 | 11 | 1 | 17 | 9 | 5 | 21 | 13 | 7 | 23 | 15 | 0 | 16 | 8 | 2 | 18 | 10 | 6 | 22 | 14 | 4 | 20 | 12 |
| 8 | 0 | 16 | 8 | 6 | 22 | 14 | 3 | 19 | 11 | 2 | 18 | 10 | 4 | 20 | 12 | 7 | 23 | 15 | 5 | 21 | 13 | 1 | 17 | 9 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C23),
dans lequel le signal est émis par un nœud qui présente une tolérance au quartz de +/- 20 ppm ou mieux.

**6.** Procédé destiné à recevoir un signal avec un récepteur de données, dans lequel le procédé présente :

recevoir un signal avec un modèle de saut ;
dans lequel le modèle de saut est un modèle de saut temporel, un modèle de saut de fréquence ou une combinaison du modèle de saut temporel et du modèle de saut de fréquence ;
dans lequel le modèle de saut temporel est un modèle parmi les huit modèles de saut temporel désignés dans le tableau suivant avec à chaque fois 24 sauts :

| N° | N° de sous-paquets de données dans la trame centrale S$_c$ | | | | | | | | | | | | | | | | | | | | | | |
|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| 1 | 373 | 319 | 489 | 373 | 319 | 500 | 373 | 319 | 482 | 373 | 319 | 637 | 373 | 319 | 342 | 373 | 319 | 346 | 373 | 319 | 405 | 373 | 319 |
| 2 | 373 | 319 | 505 | 373 | 319 | 545 | 373 | 319 | 403 | 373 | 319 | 412 | 373 | 319 | 420 | 373 | 319 | 446 | 373 | 319 | 393 | 373 | 319 |
| 3 | 373 | 319 | 349 | 373 | 319 | 349 | 373 | 319 | 443 | 373 | 319 | 649 | 373 | 319 | 629 | 373 | 319 | 344 | 373 | 319 | 354 | 373 | 319 |
| 4 | 373 | 319 | 507 | 373 | 319 | 426 | 373 | 319 | 658 | 373 | 319 | 601 | 373 | 319 | 364 | 373 | 319 | 345 | 373 | 319 | 342 | 373 | 319 |
| 5 | 373 | 319 | 430 | 373 | 319 | 375 | 373 | 319 | 427 | 373 | 319 | 476 | 373 | 319 | 632 | 373 | 319 | 557 | 373 | 319 | 349 | 373 | 319 |
| 6 | 373 | 319 | 485 | 373 | 319 | 357 | 373 | 319 | 611 | 373 | 319 | 438 | 373 | 319 | 372 | 373 | 319 | 460 | 373 | 319 | 417 | 373 | 319 |
| 7 | 373 | 319 | 620 | 373 | 319 | 490 | 373 | 319 | 402 | 373 | 319 | 517 | 373 | 319 | 353 | 373 | 319 | 366 | 373 | 319 | 345 | 373 | 319 |
| 8 | 373 | 319 | 353 | 373 | 319 | 341 | 373 | 319 | 634 | 373 | 319 | 556 | 373 | 319 | 646 | 373 | 319 | 341 | 373 | 319 | 364 | 373 | 319 |

dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 24 sauts, dans lequel dans le tableau chaque cellule indique une distance temporelle d'un point de référence du saut respectif par rapport à un point de référence identique d'un saut immédiatement précédent en durées de symbole ou multiples de durées de symbole ;
dans lequel le modèle de saut de fréquence est un modèle parmi les huit modèles de saut de fréquence désignés dans le tableau suivant avec à chaque fois 24 sauts :

| Numéro de modèle | N° de sous-paquets de données dans la trame centrale S$_c$ | | | | | | | | | | | | | | | | | | | | | | | |
|---|---|---|---|---|---|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
| 1 | 4 | 24 | 14 | 8 | 28 | 18 | 9 | 29 | 19 | 3 | 23 | 13 | 7 | 27 | 17 | 0 | 20 | 10 | 6 | 26 | 16 | 5 | 25 | 15 |
| 2 | 2 | 22 | 12 | 0 | 20 | 10 | 7 | 27 | 17 | 8 | 28 | 18 | 1 | 21 | 11 | 4 | 24 | 14 | 9 | 29 | 19 | 6 | 26 | 16 |
| 3 | 0 | 20 | 10 | 6 | 26 | 16 | 4 | 24 | 14 | 3 | 23 | 13 | 2 | 22 | 12 | 5 | 25 | 15 | 9 | 29 | 19 | 1 | 21 | 11 |
| 4 | 7 | 27 | 17 | 4 | 24 | 14 | 2 | 22 | 12 | 8 | 28 | 18 | 1 | 21 | 11 | 9 | 29 | 19 | 6 | 26 | 16 | 0 | 20 | 10 |
| 5 | 3 | 23 | 13 | 2 | 22 | 12 | 8 | 28 | 18 | 5 | 25 | 15 | 0 | 20 | 10 | 7 | 27 | 17 | 6 | 26 | 16 | 1 | 21 | 11 |
| 6 | 1 | 21 | 11 | 3 | 23 | 13 | 8 | 28 | 18 | 9 | 29 | 19 | 2 | 22 | 12 | 5 | 25 | 15 | 0 | 20 | 10 | 7 | 27 | 17 |
| 7 | 6 | 26 | 16 | 7 | 27 | 17 | 9 | 29 | 19 | 4 | 24 | 14 | 0 | 20 | 10 | 3 | 23 | 13 | 8 | 28 | 18 | 5 | 25 | 15 |
| 8 | 1 | 21 | 11 | 7 | 27 | 17 | 3 | 23 | 13 | 9 | 29 | 19 | 4 | 24 | 14 | 6 | 26 | 16 | 8 | 28 | 18 | 0 | 20 | 10 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C29),
dans lequel le signal est reçu par un nœud qui présente une tolérance au quartz de +/- 10 ppm ou mieux.

**7.** Procédé destiné à émettre un signal par un émetteur de données vers un récepteur de données, dans lequel le procédé présente :

émettre un signal avec un modèle de saut ;
dans lequel le modèle de saut est un modèle de saut temporel, un modèle de saut de fréquence ou une combinaison du modèle de saut temporel et du modèle de saut de fréquence ;
dans lequel le modèle de saut temporel est un modèle parmi les huit modèles de saut temporel désignés dans le tableau suivant avec à chaque fois 18 sauts :

| Numéro de modèle | N° de sous-paquets de données dans la trame centrale $S_c$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 471 | 595 | 594 | 496 | 545 | 445 | 440 | 535 | 601 | 522 | 430 | 545 | 519 | 439 | 484 | 438 | 605 |
| 2 | 512 | 424 | 649 | 447 | 550 | 611 | 624 | 418 | 501 | 464 | 606 | 509 | 636 | 443 | 465 | 434 | 431 |
| 3 | 625 | 548 | 540 | 434 | 520 | 559 | 488 | 531 | 501 | 465 | 459 | 428 | 444 | 459 | 505 | 459 | 633 |
| 4 | 457 | 489 | 612 | 450 | 457 | 440 | 567 | 538 | 516 | 514 | 540 | 474 | 592 | 445 | 577 | 444 | 493 |
| 5 | 488 | 643 | 626 | 541 | 560 | 550 | 450 | 475 | 520 | 456 | 618 | 447 | 455 | 440 | 455 | 510 | 477 |
| 6 | 548 | 444 | 459 | 529 | 453 | 525 | 440 | 553 | 583 | 527 | 520 | 461 | 575 | 457 | 464 | 533 | 421 |
| 7 | 461 | 607 | 501 | 534 | 505 | 569 | 561 | 472 | 509 | 450 | 555 | 440 | 423 | 494 | 448 | 525 | 485 |
| 8 | 577 | 611 | 464 | 552 | 451 | 508 | 478 | 438 | 443 | 507 | 420 | 553 | 520 | 576 | 580 | 564 | 404 |

dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 18 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;

dans lequel le modèle de saut de fréquence est un modèle parmi les huit modèles de saut de fréquence désignés dans le tableau suivant avec à chaque fois 18 sauts :

| Numéro de modèle | N° de sous-paquets de données dans la trame centrale $S_c$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 19 | 18 | 12 | 21 | 15 | 14 | 22 | 2 | 5 | 10 | 17 | 6 | 8 | 4 | 7 | 20 | 13 | 0 |
| 2 | 10 | 4 | 1 | 7 | 23 | 6 | 3 | 8 | 17 | 2 | 18 | 9 | 22 | 14 | 11 | 16 | 5 | 21 |
| 3 | 0 | 16 | 11 | 20 | 9 | 13 | 23 | 21 | 2 | 19 | 1 | 15 | 3 | 7 | 12 | 4 | 22 | 6 |
| 4 | 14 | 9 | 0 | 15 | 7 | 5 | 8 | 18 | 1 | 12 | 19 | 23 | 17 | 16 | 10 | 2 | 13 | 11 |
| 5 | 6 | 12 | 19 | 10 | 4 | 22 | 13 | 17 | 11 | 5 | 23 | 3 | 1 | 8 | 14 | 0 | 9 | 20 |
| 6 | 16 | 20 | 3 | 5 | 21 | 10 | 17 | 1 | 12 | 18 | 15 | 11 | 0 | 9 | 2 | 14 | 6 | 8 |
| 7 | 15 | 0 | 8 | 18 | 9 | 23 | 11 | 20 | 14 | 3 | 16 | 22 | 19 | 13 | 7 | 21 | 12 | 4 |
| 8 | 4 | 7 | 16 | 22 | 13 | 19 | 2 | 3 | 6 | 15 | 10 | 20 | 23 | 5 | 21 | 17 | 18 | 1 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C23),

dans lequel le signal est émis par un nœud qui présente une tolérance au quartz de +/- 20 ppm ou mieux.

8. Procédé destiné à émettre un signal par un émetteur de données vers un récepteur de données, dans lequel le procédé présente :

émettre un signal avec un modèle de saut ;

dans lequel le modèle de saut est un modèle de saut temporel, un modèle de saut de fréquence ou une combinaison du modèle de saut temporel et du modèle de saut de fréquence ;

dans lequel le modèle de saut temporel est un modèle parmi les huit modèles de saut temporel désignés dans le tableau suivant avec à chaque fois 18 sauts :

| Numéro de modèle | N° de sous-paquets de données dans la trame centrale $S_c$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 442 | 455 | 586 | 520 | 436 | 485 | 506 | 446 | 590 | 459 | 637 | 466 | 597 | 445 | 471 | 419 | 547 |
| 2 | 447 | 594 | 459 | 512 | 577 | 490 | 510 | 500 | 576 | 581 | 512 | 441 | 483 | 507 | 467 | 447 | 612 |
| 3 | 525 | 446 | 428 | 450 | 434 | 445 | 457 | 563 | 470 | 537 | 529 | 527 | 537 | 513 | 428 | 525 | 620 |
| 4 | 626 | 467 | 450 | 544 | 564 | 505 | 450 | 645 | 457 | 423 | 433 | 439 | 559 | 547 | 449 | 641 | 508 |
| 5 | 590 | 592 | 423 | 544 | 444 | 553 | 475 | 431 | 452 | 551 | 454 | 459 | 450 | 512 | 499 | 532 | 447 |
| 6 | 476 | 420 | 516 | 422 | 558 | 483 | 474 | 462 | 474 | 458 | 529 | 596 | 562 | 419 | 417 | 600 | 634 |
| 7 | 500 | 462 | 601 | 484 | 556 | 591 | 423 | 429 | 540 | 523 | 530 | 606 | 589 | 459 | 415 | 419 | 606 |
| 8 | 422 | 473 | 458 | 535 | 420 | 423 | 502 | 425 | 602 | 472 | 555 | 650 | 509 | 579 | 595 | 510 | 568 |

dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 18 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;

dans lequel le modèle de saut de fréquence est un modèle parmi les huit modèles de saut de fréquence désignés dans le tableau suivant avec à chaque fois 18 sauts :

| Numéro de modèle | N° de sous-paquets de données dans la trame centrale $S_c$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 2 | 14 | 16 | 18 | 0 | 26 | 21 | 9 | 6 | 28 | 5 | 24 | 22 | 29 | 17 | 27 | 13 | 12 |
| 2 | 23 | 7 | 19 | 15 | 8 | 3 | 1 | 11 | 10 | 20 | 25 | 4 | 6 | 9 | 14 | 17 | 5 | 0 |
| 3 | 10 | 23 | 11 | 2 | 25 | 22 | 4 | 24 | 27 | 8 | 16 | 15 | 1 | 18 | 28 | 7 | 21 | 26 |
| 4 | 12 | 13 | 29 | 20 | 3 | 19 | 26 | 15 | 1 | 21 | 27 | 6 | 17 | 14 | 4 | 2 | 25 | 7 |
| 5 | 19 | 22 | 12 | 13 | 11 | 28 | 23 | 18 | 16 | 0 | 10 | 24 | 3 | 5 | 29 | 20 | 8 | 9 |
| 6 | 16 | 12 | 18 | 25 | 19 | 23 | 20 | 4 | 5 | 6 | 9 | 27 | 21 | 10 | 15 | 28 | 24 | 13 |
| 7 | 14 | 29 | 26 | 11 | 22 | 2 | 0 | 1 | 7 | 3 | 8 | 9 | 23 | 4 | 27 | 16 | 15 | 17 |
| 8 | 0 | 24 | 28 | 3 | 29 | 5 | 14 | 8 | 18 | 22 | 20 | 17 | 10 | 6 | 26 | 11 | 21 | 12 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C29),

dans lequel le signal est émis par un nœud qui présente une tolérance au quartz de +/- 10 ppm ou mieux.

9. Procédé selon l'une des revendications précédentes 7 à 8, dans lequel un paquet de données divisé en une pluralité de sous-paquets de données est émis conformément au modèle de saut de telle sorte dans chaque saut du modèle de saut un sous-paquet de données de la pluralité de sous-paquets de données est émis.

10. Procédé selon l'une des revendications précédentes 7 à 9, dans lequel le modèle de saut est une combinaison du modèle de saut temporel et du modèle de saut de fréquence, dans lequel le modèle de saut temporel et le modèle de saut de fréquence présentent le même numéro de ligne dans les tableaux respectifs.

11. Procédé destiné à recevoir un signal avec un récepteur de données, dans lequel le procédé présente :

recevoir un signal avec un modèle de saut ;

dans lequel le modèle de saut est un modèle de saut temporel, un modèle de saut de fréquence ou une combinaison du modèle de saut temporel et du modèle de saut de fréquence ;

dans lequel le modèle de saut temporel est un modèle parmi les huit modèles de saut temporel désignés dans le tableau suivant avec à chaque fois 18 sauts :

| Numéro de modèle | N° de sous-paquets de données dans la trame centrale $S_c$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 471 | 595 | 594 | 496 | 545 | 445 | 440 | 535 | 601 | 522 | 430 | 545 | 519 | 439 | 484 | 438 | 605 |
| 2 | 512 | 424 | 649 | 447 | 550 | 611 | 624 | 418 | 501 | 464 | 606 | 509 | 636 | 443 | 465 | 434 | 431 |
| 3 | 625 | 548 | 540 | 434 | 520 | 559 | 488 | 531 | 501 | 465 | 459 | 428 | 444 | 459 | 505 | 459 | 633 |
| 4 | 457 | 489 | 612 | 450 | 457 | 440 | 567 | 538 | 516 | 514 | 540 | 474 | 592 | 445 | 577 | 444 | 493 |
| 5 | 488 | 643 | 626 | 541 | 560 | 550 | 450 | 475 | 520 | 456 | 618 | 447 | 455 | 440 | 455 | 510 | 477 |
| 6 | 548 | 444 | 459 | 529 | 453 | 525 | 440 | 553 | 583 | 527 | 520 | 461 | 575 | 457 | 464 | 533 | 421 |
| 7 | 461 | 607 | 501 | 534 | 505 | 569 | 561 | 472 | 509 | 450 | 555 | 440 | 423 | 494 | 448 | 525 | 485 |
| 8 | 577 | 611 | 464 | 552 | 451 | 508 | 478 | 438 | 443 | 507 | 420 | 553 | 520 | 576 | 580 | 564 | 404 |

dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 18 sauts, dans lequel dans le tableau chaque cellule indique une distance temporelle d'un point de référence du saut respectif par rapport à un point de référence identique d'un saut immédiatement suivant en durées de symbole ou multiples de durées de symbole ;

dans lequel le modèle de saut de fréquence est un modèle parmi les huit modèles de saut de fréquence désignés dans le tableau suivant avec à chaque fois 18 sauts :

| Numéro de modèle | N° de sous-paquets de données dans la trame centrale $S_c$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 19 | 18 | 12 | 21 | 15 | 14 | 22 | 2 | 5 | 10 | 17 | 6 | 8 | 4 | 7 | 20 | 13 | 0 |
| 2 | 10 | 4 | 1 | 7 | 23 | 6 | 3 | 8 | 17 | 2 | 18 | 9 | 22 | 14 | 11 | 16 | 5 | 21 |
| 3 | 0 | 16 | 11 | 20 | 9 | 13 | 23 | 21 | 2 | 19 | 1 | 15 | 3 | 7 | 12 | 4 | 22 | 6 |
| 4 | 14 | 9 | 0 | 15 | 7 | 5 | 8 | 18 | 1 | 12 | 19 | 23 | 17 | 16 | 10 | 2 | 13 | 11 |
| 5 | 6 | 12 | 19 | 10 | 4 | 22 | 13 | 17 | 11 | 5 | 23 | 3 | 1 | 8 | 14 | 0 | 9 | 20 |
| 6 | 16 | 20 | 3 | 5 | 21 | 10 | 17 | 1 | 12 | 18 | 15 | 11 | 0 | 9 | 2 | 14 | 6 | 8 |
| 7 | 15 | 0 | 8 | 18 | 9 | 23 | 11 | 20 | 14 | 3 | 16 | 22 | 19 | 13 | 7 | 21 | 12 | 4 |
| 8 | 4 | 7 | 16 | 22 | 13 | 19 | 2 | 3 | 6 | 15 | 10 | 20 | 23 | 5 | 21 | 17 | 18 | 1 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C23),

dans lequel le signal est émis par un nœud qui présente une tolérance au quartz de +/- 20 ppm ou mieux.

12. Procédé destiné à recevoir un signal avec un récepteur de données, dans lequel le procédé présente :

recevoir un signal avec un modèle de saut ;

dans lequel le modèle de saut est un modèle de saut temporel, un modèle de saut de fréquence ou une combinaison du modèle de saut temporel et du modèle de saut de fréquence ;

dans lequel le modèle de saut temporel est un modèle parmi les huit modèles de saut temporel désignés dans le tableau suivant avec à chaque fois 18 sauts :

| Numéro de modèle | N° de sous-paquets de données dans la trame centrale $S_c$ | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| 1 | 442 | 455 | 586 | 520 | 436 | 485 | 506 | 446 | 590 | 459 | 637 | 466 | 597 | 445 | 471 | 419 | 547 |
| 2 | 447 | 594 | 459 | 512 | 577 | 490 | 510 | 500 | 576 | 581 | 512 | 441 | 483 | 507 | 467 | 447 | 612 |
| 3 | 525 | 446 | 428 | 450 | 434 | 445 | 457 | 563 | 470 | 537 | 529 | 527 | 537 | 513 | 428 | 525 | 620 |
| 4 | 626 | 467 | 450 | 544 | 564 | 505 | 450 | 645 | 457 | 423 | 433 | 439 | 559 | 547 | 449 | 641 | 508 |
| 5 | 590 | 592 | 423 | 544 | 444 | 553 | 475 | 431 | 452 | 551 | 454 | 459 | 450 | 512 | 499 | 532 | 447 |
| 6 | 476 | 420 | 516 | 422 | 558 | 483 | 474 | 462 | 474 | 458 | 529 | 596 | 562 | 419 | 417 | 600 | 634 |
| 7 | 500 | 462 | 601 | 484 | 556 | 591 | 423 | 429 | 540 | 523 | 530 | 606 | 589 | 459 | 415 | 419 | 606 |
| 8 | 422 | 473 | 458 | 535 | 420 | 423 | 502 | 425 | 602 | 472 | 555 | 650 | 509 | 579 | 595 | 510 | 568 |

dans lequel dans le tableau chaque ligne est un modèle de saut temporel, dans lequel dans le tableau chaque colonne est un saut du modèle de saut temporel respectif commençant à partir d'un deuxième saut de telle sorte que chaque modèle de saut temporel présente 18 sauts, dans lequel dans le tableau chaque cellule indique une distance temporelle d'un point de référence du saut respectif par rapport à un point de référence identique d'un saut immédiatement précédent en durées de symbole ou multiples de durées de symbole ;

dans lequel le modèle de saut de fréquence est un modèle parmi les huit modèles de saut de fréquence désignés dans le tableau suivant avec à chaque fois 18 sauts :

| Numéro de modèle | N° de sous-paquets de données dans la trame centrale $S_c$ | | | | | | | | | | | | | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 | 18 |
| 1 | 2 | 14 | 16 | 18 | 0 | 26 | 21 | 9 | 6 | 28 | 5 | 24 | 22 | 29 | 17 | 27 | 13 | 12 |
| 2 | 23 | 7 | 19 | 15 | 8 | 3 | 1 | 11 | 10 | 20 | 25 | 4 | 6 | 9 | 14 | 17 | 5 | 0 |
| 3 | 10 | 23 | 11 | 2 | 25 | 22 | 4 | 24 | 27 | 8 | 16 | 15 | 1 | 18 | 28 | 7 | 21 | 26 |
| 4 | 12 | 13 | 29 | 20 | 3 | 19 | 26 | 15 | 1 | 21 | 27 | 6 | 17 | 14 | 4 | 2 | 25 | 7 |
| 5 | 19 | 22 | 12 | 13 | 11 | 28 | 23 | 18 | 16 | 0 | 10 | 24 | 3 | 5 | 29 | 20 | 8 | 9 |
| 6 | 16 | 12 | 18 | 25 | 19 | 23 | 20 | 4 | 5 | 6 | 9 | 27 | 21 | 10 | 15 | 28 | 24 | 13 |
| 7 | 14 | 29 | 26 | 11 | 22 | 2 | 0 | 1 | 7 | 3 | 8 | 9 | 23 | 4 | 27 | 16 | 15 | 17 |
| 8 | 0 | 24 | 28 | 3 | 29 | 5 | 14 | 8 | 18 | 22 | 20 | 17 | 10 | 6 | 26 | 11 | 21 | 12 |

dans lequel dans le tableau chaque ligne est un modèle de saut de fréquence, dans lequel dans le tableau chaque colonne est un saut du modèle de saut de fréquence respectif, dans lequel dans le tableau chaque cellule indique une fréquence d'émission du saut respectif du modèle de saut de fréquence respectif dans les porteuses (UCG_C0-UCG_C29),

dans lequel le signal est reçu par un nœud qui présente une tolérance au quartz de +/- 20 ppm ou mieux.

Fig. 1

EP 3 610 575 B1

Fig. 2

Fig. 3

EP 3 610 575 B1

Fig. 4

Fig. 5

160

Senden des Signals, wobei das Signal ein individuelles Sprungmuster aufweist, wobei das individuelle Sprungmuster von einem senderseitigen Betriebsparameter abhängig ist — 162

Fig. 6

170

Empfangen des Signals, wobei das Signal ein individuelles Sprungmuster aufweist, wobei das individuelle Sprungmuster von einem senderseitigen Betriebsparameter abhängig ist — 172

Fig. 7

180

Auswählen einer Teilmenge von Sprüngen einer Mehrzahl von Sprüngen des Sprungmusters, wobei die Teilmenge von Sprüngen zufällig oder in Abhängigkeit von einem Betriebsparameter aus der Mehrzahl von Sprüngen ausgewählt werden — 182

Senden der Daten in den ausgewählten Sprüngen des Sprungmusters — 184

## Fig. 8

190

Empfangen der Daten, wobei die Daten nur in ausgewählten Sprüngen einer Mehrzahl von Sprüngen des Sprungmusters gesendet werden, wobei die Sprünge zufällig oder in Abhängigkeit eines Betriebsparameters ausgewählt sind — 192

## Fig. 9

<u>200</u>

Zufälliges Erzeugen einer Mehrzahl von Sprungmustern, wobei die Sprungmuster zumindest zwei Sprünge aufweisen, die in der Frequenz und Zeit verteilt sind ⟩~202

Auswählen der Sprungmuster aus der Mehrzahl von Sprungmustern, dessen Autokorrelationsfunktionen vorgegebene Autokorrelationseigenschaften aufweisen ⟩~204

Sprungmustern mit vorgegebenen Autokorrelationseigenschaften

Berechnen von Kreuzkorrelationsfunktionen zwischen den Sprungmustern mit vorgegebenen Autokorrelationseigenschaften ⟩~206 (optio-nal)

Auswählen der Sprungmuster aus den Sprungmustern mit vorgegebenen Autokorrelationseigenschaften, dessen Kreuzkorrelationsfunktionen vorgegebene Kreuzkorrelationseigenschaften aufweisen ⟩~208 (optio-nal)

Sprungmuster mit vorgegebenen Autokorrelationseigenschaften und vorgegebenen Kreuzkorrelations-eigenschaften

Fig. 10

Fig. 11

Fig. 12

Fig. 13a

Fig. 13b

EP 3 610 575 B1

Fig. 14a

Fig. 14b

Fig. 15

EP 3 610 575 B1

ja

- 2D-KKF-Berechnung $\Theta_{x,y}(f,t)$
- 2D-KKF-Werte in Vektor $v_{Sort}$ sortieren
- Berechnung von $SUM_{KKF}=sum(v_{Sort}(end-v_{KKF}+1:end))$
- Speichern von $SUM_{KKF}$ in Matrix $O_{vKKF}$

278

$n=1, GS_{Schwelle}=10^6$ 280

- $F=randperm(1:P_{Optimal})$
- $Pattern_{Auswahl} = F(1:P_{Auswahl})$
- Bestimme Gesamtsumme GS aus den $SUM_{KKF}$ von Matrix $O_{vKKF}$

282

$n=n+1$

$n=n+1$

Store $P_{Auswahl}$ Pattern
$GS_{Schwelle}=GS$

ja

$GS \leq GS_{Schwelle}$

nein

286

284

nein

$n \geq Abbruch$

ja

288

ENDE

Fig. 15
continued

EP 3 610 575 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011082098 B4
- WO 2015128385 A1
- US 2005176371 A1
- US 2009109953 A1
- US 6967974 B1
- DE 10211235 A1

**In der Beschreibung aufgeführte Nicht-Patentliteratur**

- **G. KILIAN** ; **H. PETKOV** ; **R. PSIUK** ; **H. LIESKE** ; **F. BEER** ; **J. ROBERT** ; **A. HEUBERGER**. Improved coverage for low-power telemetry systems using telegram splitting. *Proceedings of 2013 European Conference on Smart Objects, Systems and Technologies (SmartSysTech)*, 2013

- **G. KILIAN** ; **M. BREILING** ; **H. H. PETKOV** ; **H. LIESKE** ; **F. BEER** ; **J. ROBERT** ; **A. HEUBERGER**. Increasing Transmission Reliability for Telemetry Systems Using Telegram Splitting. *IEEE Transactions on Communications*, March 2015, vol. 63 (3), 949-961